# EUROPEAN PATENT APPLICATION

(11) **EP 4 160 060 A1**
(43) Date of publication of application: **05.04.2023**
(21) Application number: 21813385.8
(22) Date of filing: 25.05.2021
(51) Int. Cl.: F16K 11/074

(54) **FAUCET WATER SOFTENER**

(30) Priority: 26.05.2020 CN 202020898620 U; 30.11.2020 CN 202022823128 U; 04.12.2020 CN 202022909166 U
(71) Applicant: YUYAO YADONG PLASTIC CO., LTD., Yuyao Ningbo Zhejiang 315456 (CN)
(72) Inventor: HU, Jizong, Ningbo, Zhejiang 315456 (CN); HU, Xiaozong, Ningbo, Zhejiang 315456 (CN); CHU, Zhenlin, Ningbo, Zhejiang 315456 (CN)
(74) Representative: Casalonga
(86) International application number: PCT/CN2021/095875
(87) International publication number: WO 2021/238935

(57) **Abstract**

Provided by the present invention is a faucet water softener comprising a water treatment device and a control valve, wherein the water treatment device defines a first communicating opening and a second communicating opening, the control valve comprises a valve body and a valve core, wherein the valve body defines a valve cavity, a first opening, a second opening, a third opening, a softened water inlet, a softened water outlet, a raw water outlet, a raw water inlet and a draining opening, wherein the valve core is arranged inside the valve cavity, wherein the first opening of the valve body is adapted for being communicated with the first communicating opening of the water treatment device, the softened water inlet of the valve body is adapted for being communicated with the second communicating opening of the water treatment device, and the raw water inlet of the valve body is adapted for being communicated with a raw water source.

## Description

### CROSS REFERENCE OF RELATED APPLICATION

This application claims the benefit under 35 U.S.C. §119 from International Application No.PCT/CN2021/095875, which claims priorities to CN202020898620.2, filed May. 26, 2020; CN202022823128.1, filed Nov. 30, 2020; CN202022909166.9, filed Dec. 4, 2020, the entire contents of which are hereby incorporated by reference in their entireties for teachings of additional or alternative details, and/or features.

### BACKGROUND OF THE PRESENT INVENTION

### FIELD OF INVENTION

The present invention relates to a water softening device, in particular to a faucet water softener, wherein the faucet water softener of the present invention is arranged to be suitable for softening raw water (or tap water). Further, the faucet water softener of the present invention is arranged to be suitable for being connected with a faucet to soften the raw water. The present invention further relates to a control valve for a faucet water softener.

### DESCRIPTION OF RELATED ARTS

With the increasing improvement of people's living standards and increasing attention to health, people's requirements for the quality of domestic water are getting higher and higher. However, in many countries, especially in developing countries, many tap water sources are groundwater or surface water with higher hardness, which is provided to users after purification and disinfection. Faucet water with high hardness can easily damage the protective layer of the skin, resulting in dry skin and even skin irritation. In addition, tap water with higher hardness may also affect the cleaning effect of skin cleansing products and the cosmetic effect of cosmetics. Therefore, when using tap water with higher hardness to wash the face, the user experience is poor. Water with lower hardness, such as softened water obtained by softening tap water, is gentler to the user's skin because of its low irritation, and is more suitable for people to use when cleaning the skin and making up and beautifying, for example, when cleansing the face.

However, softening devices, especially small ones for cosmetic and/or cosmetic purposes, will lose their softening effect on raw water or water to be treated after being used for a period of time due to their limited softening resin content, and need to be regenerated. After that, you can continue to use it. Some existing small softening devices do not consider regeneration at all, and users will have to discard them after losing the softening function after using them for a period of time. Another part of the existing small softening device realizes the regeneration of the softening device by taking out the softening resin in it and soaking it in the salt solution. This method of taking out the softening resin in the softening device and soaking it in salt solution to realize the regeneration of the softening device requires disassembling the softening device, which is very difficult. In addition, frequent disassembly of the softening device will also affect the sealing effect and service life of the softening device.

The utility model patent application No. CN201620190999.5 discloses a filter, a filter assembly and a washing water treatment device with a filter assembly, wherein the softening filter of the washing water treatment device with the filter assembly disclosed in the utility model patent can soften water. However, the utility model patent does not provide any mechanism for adding regeneration solution, such as saline solution, to its softening filter. In addition, the softening material of the washing water treatment device with the filter assembly disclosed in the utility model patent is not placed separately, resulting in a short flow path of the raw water or the water to be treated and a bad treatment effect in the washing water treatment device disclosed in the utility model patent.

### SUMMARY OF THE PRESENT INVENTION

A main advantage of the present invention is to provide a water softening device, in particular to a faucet water softener, wherein the faucet water softener of the present invention is arranged to be suitable for softening raw water (or tap water). Further, the faucet water softener of the present invention is a miniaturized water softener arranged to be suitable for being connected with a faucet to soften the raw water

Another advantage of the present invention is to provide a faucet water softener, wherein the faucet water softener of the present invention is provided to automatically add a regeneration solution, such as a salt solution (salt solution, sodium chloride solution) to its interior under the action of water flow, so that the faucet water softener of the present invention, more specifically, its softening material is regenerated, so as to improve the service life of the faucet water softener.

Another advantage of the present invention is to provide a faucet water softener, wherein the faucet water softener of the present invention is provided to easily add regenerative solution and regenerate the faucet water softener.

Another advantage of the present invention is to provide a faucet water softener, wherein the faucet water softener of the present invention is provided to enable the regeneration solution to automatically flow into its interior under the driving action of water flow, so that its softened material is regenerated.

Another advantage of the present invention is to provide a faucet water softener, wherein the faucet water softener of the present invention can directly provide raw water from the faucet to the user.

Additional objects and features of the present invention will become apparent from the following detailed description, and may be realized by means of the instrumentalities and combinations particular point out in the appended claims.

According to one aspect of the present invention, the foregoing and other objects and advantages are attained by a faucet water softener of the present invention, which comprising:
a water treatment device defining a first communicating opening and a second communicating opening; and
a control valve comprising a valve body and a valve core, wherein the valve body defines a valve cavity, a first opening, a second opening, a third opening, a softened water inlet, a softened water outlet, a raw water inlet, a raw water outlet and a draining opening, wherein the valve core is provided inside the valve cavity, wherein the first opening of the valve body is adapted to be communicated with the first communicating opening of the water treatment device, the softened water inlet of the valve body is adapted to be communicated with the second communicating opening of the water treatment device, the raw water inlet of the valve body is adapted to be communicated with a raw water source.

According to another aspect of the present invention, the present invention further provides a faucet water softener, which comprises:
a water treatment device defining a first communicating opening; and
a control valve adapted to be communicated with a faucet and comprising a valve body and a valve core, wherein the valve body defines a valve cavity, a first opening, a second opening, a third opening, a raw water inlet and a raw water outlet, wherein the valve core is provided inside the valve cavity, wherein the first opening of the valve body is adapted to be communicated with the first communicating opening of the water treatment device, the raw water inlet of the valve body is adapted to be communicated with a raw water source.

Still further objects and advantages of the present invention will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

FIG.1 is a front view of the faucet water softener according to an embodiment of the present invention.
FIG.2 is a front view of the water treatment device of the faucet water softener according to the above embodiment of the present invention.
FIG.3A is a sectional view of the water treatment device of the faucet water softener according to the above embodiment of the present invention, which shows the direction of water flow from the first communicating opening to the second communicating opening in a softening working state (or the direction of water flow from the first communicating opening to the second communicating opening in a regenerating working state).
FIG.3B is another sectional view of the water treatment device of the faucet water softener according to the above embodiment of the present invention, which shows the direction of water flow from the second communicating opening to the first communicating opening in a softening working state (or the direction of water flow from the second communicating opening to the first communicating opening in a regenerating working state).
FIG.4 is a sectional view of the outer casing and the inner casing of the water treatment device of the faucet water softener according to the above embodiment of the present invention, wherein the water treatment device shown in FIG.4 has no softening material added to the first softening cavity and the second receiving chamber thereof.
FIG.5 is another sectional view of the outer casing and the inner casing of the water treatment device of the faucet water softener according to the above embodiment of the present invention, wherein the water treatment device shown in FIG.5 has no softening material added to the first softening cavity and the second receiving chamber thereof.
FIG.6A is a perspective view of the inner casing of the water treatment device of the faucet water softener according to the above embodiment of the present invention.
FIG.6B is a sectional view of the inner casing of the water treatment device of the faucet water softener according to the above embodiment of the present invention.
FIG.7 is a perspective view of a base of the water treatment device of the faucet water softener according to the above embodiment of the present invention.
FIG.8A is a sectional view of the base of the water treatment device of the faucet water softener according to the above embodiment of the present invention.
FIG.8B is a sectional view of the base of the water treatment device of the faucet water softener according to the above embodiment of the present invention.
FIG.9 is another perspective view of the outer casing and the inner casing of the water treatment device of the faucet water softener according to the above embodiment of the present invention.
FIG.10 is a sectional view of a connector of the faucet water softener according to the above embodiment of the present invention.
FIG.11A is a sectional view of a salt solution tank of the faucet water softener according to the above embodiment of the present invention.
FIG.11B is a perspective view of a filtering element of the faucet water softener according to the above embodiment of the present invention.
FIG.12A is an (enlarged) exploded view of an injector of the faucet water softener according to the above embodiment of the present invention.
FIG.12B is an (enlarged) perspective view of the injector of the faucet water softener according to the above embodiment of the present invention.
FIG.12C is an (enlarged) sectional view of the injector of the faucet water softener according to the above embodiment of the present invention.
FIG.12D is an (enlarged) perspective view of a rigid plate and a salt solution pipe of the injector of the faucet water softener according to the above embodiment of the present invention.
FIG.12E is an (enlarged) sectional view of the rigid plate and the salt solution pipe of the injector of the faucet water softener according to the above embodiment of the present invention, wherein the arrows in FIG.12E show the water flow direction inside the injector in the regenerating working state.
FIG.12F is an (enlarged) perspective view of a flexible plate of the injector of the faucet water softener according to the above embodiment of the present invention.
FIG.12G is an (enlarged) sectional view of the rigid plate of the injector of the faucet water softener according to the above embodiment of the present invention.
FIG.12H is an (enlarged) sectional view of a first forming portion and a second forming portion of the injector of the faucet water softener according to the above embodiment of the present invention.
FIG.13A is a perspective view of a control valve of the faucet water softener according to the above embodiment of the present invention.
FIG.13B is another perspective view of the control valve of the faucet water softener according to the above embodiment of the present invention.
FIG.13C is an exploded view of the control valve of the faucet water softener according to the above embodiment of the present invention.
FIG.14A is a perspective view of a plane valve of the faucet water softener according to the above embodiment of the present invention, which shows a first channel, a second channel, a third channel, a seventh channel, an eighth channel, a raw water outlet channel and a draining channel of the plane valve.
FIG.14B is another perspective view of the plane valve of the faucet water softener according to the above embodiment of the present invention, which shows the first channel, the second channel, the third channel, the seventh channel, the eighth channel, the raw water outlet channel and the draining channel and a second seal of the plane valve.
FIG.14C is another perspective view of the plane valve of the faucet water softener according to the above embodiment of the present invention, which shows a first opening, a softened water inlet of the valve body.
FIG.14D is another perspective view of the plane valve of the faucet water softener according to the above embodiment of the present invention, which shows a raw water inlet of the valve body.
FIG.14E is another perspective view of the plane valve of the faucet water softener according to the above embodiment of the present invention, which shows a raw water outlet, the draining opening and the softened water outlet of the plane valve.
FIG.14F is a top view of the valve body of the plane valve of the faucet water softener according to the above embodiment of the present invention.
FIG.14G is a bottom view of the valve body of the plane valve of the faucet water softener according to the above embodiment of the present invention.
FIG.14H is a front view of the valve body of the plane valve of the faucet water softener according to the above embodiment of the present invention.
FIG.15A is a sectional view of the valve body of the plane valve of the faucet water softener according to the above embodiment of the present invention, which shows the first channel of the plane valve is communicated with the first opening of the plane valve; the third channel of the plane valve is communicated with the third opening.
FIG.15B is another sectional view of the valve body of the plane valve of the faucet water softener according to the above embodiment of the present invention, which shows the second channel of the plane valve is communicated with the second opening.
FIG.15C is another sectional view of the valve body of the plane valve of the faucet water softener according to the above embodiment of the present invention, which shows the seventh channel of the plane valve is communicated with the softened water inlet; the eighth channel of the plane valve is communicated with the softened water outlet.
FIG.15D is another sectional view of the valve body of the plane valve of the faucet water softener according to the above embodiment of the present invention, which shows a raw water outlet channel of the plane valve is communicated with the raw water outlet.
FIG.15E is another sectional view of the valve body of the plane valve of the faucet water softener according to the above embodiment of the present invention, which shows the draining channel of the plane valve is communicated with the draining opening of the plane valve; the raw water inlet is communicated with the valve cavity.
FIG.16A is a sectional view of the plane valve of the faucet water softener according to the above embodiment of the present invention, wherein a fixing device is provided inside the valve cavity of the plane valve.
FIG.16B is a perspective view of the valve body of the plane valve of the faucet water softener according to the above embodiment of the present invention, wherein a flow deflector of the faucet water purifier of the present invention is disposed at the valve body of the plane valve.
FIG.16C is a perspective view of the flow deflector of the faucet water softener according to the above embodiment of the present invention.
FIG.16D is another perspective view of the flow deflector of the faucet water softener according to the above embodiment of the present invention.
FIG.17A is a perspective view of the fixing device of the faucet water softener according to the above embodiment of the present invention.
FIG.17B is a sectional view of the fixing device of the faucet water softener according to the above embodiment of the present invention.
FIG.17C is a perspective view of a fixing portion of a fixed disk of the plane valve of the faucet water softener according to the above embodiment of the present invention, which shows the first sealing grooves of the fixing portion.
FIG.17D is another perspective view of the fixing portion of the fixed disk of the plane valve of the faucet water softener according to the above embodiment of the present invention, which shows the second sealing grooves of the fixing portion.
FIG.17E shows the fixing portion and an upper end portion of the fixed disk of the plane valve of the faucet water softener according to the above embodiment of the present invention, wherein the upper end portion of the fixed disk is disposed at the fixing portion.
FIG.17F is a perspective view of a first seal of a sealing assembly of the faucet water softener according to the above embodiment of the present invention.
FIG.17G is a perspective view of the second seal of the sealing assembly of the faucet water softener according to the above embodiment of the present invention.
FIG.17H is a perspective view of a fixing holder of the fixing device of the faucet water softener according to the above embodiment of the present invention, which shows the restricting grooves of the fixing holder.
FIG. 18A is a perspective view of the fixed disk of the plane valve of the faucet water softener according to the above embodiment of the present invention.
FIG.18B is a top view of the fixed disk of the plane valve of the faucet water softener according to the above embodiment of the present invention.
FIG. 18C is a bottom view of the fixed disk of the plane valve of the faucet water softener according to the above embodiment of the present invention.
FIG.18D is a perspective view of a rotatable disk of the plane valve of the faucet water softener according to the above embodiment of the present invention.
FIG.18E is a top view of the rotatable disk of the plane valve of the faucet water softener according to the above embodiment of the present invention.
FIG.18F is a bottom view of the rotatable disk of the plane valve of the faucet water softener according to the above embodiment of the present invention.
FIG.19A is a structure diagram of the plane valve of the faucet water softener according to the above embodiment of the present invention, wherein the plane valve shown in FIG.19A is under a water softening working position, and the arrows in FIG.19A point to the directions of water flow.
FIG.19B is a structure diagram of the plane valve of the faucet water softener according to the above embodiment of the present invention, wherein the plane valve shown in FIG. 19B is under a regenerating working position, and the arrows in FIG.19B point to the directions of water flow.
FIG.19C is a structure diagram of the plane valve of the faucet water softener according to the above embodiment of the present invention, wherein the plane valve shown in FIG.19C is under a raw water supplying working position, and the arrows in FIG.19C point to the directions of water flow.
FIG.20A is a structure diagram of the fixed disk of the plane valve of the faucet water softener according to the above embodiment of the present invention.
FIG.20B is a structure diagram of the rotatable disk of the plane valve of the faucet water softener according to the above embodiment of the present invention, wherein the dotted line shown in Fig.20B shows a communicating blind hole of the rotatable disk.
FIG.20C is a diagram of the equal division of the fixed disk of the plane valve of the faucet water softener according to the above embodiment of the present invention, which shows channels are provided in the specific equal division positions of the fixed disk respectively.
FIG.20D is a diagram of the equal division of the rotatable disk of the plane valve of the faucet water softener according to the above embodiment of the present invention, which shows channels are provided in the specific equal division positions of the rotatable disk respectively.
FIG.21A is a diagram of the communication between the channels of the rotatable disk and the channels of the fixed disk of the plane valve when the plane valve of the faucet water softener according to the above embodiment of the present invention is under the water softening working position, wherein the shaded area shown in Fig.21A shows the passages defined by the communication between the channels of the rotatable disk and the channels of the fixed disk of the plane valve.
FIG.21B is a diagram of the communication between the channels of the rotatable disk and the channels of the fixed disk of the plane valve when the plane valve of the faucet water softener according to the above embodiment of the present invention is under the regenerating working position, wherein the shaded area shown in Fig.21B shows the passages defined by the communication between the channels of the rotatable disk and the channels of the fixed disk of the plane valve.
FIG.21C is a diagram of the communication between the channels of the rotatable disk and the channels of the fixed disk of the plane valve when the plane valve of the faucet water softener according to the above embodiment of the present invention is under the raw water supplying working position, wherein the shaded area shown in Fig.21C shows the passages defined by the communication between the channels of the rotatable disk and the channels of the fixed disk of the plane valve.
FIG.22A illustrates an alternative embodiment of the plane valve of the faucet water softener according to the above embodiment of the present invention.
FIG.22B is a perspective view of the above alternative embodiment of the plane valve of the faucet water softener according to the above embodiment of the present invention.
FIG.22C is an exploded view of the above alternative embodiment of the plane valve of the faucet water softener according to the above embodiment of the present invention.
FIG.23A is a perspective view of the above alternative embodiment of the plane valve of the faucet water softener according to the above embodiment of the present invention, which shows a first channel, a second channel, a third channel, a seventh channel, an eighth channel, a raw water outlet channel and a raw water inlet channel of the plane valve.
FIG.23B is another perspective view of the above alternative embodiment of the plane valve of the faucet water softener according to the above embodiment of the present invention, which shows the first channel, the second channel, the third channel, the seventh channel, the eighth channel, the raw water outlet channel and the raw water inlet channel and a second seal of the plane valve.
FIG.23C is another perspective view of the above alternative embodiment of the plane valve of the faucet water softener according to the above embodiment of the present invention, which shows a first opening and a softened water inlet of the valve body.
FIG.23D is another perspective view of the above alternative embodiment of the plane valve of the faucet water softener according to the above embodiment of the present invention, which shows a raw water inlet of the valve body.
FIG.23E is another perspective view of the above alternative embodiment of the plane valve of the faucet water softener according to the above embodiment of the present invention, which shows a raw water outlet, the draining opening and the softened water outlet of the plane valve.
FIG.23F is a top view of the valve body of the above alternative embodiment of the plane valve of the faucet water softener according to the above embodiment of the present invention.
FIG.23G is a bottom view of the valve body of the above alternative embodiment of the plane valve of the faucet water softener according to the above embodiment of the present invention.
FIG.23H is a front view of the valve body of the above alternative embodiment of the plane valve of the faucet water softener according to the above embodiment of the present invention.
FIG.24A is a sectional view of the above alternative embodiment of the valve body of the plane valve of the faucet water softener according to the above embodiment of the present invention, which shows the first channel of the plane valve is communicated with the first opening of the plane valve, the third channel of the plane valve is communicated with the third opening.
FIG.24B is another sectional view of the above alternative embodiment of the valve body of the plane valve of the faucet water softener according to the above embodiment of the present invention, which shows the second channel of the plane valve is communicated with the second opening.
FIG.24C is another sectional view of the above alternative embodiment of the valve body of the plane valve of the faucet water softener according to the above embodiment of the present invention, which shows the seventh channel of the plane valve is communicated with the softened water inlet, the eighth channel of the plane valve is communicated with the softened water outlet.
FIG.24D is another sectional view of the above alternative embodiment of the plane valve of the faucet water softener according to the above embodiment of the present invention, which shows a raw water outlet channel of the plane valve is communicated with the raw water outlet.
FIG.24E is another sectional view of the above alternative embodiment of the plane valve of the faucet water softener according to the above embodiment of the present invention, which shows a raw water inlet channel of the plane valve is communicated with the raw water inlet.
FIG.24F is another sectional view of the above alternative embodiment of the valve body of the plane valve of the faucet water softener according to the above embodiment of the present invention, which shows the draining opening of the plane valve is communicated with the valve cavity.
FIG.25A is a sectional view of the above alternative embodiment of the plane valve of the faucet water softener according to the above embodiment of the present invention, wherein a fixing device is provided inside the valve cavity of the plane valve.
FIG.25B is a perspective view of the above alternative embodiment of the valve body of the plane valve of the faucet water softener according to the above embodiment of the present invention, wherein a flow deflector of the faucet water purifier of the present invention is disposed at the valve body of the plane valve.
FIG.25C is a perspective view of the flow deflector of the faucet water softener according to the above embodiment of the present invention.
FIG.25D is another perspective view of the flow deflector of the faucet water softener according to the above embodiment of the present invention.
FIG.26A is a perspective view of the fixing device of the alternative embodiment of the plane valve of the faucet water softener according to the above embodiment of the present invention.
FIG.26B is a sectional view of the fixing device of the alternative embodiment of the plane valve of the faucet water softener according to the above embodiment of the present invention.
FIG.26C is a perspective view of a fixing portion of a fixed disk of the alternative embodiment of the plane valve of the faucet water softener according to the above embodiment of the present invention, which shows the first sealing grooves of the fixing portion.
FIG.26D is another perspective view of the fixing portion of the fixed disk of the alternative embodiment of the plane valve of the faucet water softener according to the above embodiment of the present invention, which shows the second sealing grooves of the fixing portion.
FIG.26E shows the fixing portion and an upper end portion of the fixed disk of the alternative embodiment of the plane valve of the faucet water softener according to the above embodiment of the present invention, wherein the upper end portion of the fixed disk is disposed at the fixing portion.
FIG.26F is a perspective view of the first seal of the sealing assembly of the alternative embodiment of the plane valve of the faucet water softener according to the above embodiment of the present invention.
FIG.26G is a perspective view of the second seal of the sealing assembly of the alternative embodiment of the plane valve of the faucet water softener according to the above embodiment of the present invention.
FIG.26H is a perspective view of a fixing holder of the fixing device of the alternative embodiment of the plane valve of the faucet water softener according to the above embodiment of the present invention, which shows the restricting grooves of the fixing holder.
FIG.27A is a perspective view of the fixed disk of the alternative embodiment of the plane valve of the faucet water softener according to the above embodiment of the present invention.
FIG.27B is a top view of the fixed disk of the alternative embodiment of the plane valve of the faucet water softener according to the above embodiment of the present invention.
FIG.27C is a bottom view of the fixed disk of the alternative embodiment of the plane valve of the faucet water softener according to the above embodiment of the present invention.
FIG.27D is a perspective view of the rotatable disk of the alternative embodiment of the plane valve of the faucet water softener according to the above embodiment of the present invention.
FIG.27E is a top view of the rotatable disk of the alternative embodiment of the plane valve of the faucet water softener according to the above embodiment of the present invention.
FIG.27F is a bottom view of the rotatable disk of the alternative embodiment of the plane valve of the faucet water softener according to the above embodiment of the present invention.
FIG.28A is a structure diagram of the alternative embodiment of the plane valve of the faucet water softener according to the above embodiment of the present invention, wherein the alternative embodiment of the plane valve shown in FIG.28A is under a water softening working position, and the arrows in FIG.28A point to the directions of water flow.
FIG.28B is a structure diagram of the alternative embodiment of the plane valve of the faucet water softener according to the above embodiment of the present invention, wherein the alternative embodiment of the plane valve shown in FIG.28B is under a regenerating working position, and the arrows in FIG.28B point to the directions of water flow.
FIG.28C is a structure diagram of the alternative embodiment of the plane valve of the faucet water softener according to the above embodiment of the present invention, wherein the alternative embodiment of the plane valve shown in FIG.28C is under a raw water supplying working position, and the arrows in FIG.28C point to the directions of water flow.
FIG.29A is a structure diagram of the fixed disk of the alternative embodiment of the plane valve of the faucet water softener according to the above embodiment of the present invention.
FIG.29B is a structure diagram of the rotatable disk of the alternative embodiment of the plane valve of the faucet water softener according to the above embodiment of the present invention, wherein the dotted line shown in Fig.29B shows a communicating blind hole of the rotatable disk.
FIG.29C is a diagram of the equal division of the fixed disk of the alternative embodiment of the plane valve of the faucet water softener according to the above embodiment of the present invention, which shows channels are provided in the specific equal division positions of the fixed disk respectively.
FIG.29D is a diagram of the equal division of the rotatable disk of the alternative embodiment of the plane valve of the faucet water softener according to the above embodiment of the present invention, which shows channels are provided in the specific equal division positions of the rotatable disk respectively.
FIG.30A is a diagram of the communication between the channels of the rotatable disk and the channels of the fixed disk of the alternative embodiment of the plane valve when the alternative embodiment of the plane valve of the faucet water softener according to the above embodiment of the present invention is under the water softening working position, wherein the shaded area shown in Fig.30A shows the passages defined by the communication between the channels of the rotatable disk and the channels of the fixed disk of the plane valve.
FIG.30B is a diagram of the communication between the channels of the rotatable disk and the channels of the fixed disk of the alternative embodiment of the plane valve when the alternative embodiment of the plane valve of the faucet water softener according to the above embodiment of the present invention is under the regenerating working position, wherein the shaded area shown in Fig.30B shows the passages defined by the communication between the channels of the rotatable disk and the channels of the fixed disk of the plane valve.
FIG.30C is a diagram of the communication between the channels of the rotatable disk and the channels of the fixed disk of the alternative embodiment of the plane valve when the alternative embodiment of the plane valve of the faucet water softener according to the above embodiment of the present invention is under the raw water supplying working position, wherein the shaded area shown in Fig.30C shows the passages defined by the communication between the channels of the rotatable disk and the channels of the fixed disk of the plane valve.
FIG.31A illustrates another alternative embodiment of the control valve of the faucet water softener according to the above embodiment of the present invention.
FIG.31B is another perspective view of the above alternative embodiment of the plane valve of the faucet water softener according to the above embodiment of the present invention.
FIG.31C is an exploded view of the above alternative embodiment of the plane valve of the faucet water softener according to the above embodiment of the present invention.
FIG.32A is a perspective view of the above alternative embodiment of the plane valve of the faucet water softener according to the above embodiment of the present invention, which shows a first channel, a second channel, a third channel and a raw water outlet channel of the plane valve.
FIG.32B is another perspective view of the above alternative embodiment of the plane valve of the faucet water softener according to the above embodiment of the present invention, which shows the first channel, the second channel, the third channel, the raw water outlet channel and a second seal of the plane valve.
FIG.32C is another perspective view of the above alternative embodiment of the plane valve of the faucet water softener according to the above embodiment of the present invention, which shows a first opening and a softened water inlet of the valve body.
FIG.32D is another perspective view of the above alternative embodiment of the plane valve of the faucet water softener according to the above embodiment of the present invention, which shows a raw water inlet of the plane valve.
FIG.32E is another perspective view of the above alternative embodiment of the plane valve of the faucet water softener according to the above embodiment of the present invention, which shows a raw water outlet and the softened water outlet of the plane valve.
FIG.32F is a top view of the valve body of the above alternative embodiment of the plane valve of the faucet water softener according to the above embodiment of the present invention.
FIG.32G is a bottom view of the valve body of the above alternative embodiment of the plane valve of the faucet water softener according to the above embodiment of the present invention.
FIG.32H is a front view of the valve body of the above alternative embodiment of the plane valve of the faucet water softener according to the above embodiment of the present invention.
FIG.33A is a sectional view of the above alternative embodiment of the valve body of the plane valve of the faucet water softener according to the above embodiment of the present invention, which shows the first channel of the plane valve is communicated with the first opening of the plane valve, the third channel of the plane valve is communicated with the third opening.
FIG.33B is another sectional view of the above alternative embodiment of the valve body of the plane valve of the faucet water softener according to the above embodiment of the present invention, which shows the second channel of the plane valve is communicated with the second opening.
FIG.33C is another sectional view of the above alternative embodiment of the plane valve of the faucet water softener according to the above embodiment of the present invention, which shows a raw water outlet channel of the plane valve is communicated with the raw water outlet.
FIG.33D is another sectional view of the above alternative embodiment of the plane valve of the faucet water softener according to the above embodiment of the present invention, which shows a raw water inlet of the plane valve is communicated with the valve cavity; a softened water inlet of the plane valve is communicated with the softened water outlet.
FIG.34A is a sectional view of the above alternative embodiment of the plane valve of the faucet water softener according to the above embodiment of the present invention, wherein a fixing device is provided inside the valve cavity of the plane valve.
FIG.34B is a perspective view of the above alternative embodiment of the valve body of the plane valve of the faucet water softener according to the above embodiment of the present invention, wherein a flow deflector of the faucet water purifier of the present invention is disposed at the valve body of the plane valve.
FIG.34C is a perspective view of the flow deflector of the faucet water softener according to the above embodiment of the present invention.
FIG.34D is another perspective view of the flow deflector of the faucet water softener according to the above embodiment of the present invention.
FIG.35A is a perspective view of the fixing device of the alternative embodiment of the plane valve of the faucet water softener according to the above embodiment of the present invention.
FIG.35B is a sectional view of the fixing device of the alternative embodiment of the plane valve of the faucet water softener according to the above embodiment of the present invention.
FIG.35C is a perspective view of a fixing portion of a fixed disk of the alternative embodiment of the plane valve of the faucet water softener according to the above embodiment of the present invention, which shows the first sealing grooves of the fixing portion.
FIG.35D is another perspective view of the fixing portion of the fixed disk of the alternative embodiment of the plane valve of the faucet water softener according to the above embodiment of the present invention, which shows the second sealing grooves of the fixing portion.
FIG.35E shows the fixing portion and an upper end portion of the fixed disk of the alternative embodiment of the plane valve of the faucet water softener according to the above embodiment of the present invention, wherein the upper end portion of the fixed disk is disposed at the fixing portion.
FIG.35F is a perspective view of the first seal of the sealing assembly of the alternative embodiment of the plane valve of the faucet water softener according to the above embodiment of the present invention.
FIG.35G is a perspective view of the second seal of the sealing assembly of the alternative embodiment of the plane valve of the faucet water softener according to the above embodiment of the present invention.
FIG.35H is a perspective view of a fixing holder of the fixing device of the alternative embodiment of the plane valve of the faucet water softener according to the above embodiment of the present invention, which shows the restricting grooves of the fixing holder.
FIG.36A is a perspective view of the fixed disk of the alternative embodiment of the plane valve of the faucet water softener according to the above embodiment of the present invention.
FIG.36B is a top view of the fixed disk of the alternative embodiment of the plane valve of the faucet water softener according to the above embodiment of the present invention.
FIG.36C is a bottom view of the fixed disk of the alternative embodiment of the plane valve of the faucet water softener according to the above embodiment of the present invention.
FIG.36D is a perspective view of the rotatable disk of the alternative embodiment of the plane valve of the faucet water softener according to the above embodiment of the present invention.
FIG.36E is a top view of the rotatable disk of the alternative embodiment of the plane valve of the faucet water softener according to the above embodiment of the present invention.
FIG.36F is a bottom view of the rotatable disk of the alternative embodiment of the plane valve of the faucet water softener according to the above embodiment of the present invention.
FIG.37A is a structure diagram of the alternative embodiment of the plane valve of the faucet water softener according to the above embodiment of the present invention, wherein the alternative embodiment of the plane valve shown in FIG.37A is under a water softening working position, and the arrows in FIG.37A point to the directions of water flow.
FIG.37B is a structure diagram of the alternative embodiment of the plane valve of the faucet water softener according to the above embodiment of the present invention, wherein the alternative embodiment of the plane valve shown in FIG.37B is under a regenerating working position, and the arrows in FIG.37B point to the directions of water flow.
FIG.37C is a structure diagram of the alternative embodiment of the plane valve of the faucet water softener according to the above embodiment of the present invention, wherein the alternative embodiment of the plane valve shown in FIG.37C is under a raw water supplying working position, and the arrows in FIG.37C point to the directions of water flow.
FIG.38A is a structure diagram of the fixed disk of the alternative embodiment of the plane valve of the faucet water softener according to the above embodiment of the present invention.
FIG.38B is a structure diagram of the rotatable disk of the alternative embodiment of the plane valve of the faucet water softener according to the above embodiment of the present invention, wherein the dotted line shown in Fig.38B shows a communicating blind hole of the rotatable disk.
FIG.38C is a diagram of the equal division of the fixed disk of the alternative embodiment of the plane valve of the faucet water softener according to the above embodiment of the present invention, which shows channels are provided in the specific equal division positions of the fixed disk respectively.
FIG.38D is a diagram of the equal division of the rotatable disk of the alternative embodiment of the plane valve of the faucet water softener according to the above embodiment of the present invention, which shows channels are provided in the specific equal division positions of the rotatable disk respectively.
FIG.39A is a diagram of the communication between the channels of the rotatable disk and the channels of the fixed disk of the alternative embodiment of the plane valve when the alternative embodiment of the plane valve of the faucet water softener according to the above embodiment of the present invention is under the water softening working position, wherein the shaded area shown in Fig.39A shows the passages defined by the communication between the channels of the rotatable disk and the channels of the fixed disk of the plane valve.
FIG.39B is a diagram of the communication between the channels of the rotatable disk and the channels of the fixed disk of the alternative embodiment of the plane valve when the alternative embodiment of the plane valve of the faucet water softener according to the above embodiment of the present invention is under the regenerating working position, wherein the shaded area shown in Fig.39B shows the passages defined by the communication between the channels of the rotatable disk and the channels of the fixed disk of the plane valve.
FIG.39C is a diagram of the communication between the channels of the rotatable disk and the channels of the fixed disk of the alternative embodiment of the plane valve when the alternative embodiment of the plane valve of the faucet water softener according to the above embodiment of the present invention is under the raw water supplying working position, wherein the shaded area shown in Fig.39C shows the passages defined by the communication between the channels of the rotatable disk and the channels of the fixed disk of the plane valve.
FIG.40A illustrates another alternative embodiment of the control valve of the faucet water softener according to the above embodiment of the present invention.
FIG.40B is another perspective view of the above alternative embodiment of the plane valve of the faucet water softener according to the above embodiment of the present invention.
FIG.40C is an exploded view of the above alternative embodiment of the plane valve of the faucet water softener according to the above embodiment of the present invention.
FIG.41A is a perspective view of the above alternative embodiment of the plane valve of the faucet water softener according to the above embodiment of the present invention, which shows a first channel, a second channel, a third channel, a raw water outlet channel and a raw water inlet channel of the plane valve.
FIG.41B is another perspective view of the above alternative embodiment of the plane valve of the faucet water softener according to the above embodiment of the present invention, which shows the first channel, the second channel, the third channel, the raw water outlet channel, the raw water inlet channel and a second seal of the plane valve.
FIG.41C is another perspective view of the above alternative embodiment of the plane valve of the faucet water softener according to the above embodiment of the present invention, which shows a first opening and a softened water inlet of the valve body.
FIG.41D is another perspective view of the above alternative embodiment of the plane valve of the faucet water softener according to the above embodiment of the present invention, which shows a raw water inlet of the plane valve.
FIG.41E is another perspective view of the above alternative embodiment of the plane valve of the faucet water softener according to the above embodiment of the present invention, which shows a raw water outlet and the softened water outlet of the plane valve.
FIG.41F is a top view of the valve body of the above alternative embodiment of the plane valve of the faucet water softener according to the above embodiment of the present invention.
FIG.41G is a bottom view of the valve body of the above alternative embodiment of the plane valve of the faucet water softener according to the above embodiment of the present invention.
FIG.41H is a front view of the valve body of the above alternative embodiment of the plane valve of the faucet water softener according to the above embodiment of the present invention.
FIG.42A is a sectional view of the above alternative embodiment of the valve body of the plane valve of the faucet water softener according to the above embodiment of the present invention, which shows the first channel of the plane valve is communicated with the first opening of the plane valve, the third channel of the plane valve is communicated with the third opening.
FIG.42B is another sectional view of the above alternative embodiment of the valve body of the plane valve of the faucet water softener according to the above embodiment of the present invention, which shows the second channel of the plane valve is communicated with the second opening.
FIG.42C is another sectional view of the above alternative embodiment of the plane valve of the faucet water softener according to the above embodiment of the present invention, which shows a raw water outlet channel of the plane valve is communicated with the raw water outlet.
FIG.42D is another sectional view of the above alternative embodiment of the plane valve of the faucet water softener according to the above embodiment of the present invention, which shows a softened water inlet of the plane valve is communicated with the softened water outlet.
FIG.42E is another sectional view of the above alternative embodiment of the plane valve of the faucet water softener according to the above embodiment of the present invention, which shows a raw water inlet channel of the plane valve is communicated with the raw water inlet.
FIG.43A is a sectional view of the above alternative embodiment of the plane valve of the faucet water softener according to the above embodiment of the present invention, wherein a fixing device is provided inside the valve cavity of the plane valve.
FIG.43B is a perspective view of the above alternative embodiment of the valve body of the plane valve of the faucet water softener according to the above embodiment of the present invention, wherein a flow deflector of the faucet water purifier of the present invention is disposed at the valve body of the plane valve.
FIG.43C is a perspective view of the flow deflector of the faucet water softener according to the above embodiment of the present invention.
FIG.43D is another perspective view of the flow deflector of the faucet water softener according to the above embodiment of the present invention.
FIG.44A is a perspective view of the fixing device of the alternative embodiment of the plane valve of the faucet water softener according to the above embodiment of the present invention.
FIG.44B is a sectional view of the fixing device of the alternative embodiment of the plane valve of the faucet water softener according to the above embodiment of the present invention.
FIG.44C is a perspective view of a fixing portion of a fixed disk of the alternative embodiment of the plane valve of the faucet water softener according to the above embodiment of the present invention, which shows the first sealing grooves of the fixing portion.
FIG.44D is another perspective view of the fixing portion of the fixed disk of the alternative embodiment of the plane valve of the faucet water softener according to the above embodiment of the present invention, which shows the second sealing grooves of the fixing portion.
FIG.44E illustrates the fixing portion and an upper end portion of the fixed disk of the alternative embodiment of the plane valve of the faucet water softener according to the above embodiment of the present invention, wherein the upper end portion of the fixed disk is disposed at the fixing portion.
FIG.44F is a perspective view of the first seal of the sealing assembly of the alternative embodiment of the plane valve of the faucet water softener according to the above embodiment of the present invention.
FIG.44G is a perspective view of the second seal of the sealing assembly of the alternative embodiment of the plane valve of the faucet water softener according to the above embodiment of the present invention.
FIG.44H is a perspective view of a fixing holder of the fixing device of the alternative embodiment of the plane valve of the faucet water softener according to the above embodiment of the present invention, which shows the restricting grooves of the fixing holder.
FIG.45A is a perspective view of the fixed disk of the alternative embodiment of the plane valve of the faucet water softener according to the above embodiment of the present invention.
FIG.45B is a top view of the fixed disk of the alternative embodiment of the plane valve of the faucet water softener according to the above embodiment of the present invention.
FIG.45C is a bottom view of the fixed disk of the alternative embodiment of the plane valve of the faucet water softener according to the above embodiment of the present invention.
FIG.45D is a perspective view of the rotatable disk of the alternative embodiment of the plane valve of the faucet water softener according to the above embodiment of the present invention.
FIG.45E is a top view of the rotatable disk of the alternative embodiment of the plane valve of the faucet water softener according to the above embodiment of the present invention.
FIG.45F is a bottom view of the rotatable disk of the alternative embodiment of the plane valve of the faucet water softener according to the above embodiment of the present invention.
FIG.46A is a structure diagram of the alternative embodiment of the plane valve of the faucet water softener according to the above embodiment of the present invention, wherein the alternative embodiment of the plane valve shown in FIG.46A is under a water softening working position, and the arrows in FIG.46A point to the directions of water flow.
FIG.46B is a structure diagram of the alternative embodiment of the plane valve of the faucet water softener according to the above embodiment of the present invention, wherein the alternative embodiment of the plane valve shown in FIG.46B is under a regenerating working position, and the arrows in FIG.46B point to the directions of water flow.
FIG.46C is a structure diagram of the alternative embodiment of the plane valve of the faucet water softener according to the above embodiment of the present invention, wherein the alternative embodiment of the plane valve shown in FIG.46C is under a raw water supplying working position, and the arrows in FIG.46C point to the directions of water flow.
FIG.47A is a structure diagram of the fixed disk of the alternative embodiment of the plane valve of the faucet water softener according to the above embodiment of the present invention.
FIG.47B is a structure diagram of the rotatable disk of the alternative embodiment of the plane valve of the faucet water softener according to the above embodiment of the present invention, wherein the dotted line shown in Fig.47B shows a communicating blind hole of the rotatable disk.
FIG.47C is a diagram of the equal division of the fixed disk of the alternative embodiment of the plane valve of the faucet water softener according to the above embodiment of the present invention, which shows channels are provided in the specific equal division positions of the fixed disk respectively.
FIG.47D is a diagram of the equal division of the rotatable disk of the alternative embodiment of the plane valve of the faucet water softener according to the above embodiment of the present invention, which shows channels are provided in the specific equal division positions of the rotatable disk respectively.
FIG48A is a diagram of the communication between the channels of the rotatable disk and the channels of the fixed disk of the alternative embodiment of the plane valve when the alternative embodiment of the plane valve of the faucet water softener according to the above embodiment of the present invention is under the water softening working position, wherein the shaded area shown in Fig.48A shows the passages defined by the communication between the channels of the rotatable disk and the channels of the fixed disk of the plane valve.
FIG.48B is a diagram of the communication between the channels of the rotatable disk and the channels of the fixed disk of the alternative embodiment of the plane valve when the alternative embodiment of the plane valve of the faucet water softener according to the above embodiment of the present invention is under the regenerating working position, wherein the shaded area shown in Fig.48B shows the passages defined by the communication between the channels of the rotatable disk and the channels of the fixed disk of the plane valve.
FIG.48C is a diagram of the communication between the channels of the rotatable disk and the channels of the fixed disk of the alternative embodiment of the plane valve when the alternative embodiment of the plane valve of the faucet water softener according to the above embodiment of the present invention is under the raw water supplying working position, wherein the shaded area shown in Fig.48C shows the passages defined by the communication between the channels of the rotatable disk and the channels of the fixed disk of the plane valve.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

Those skilled in the art should understand that, in the disclosure of the present invention, terminologies of "longitudinal", "lateral", "upper", "lower", "front", "back", "left", "right", "perpendicular", "horizontal", "top", "bottom", "inner", "outer" and etc. just indicate relations of direction or position are based on the relations of direction or position shown in the appended drawings, which is only to facilitate descriptions of the present invention and to simplify the descriptions, rather than to indicate or imply that the referred device or element must apply specific direction or to be operated or configured in specific direction. Therefore, the above-mentioned terminologies shall not be interpreted as confine to the present invention.

It will be understood that the term "a" should be understood as "at least one" or "one or more", that is, in one embodiment, the number of an element may be one, and in other embodiments, the number of the element can be greater than one, and the term "a" cannot be construed as a limitation to the quantity.

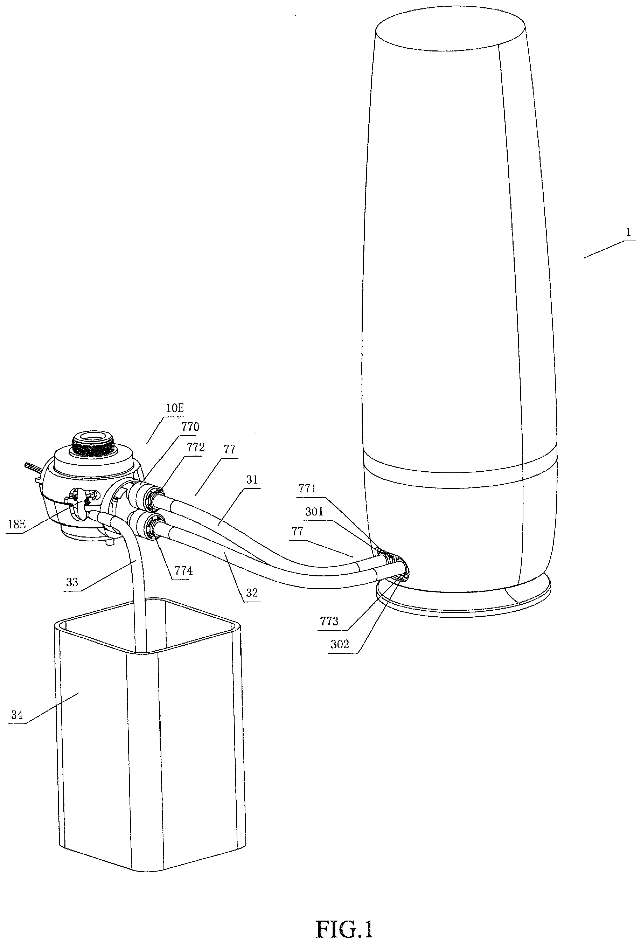

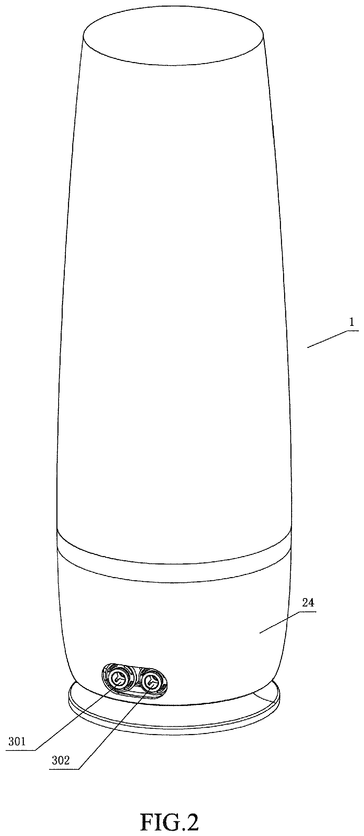

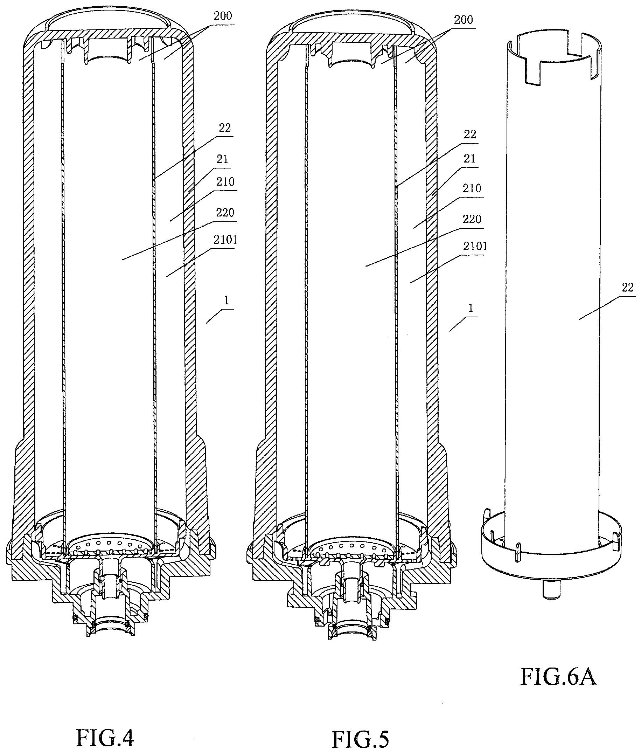

Referring to FIG.1 to FIG.9, a faucet water softener according to an embodiment of the present invention is illustrated, wherein the faucet water softener of the present invention comprises a water treatment device 1 and a first hose 31, wherein one end of the first hose 31 is adapted to be communicated with a raw water source, such as a faucet, and another end of the first hose 31 is adapted to be communicated with the water treatment device 1, so that the raw water can flow from the water source into the water treatment device 1 under the action of water pressure., and is softened by the water treatment device 1 to generate softened water.

Most of the softened water produced by the existing water softener is used for bathing, washing clothes, etc., and large in size. Once installed, they are less moved, and their water softening device are communicated with the raw water source generally through a hard pipe, such as, a plastic hard pipe or a stainless steel tube.

However, the water treatment device 1 of the faucet water softener of the present invention is communicated with the raw water source, especially the faucet, through a hose, the first hose 31, so that it is more convenient for the user to use on a dressing table or a washbasin of a kitchen (or a dressing room or a toilet) with a limited area.

Generally, the area of a work top near the kitchen sink or a dressing room is limited. Using a hard pipe for communication will not only occupy a large space, but also bring inconvenience to the use of the faucet water softener because the hard pipe cannot be moved.

In particular, many faucets, such as kitchen faucets, have rotatable outlet pipes for ease of use.

If a hard pipe is used for communication, the outlet pipe of the faucet will not turn.

The water treatment device 1 of the faucet water softener of the present invention is communicated with the raw water source through a hose, especially, through the first hose 31, will not affect the rotation of the faucet (or its water outlet).

In addition, using the hose for communication can also enable the user to connect the first hose 31 with the faucet and the water treatment device 1 and detach the first hose 31 from the water faucet and the water treatment device 1 without tools.

It is worth mentioning that the faucet water softener of the present invention is designed to be miniaturized, so that it can be used on a dressing table or a washbasin of a kitchen (or a dressing room or a toilet) with a limited area.

If the total volume of the softening material of the faucet water softener of the present invention is too large, the entire water softener will be too large, which is inconvenient to be used on a dressing table or a washbasin of a kitchen (or a dressing room or a toilet) with limited area. If it is too small, it will cause the water softener to have a limited water softening ability and the water softener to lose its water softening ability in a short period of time.

Correspondingly, the total volume of the softening material of the faucet water softener of the present invention is not more than 2L.

Preferably, the total volume of the softening material of the faucet water softener of the present invention is not more than 1L.

As shown in FIG.1 to FIG.9, the inner diameter of the first hose 31 of the faucet water softener of the present invention is no greater than 8 mm.

The faucet water softener of the present invention is designed to be mainly used for beauty and the like, and the amount of soft water used is small.

If the inner diameter of the first hose 31 is too large, the softened water produced by the faucet water softener of the present invention in a short time exceeds the actual demand of the user, and the excess softened water will be wasted.

In addition, the faucet water softener of the present invention is miniaturized, and the total volume of the softening material is preferably not more than 2L, and the softening ability is limited. If the inner diameter of the first hose 31 is too large, it will quickly cause the faucet water softener of the present invention to lose its softening ability.

More preferably, the inner diameter of the first hose 31 of the faucet water softener of the present invention is no greater than 5 mm.

As shown in FIG.1 to FIG.9, the faucet water softener according to the embodiment of further comprises a second hose 32, wherein one end of the first hose 31 is adapted to be communicated with a raw water source, another end of the first hose 31 is adapted to be communicated with the water treatment device 1 to provide the faucet water to the water treatment device 1, and one end of the second hose 32 is communicated with the water treatment device 1 to allow the softened water generated by the water treatment device 1 to be supplied through the second hose 32.

As shown in FIG.1 to FIG.9, the water treatment device 1 of the faucet water softener according to the embodiment of the present invention comprises an outer casing 21, an inner casing 22 and a softening material 23, wherein the outer casing 21 defines a first receiving chamber 210, the inner casing 22 defines a second receiving chamber 220, wherein the inner casing 22 is arranged in the first receiving chamber 210 of the outer casing 21, and the outer casing 21 and the inner casing 22 defines a first softening cavity 2101 therebetween, wherein the softening material 23 is arranged inside the first softening cavity 2101, and the first softening cavity 2101 is communicated with the second receiving chamber 220 of the inner casing 22.

Preferably, the softening material 23 is provided in both the first softening cavity 2101 and the second receiving chamber 220.

As shown in FIG.1 to FIG.9, the water treatment device 1 of the faucet water softener according to the embodiment of the present invention defines a first communicating opening 301 and a second communicating opening 302, wherein the first communicating opening 301 is communicated with the first softening cavity 2101, and the second communicating opening 302 is communicated with the second receiving chamber 220 of the inner casing 22.

Preferably, the water treatment device 1 of the faucet water softener according to the embodiment of the present invention defines a communicating channel 200, wherein the communicating channel 200 is communicated with the first softening cavity 2101 and the second receiving chamber 220 respectively, so that the first softening cavity 2101 and the second receiving chamber 220 are communicated with each other.

More preferably, the first softening cavity 2101 and the second receiving chamber 220 are communicated with each other by and only by being communicated with the communicating channel 200 respectively.

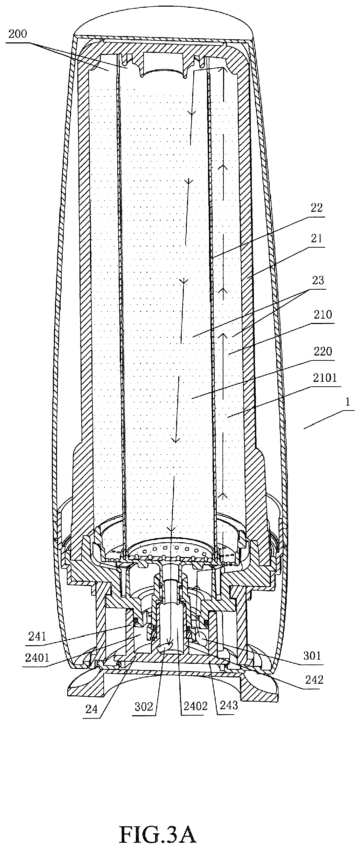

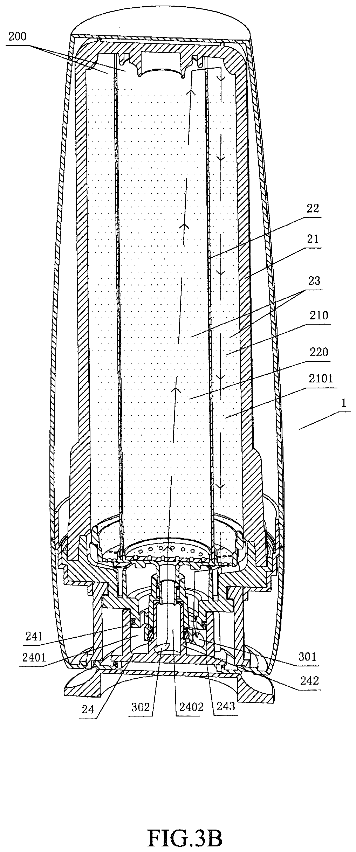

Further, the communicating channel 200 is away from the first communicating opening 301 and the second communicating opening 302, so that when the faucet water is softened, as indicated by the arrows shown in FIG.3A, the water flows through the first communicating opening 301, the first softening cavity 2101, the communicating channel 200, the second receiving chamber 220 and the second communicating opening 302 , or as indicated by the arrows in FIG.3B, the water flows through the second communicating opening 302, the second receiving chamber 220, the communicating channel 200, the first softening cavity 2101 and the first communicating opening 301.

Correspondingly, the first softening cavity 2101 and the second receiving chamber 220 are only communicated through the communicating channel 200 away from the first communicating opening 301 and the second communicating opening 302, which lengthens the path where the water flow during its softening process, thereby enhancing the softening effect on the faucet water.

It will be understood that when the faucet water is supplied through the first communicating opening 301, the first hose 31 is communicated with the first communicating opening 301, and the second hose 32 is communicated with the second communicating opening 302; when the faucet water is supplied through the second communicating opening 302, the first hose 31 is communicated with the second communicating opening 302, and the second hose 32 is communicated with the first communicating opening 301.

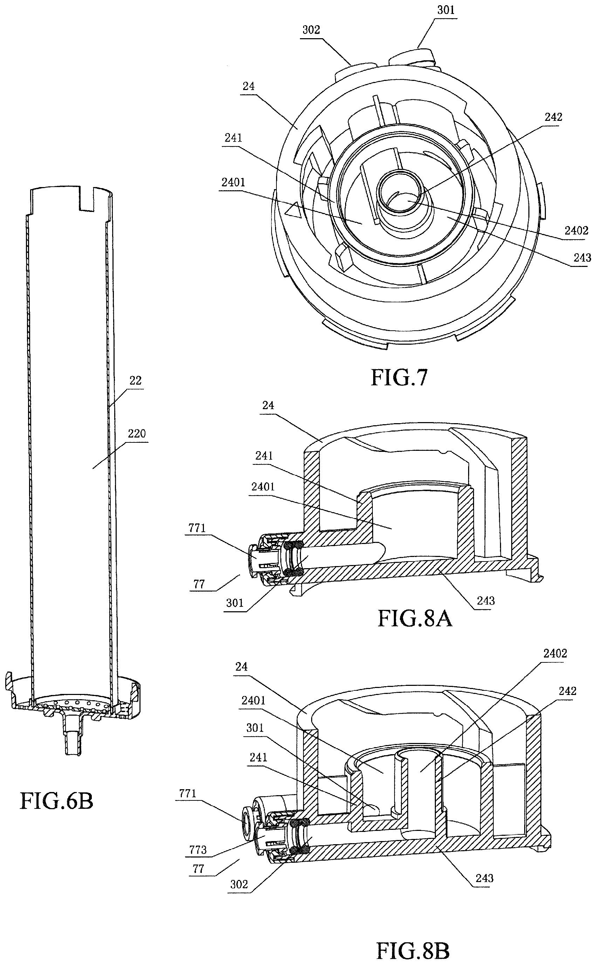

As shown in FIG.7 to FIG.9, the water treatment device 1 of the faucet water softener according to the embodiment of the present invention further comprises a base 24, wherein the outer casing 21 and the inner casing 22 are arranged on the base 24.

Preferably, the first communicating opening 301 and the second communicating opening 302 are both provided at the base 24.

As shown in FIG.1 to FIG.9, the base 24 of the water treatment device 1 of the faucet water softener according to the embodiment of the present invention defines a first guiding cavity 2401 and a second guiding cavity 2402, wherein the first guiding cavity 2401 of the base 24 is communicated with the first softening cavity 2101 and the first communicating opening 301 of the water treatment device 1 respectively, and the second guiding cavity 2402 is communicated with the second communicating opening 302 and the second receiving chamber 220.

Correspondingly, when the faucet water is softened by the faucet water softener of the present invention, the water flows through the first communicating opening 301, the first guiding cavity 2401, the first softening cavity 2101, the communicating channel 200, and the second receiving chamber 220, the second guiding cavity 2402 and the second communicating opening 302 in sequence, or flows through the second communicating opening 302, the second guiding cavity 2402, the second receiving chamber 220, the communicating channel 200, the first softening cavity 2101, the first guiding cavity 2401 and the first communicating opening 301.

As shown in FIG.1 to FIG.9, the base 24 of the water treatment device 1 of the faucet water softener according to the embodiment of the present invention comprises a first guiding portion 241, a second guiding portion 242 and a bottom portion 243, wherein the first guiding portion 241 and the second guiding portion 242 extend from the bottom portion 243 respectively, wherein the first guiding cavity 2401 is defined between the first guiding portion 241 and the second guiding portion 242, the second guiding portion 242 defines the second guiding cavity 2402.

Preferably, the first guiding portion 241 and the second guiding portion 242 are both annular.

As shown in FIG.3A, when the faucet water softener according to the embodiment of the present invention softens the faucet water, the faucet water flows through the first communicating opening 301, the first guiding cavity 2401 (if any), the first softening cavity 2101, the communicating channel 200, the second receiving chamber 220, the second guiding cavity 2402 (if any) and the second communicating opening 302, so that the faucet water is softened by the softening material 23 in the first softening cavity 2101 and the second receiving chamber 220, and the softened water flows out and is supplied through the second communicating opening 302.

As shown in FIG.3B, alternatively, when the faucet water softener according to the embodiment of the present invention softens the tap water, the faucet water flows in from the second communicating opening 302, and then flows through the second guiding cavity 2402(if any), the second receiving chamber 220, the communicating channel 200, the first softening cavity 2101, the first guiding cavity 2401 (if any) and the first communicating opening 301 in sequence, the softened water flows out and is supplied through the first communicating opening 301.

As shown in FIG.1 to FIG.11B, the faucet water softener according to the embodiment of the present invention further comprises a control valve 10E, wherein the control valve 10E is provided to control the flow of water, so as to control raw water (or faucet water) to be supplied to the water treatment device 1, and control the water treatment device 1 to treat the raw water to generate, or produce the softened water and be supplied.

It can be understood that the control valve 10E of the faucet water softener of the present invention is in communication with the faucet water source, such as a faucet, one end of the first hose 31 is communicated the control valve 10E, and another end of the first hose 31is communicated with the water treatment device 1.

In other words, the control valve 10E controls raw water (or faucet water) to be supplied to the water treatment device 1 through the first hose 31.

As shown in FIG.3A, when the faucet water softener according to the embodiment of the present invention is regenerated, under the control of the control valve 10E, a regeneration solution, such as a salt solution (sodium chloride solution), flows to the first communicating opening 301 of the water treatment device 1 of the faucet softener of the present invention, and the regeneration solution flows through the first guiding cavity 2401, the first softening cavity 2101, the communicating channel 200, the second receiving chamber 220, the second guiding cavity 2402 and the second communicating opening 302, and in the process, the softening material 23 of the faucet water softener of the present invention is regenerated.

The waste liquid produced in the regeneration process of the softening material 23 of the faucet water softener of the present invention is discharged from the second communicating opening 302.

As shown in FIG.3B, when the faucet water softener according to the embodiment of the present invention is regenerated, under the control of the control valve 10E, a regeneration solution, such as a salt solution (sodium chloride solution), flows to the second communicating opening 302 of the water treatment device 1 of the faucet softener of the present invention, and the regeneration solution flows through the second guiding cavity 2402, the second receiving cavity 220, the communicating channel 200, the first softening cavity 2101, the first guiding cavity 2401 and the first communicating opening 301, and in the process, the softening material 23 of the faucet water softener of the present invention is regenerated.

The waste liquid produced in the regeneration process of the softening material 23 of the faucet water softener of the present invention is discharged from the first communicating opening 301.

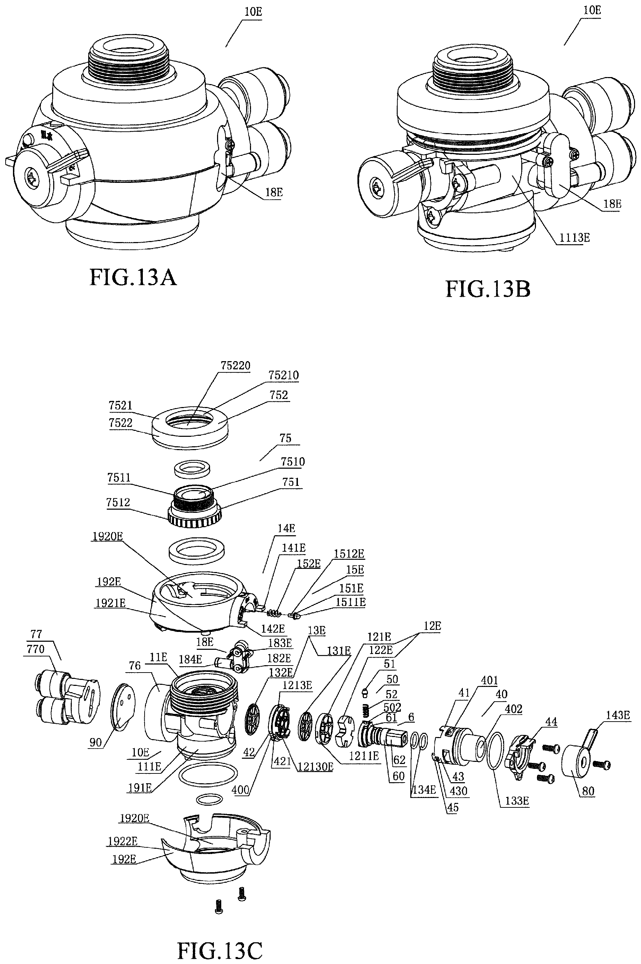

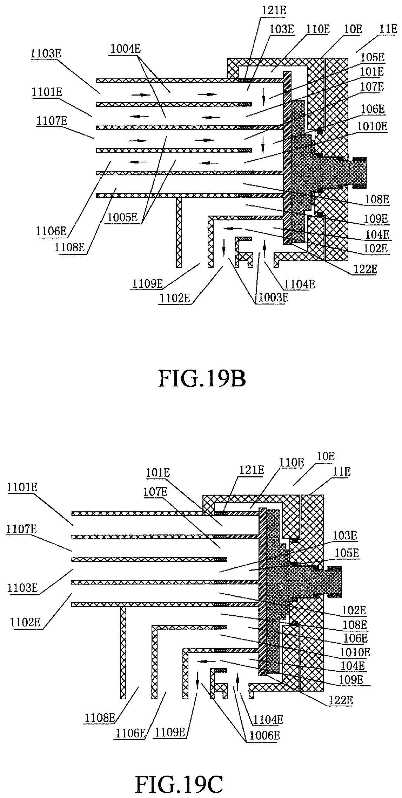

Referring to FIG.13A to FIG.21C, the control valve 10E of the faucet water softener of the embodiment of the present invention comprises a valve body 11E and a valve core12E, wherein the valve body 11E defines a valve cavity 110E, a first opening 1101E, a second opening 1102E, a third opening 1103E, a raw water inlet 1104E and a draining opening 1106E, a softened water inlet 1107E, a softened water outlet 1108E and a raw water outlet 1109E, wherein the valve core 12E is provided inside the valve cavity 110E, wherein the first opening 1101E of the valve body 11E is adapted to be communicated with the first communicating opening 301 of the water treatment device 1, the softened water inlet 1107E of the valve body 11E is adapted to be communicated with the second communicating opening 302 of the water treatment device 1, the raw water inlet 1104E of the valve body 11E is adapted to be communicated with a raw water source (for example, a water outlet of a faucet).

Further, the first hose 31 is respectively communicated with the first opening 1101E of the valve body 11E and the first communicating opening 301 of the water treatment device 1; and/or the second hose 32 is respectively communicated with the softened water inlet 1107E of the valve body 11E and the second communicating opening 302 of the water treatment device 1.

In other words, one end of the first hose 31 is communicated with the first opening 1101E of the valve body 11E, and another end is communicated with the first communicating opening 301 of the water treatment device 1; one end of the second hose 32 is communicated with the softened water inlet 1107E of the valve body 11E, and another end is communicated with the second communicating opening 302 of the water treatment device 1.

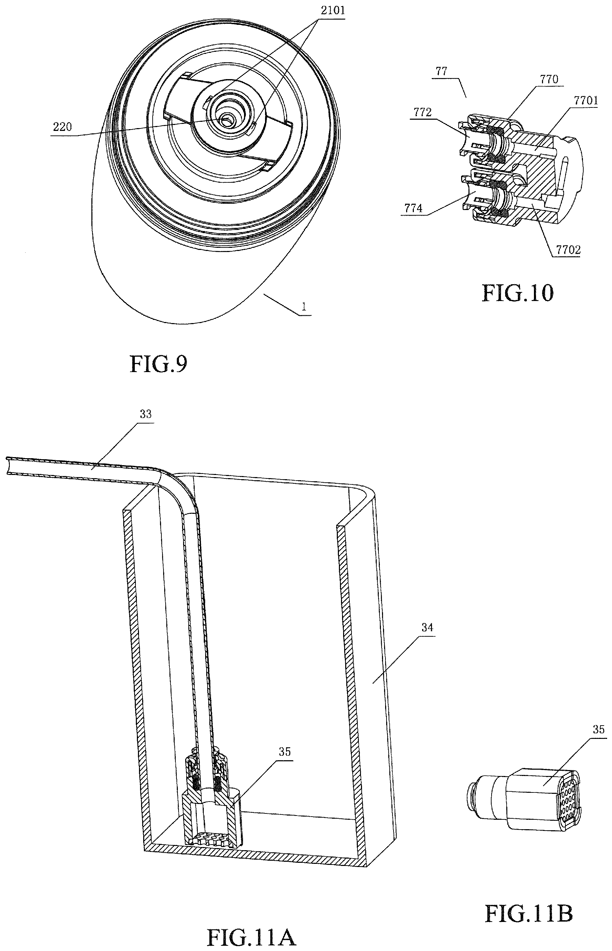

As shown in FIG.11A to FIG.12H, the control valve 10E of the faucet water softener according to the embodiment of the present invention further has an injector 18E, wherein the injector 18E has an ejecting opening 182E communicated with the second opening 1102E of the valve body 11E, an injecting opening 183E communicated with the third opening 1103E of the valve body 11E, and a brine opening 181E communicated with the ejecting opening 182E and the injecting opening 183E respectively, when the water flow, such as a faucet water flow, flows from the ejecting opening 182E of the injector 18E to the injecting opening 183E of the injector 18E, a negative pressure is generated in the brine opening 181E of the injector 18E, so that the regeneration solution can be flow from the brine opening 181E of the injector 18E to the injecting opening 183E of the injector 18E.Correspondingly, the brine opening 181E of the injector 18E is communicated with the ejecting opening 182E and the injecting opening 183E of the injector 18E, respectively.

As shown in FIG.11A to FIG.12H, the injector 18E of the faucet water softener according to the embodiment of the present invention includes an injector body 180E, wherein the injector body 180E defines a nozzle 1804E, a suctioning chamber 1805E and a liquid mixing cavity 1806E, wherein the nozzle 1804E is communicated with the ejecting opening 182E, the suctioning chamber 1805E is communicated with the brine opening 181E, the liquid mixing cavity 1806E is communicated with the injecting opening 183E, the nozzle 1804E, the suctioning chamber 1805E and the liquid mixing cavity 1806E defines a three-way structure.

Further, the ejecting opening 182E and the injecting opening 183E are formed on the surface of the injector body 180E, and the nozzle 1804E, the suctioning chamber 1805E and the liquid mixing cavity 1806E are formed inside the injector body 180E.

Preferably, the injector body 180E is plate-shaped.

The plate-shaped injector body 180E can effectively reduce the size of the control valve 10E, so that the control valve 10E is more convenient to be installed on a faucet.

As shown in FIG.11A to FIG.12H, the injector body 180E of the injector 18E of the faucet water softener according to the embodiment of the present invention includes a flexible plate 1801E, a rigid plate 1802E, a first forming portion 1807E and a second forming portion 1808E, wherein the first forming portion 1807E and the second forming portion 1808E are disposed between the flexible plate 1801E and the rigid plate 1802E, wherein the flexible plate 1801E, the first forming portion 1807E, the second forming portion 1808E and the rigid plate 1802E defines the suctioning chamber 1805E and the liquid mixing cavity 1806E, and the flexible plate 1801E, the first forming portion 1807E and the rigid plate 1802E define the nozzle 1804E.

It can be understood that the flexible plate 1801E is made of a flexible material, such as rubber, and the rigid plate 1802E is made of a rigid material, such as rigid plastic.

Preferably, the first forming portion 1807E and the second forming portion 1808E are integrated with the rigid plate 1802E.

The first forming portion 1807E and the second forming portion 1808E are also made of rigid material, such as rigid plastic.

Alternatively, the first forming portion 1807E and the second forming portion 1808E are integrated with the flexible plate 1801E.

The first forming portion 1807E and the second forming portion 1808E are also made of a flexible material, such as rubber.

Correspondingly, when the flexible plate 1801E is pressed against the first forming portion 1807E and the second forming portion 1808E, a sealing can be achieved between the flexible plate 1801E, the first forming portion 1807E and the second forming portion 1808E.

As shown in FIG.1 and FIG.11A to FIG.12H, the injector 18E of the faucet water softener according to the embodiment of the present invention further includes a solution suctioning pipe 184E, wherein one end of the solution suctioning pipe 184E is communicated with the brine opening 181E so that the salt solution can be supplied through the solution suctioning pipe 184E.

As shown in FIG.1 and FIG.11A to FIG.12H, the faucet water softener according to the embodiment of the present invention further has a salt solution hose 33, wherein one end of the salt solution hose 33 (for example, through the solution suctioning pipe 184E) is communicated with the brine opening 181E of the injector 18E, and another end is adapted to be communicated with a container for holding salt solution, for example, the salt solution tank 34, so that the salt solution can flow to the brine opening 181E of the injector 18E through the salt solution hose 33.

That is, one end of the solution suctioning pipe 184E of the injector 18E is communicated with the brine opening 181E, and another end of the solution suctioning pipe 184E is communicated with the salt solution hose 33.

One end of the salt solution hose 33 is communicated with the brine opening 181E of the injector 18E through the solution suctioning pipe 184E, another end of the salt solution hose 33 is communicated with the container for holding salt solution, so that the user can make the salt solution hose 33 be communicated with the brine opening 181E of the injector 18E, and the salt solution hose 33 be detached from the injector 18E without tools.

In other words, the salt solution hose 33 allows the faucet water softener of the present invention to be communicated with the salt solution hose 33 and the brine opening 181E of the injector 18E only during regeneration, and when the faucet water softener of the present invention is during end of regeneration or non-regeneration, the salt solution hose 33 can be removed from the injector 18E, so that the faucet water softener of the present invention takes up less space when softening raw water.

As shown in FIG.11A to FIG.11B, the faucet water softener according to the embodiment of the present invention further has a filtering element 35, wherein the filtering element 35 is arranged on the salt solution hose 33 to filter the salt solution.

Preferably, the filtering element 35 is disposed at one end of the salt solution hose 33, which is communicated with the salt solution tank 34.

Optionally, the filtering element 35 is disposed at one end of the salt solution hose 33, which is communicated with the brine opening 181E of the injector 18E.

It can be understood that the filtering element 35 may be a filter mesh for filtering salt particles, or may be other filter components capable of filtering salt particles.

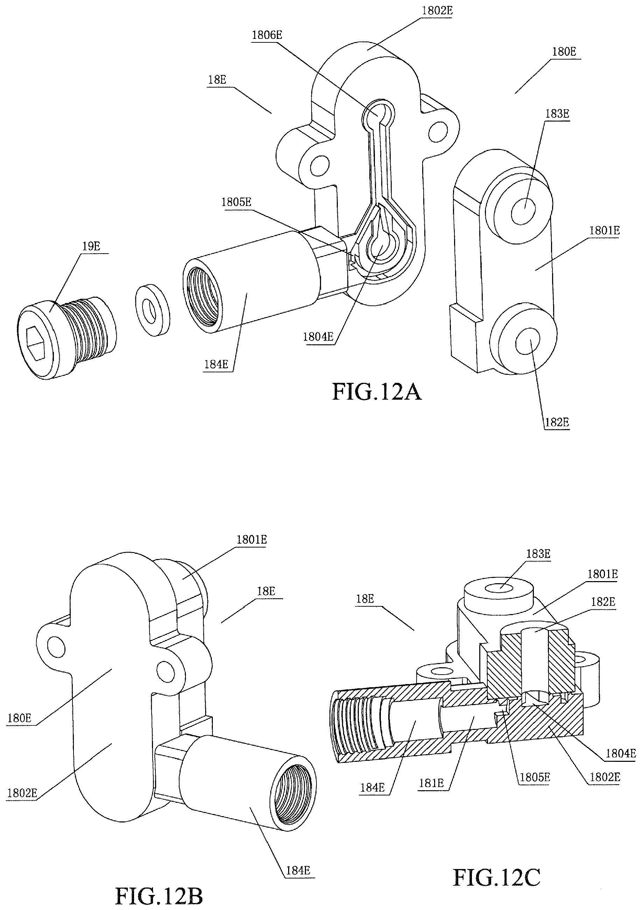

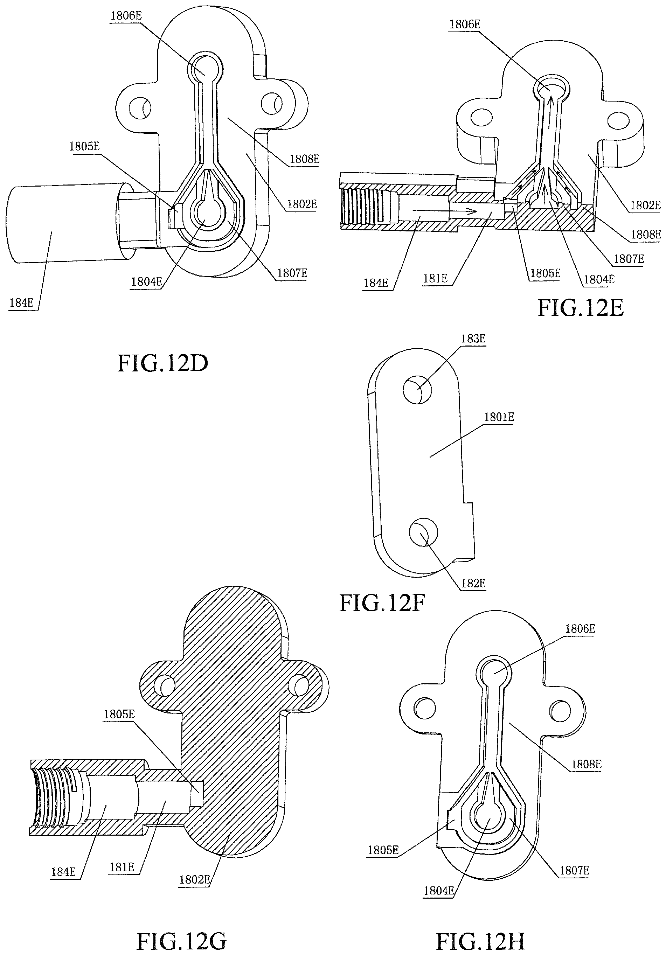

As shown in FIG.12A, the control valve 10E of the faucet water softener according to the embodiment of the present invention further has a sealing element 19E, wherein the sealing element 19E is adapted to detachably seal the brine opening 181E of the injector 18E to seal the brine opening 181E of the injector 18E when the faucet water softener of the present invention is in a non-regeneration state to prevent the brine opening 181E of the injector 18E from being polluted.

Preferably, the sealing element 19E is provided on the injector 18E to seal the brine opening 181E of the injector 18E.

More preferably, the sealing element 19E is provided at the solution suctioning pipe 184E of the injector 18E.

It can be understood that the sealing element 19E can be a sealing cover or a sealing plug.

As shown in FIG.1 to FIG.8B, FIG.13A to FIG.15E and FIG.19A, the control valve 10E of the faucet water purifier according to the embodiment of the present invention has a softening working position, wherein when the control valve 10E is under the softening working position, the valve core 12E of the control valve 10E defines a first communicating passage 1001E and a second communicating passage 1002E, wherein the first communicating passage 1001E is communicated with the first opening 1101E of the valve body 11E and the raw water inlet 1104E respectively, the second communicating passage 1002E is communicated with the softened water inlet 1107E of the valve body 11E and the softened water outlet 1108E respectively.

Accordingly, when the control valve 10E is under the softening working position, under the action of water pressure, the raw water (or the faucet water) flows into the raw water inlet 1104E of the valve body 11E of the control valve 10E, and then flows to the first opening 1101E of the valve body 11E through the first communicating passage 1001E, so as to further flow to the water treatment device 1 through the first communicating opening 301 of the water treatment device 1, after the raw water is softened by the water treatment device 1, and the generated softened water can flow out from the second communicating opening 302 of the water treatment device 1. Since the softened water inlet 1107E and the softened water outlet 1108E are communicated with each other through the second communicating passage 1002E, the softened water flowing out of the second communicating opening 302 of the water treatment device 1 flows out and is supplied through the softened water inlet 1107E, the second communicating passage 1002E and the softened water outlet 1108E in sequence.

It can be understood that when the control valve 10E of the faucet water softener according to the embodiment of the present invention is controlled to be in the softening working position, the faucet water softener of the present invention is controlled to be in its softening working state.

Preferably, the soft water outlet 1108E is a porous structure.

It can be understood that the water outlet of the porous structure is more conducive to improving the user's experience of using softened water and saving water.

As shown in FIG.1 to FIG.8B, FIG.13A to FIG.15E and FIG.19B, the control valve 10E of the faucet water softener according to the embodiment of the present invention has a regenerating working position, wherein when the control valve 10E is under the regenerating working position, the valve core 12E of the control valve 10E defines a third communicating passage 1003E, a fourth communicating passage 1004E and a fifth communicating passage 1005E, wherein the third communicating passage 1003E is communicated with the second opening 1102E and the raw water inlet 1104E of the valve body 11E respectively, the fourth communicating passage 1004E is communicated with the first opening 1101E and the third opening 1103E of the valve body 11E, the fifth communicating passage 1005E is communicated with the softened water inlet 1107E and the draining opening 1106E of the valve body 11E respectively.

Correspondingly, when the control valve 10E is in the regenerating working position, raw water (or faucet water) flows into the raw water inlet 1104E of the valve body 11E of the control valve 10E under the action of water pressure, and it flows to the second opening 1102E of the valve body 11E through the third communicating passage 1003E, and then flows into the ejecting opening 182E of the injector 18E and is ejected, it is mixed with a salt solution (for example, sodium chloride solution) from the brine opening 181E of the injector 18E to generate a regeneration solution, the regeneration solution flows into the third opening 1103E of the valve body 11E through the injecting opening 183E of the injector 18E, and then flows into the first opening 1101E of the valve body 11E through the fourth communicating passage 1004E, and the regeneration solution flows into the water treatment device 1 through the communicating opening 301 of the water treatment device 1 to regenerate the water treatment materials or mechanisms of the water treatment device 1, such as a softening material, and then the waste water from the regeneration of the water treatment device 1 flows out through the second communicating opening 302 of the water treatment device 1, and then is exhausted through the softened water inlet 1107E, the fifth communicating passage 1005E and the draining opening 1106E of the valve body 11E in sequence.

It can be understood that when the control valve 10E of the faucet water softener according to the embodiment of the present invention is controlled to be in the regenerating working position, the faucet water softener of the present invention is controlled to be in its regenerating working state.

It is worth mentioning that the waste water generated after regeneration flows out of the draining opening 1106E, which is independently set and separated from the softened water outlet 1108E, so that the waste water generated after regeneration will not pollute the softened water outlet 1108E.

As shown in FIG.1 to FIG.8B, FIG.13A to FIG.15E and FIG.19C, the control valve 10E of the faucet water softener according to the embodiment of the present invention further has a raw water supplying working position, wherein when the control valve 10E is under the raw water supplying working position, the valve core 12E of the control valve 10E defines a sixth communicating passage 1006E, wherein the sixth communicating passage 1006E is communicated with the raw water outlet 1109E and the raw water inlet 1104E of the valve body 11E respectively.

Accordingly, when the control valve 10E is under the raw water supplying working position, under the action of water pressure, the raw water or the faucet water flows into the raw water inlet 1104E of the valve body 11E of the control valve 10E, and then flows into the raw water outlet 1109E of the valve body 11E through the sixth communicating passage 1006E, such that the raw water can be provided by the raw water outlet 1109E.

It can be understood that when the control valve 10E of the faucet water softener according to the embodiment of the present invention is controlled to be in the raw water supplying working position, the faucet water softener of the present invention is controlled to be in its raw water supplying working state.

Alternatively, the first opening 1101E of the valve body 11E of the control valve 10E of the faucet water softener according to the embodiment of the present invention is communicated with the second communicating opening 302 of the water treatment device 1, and the softened water inlet 1107E of the valve body 11E is communicated with the first communicating opening 301 of the water treatment device 1, the raw water inlet 1104E of the valve body 11E is communicated with the faucet water source, and the ejecting opening 182E of the injector 18E is communicated with the second opening 1102E of the valve body 11E, the injecting opening 183E of the injector 18E is communicated with the third opening 1103E of the valve body 11E.

Correspondingly, when the control valve 10E is in the softening working position, raw water (or faucet water) flows into the raw water inlet 1104E of the valve body 11E of the control valve 10E under the action of water pressure, and flows to the first opening 1101E of the valve body 11E through the first communicating passage 1001E, and further flows into the water treatment device 1 from the second communicating opening 302 of the water treatment device 1, and the softened water after the softening treatment of the water treatment device 1 flows out from the first communicating opening 301 of the water treatment device 1. Since the softened water inlet 1107E and the softened water outlet 1108E are communicated with each other through the second communicating passage 1002E, the softened water flowing out of the first communicating opening 301 of the water treatment device 1 flows through the softened water inlet 1107E, the second communicating passage 1002E and the softened water outlet 1108E in sequence and are supplied; when the control valve 10E is in the regenerating working position, the faucet water or raw water flows into the raw water inlet 1104E of the valve body 11E under the action of water pressure, and flows to the second opening 1102E of the valve body 11E through the third communicating passage 1003E, and then flows into the ejecting opening 182E of the injector 18E, after it is ejected through the injector 18E, and it is mixed with the salt solution (such as sodium chloride solution) from the brine opening 181E, so as to generate a regeneration solution, and the regeneration solution flows into the third opening 1103E of the valve body 11E through the injecting opening 183E of the injector 18E, and then flows into the first opening 1101E of the valve body 11E through the four communicating passage 1004E, and after the regeneration solution flows into the water treatment device 1 from the second communicating opening 302 of the water treatment device 1 to regenerate the water treatment materials or mechanisms of the water treatment device 1, such as, a softening resin, the waste water generated after regeneration flows out from the first communicating opening 301 of the water treatment device 1, and then flows out through the softened water inlet 1107E, the fifth communicating passage 1005E and the draining opening 1106E of the valve body 11E in sequence.

As shown in FIG.13A to FIG.21C, the control valve 10E of the faucet water softener according to the embodiment of the present invention is a plane valve, wherein the valve core 12E of the plane valve 10E further comprises a fixed disk 121E and a rotatable disk 122E, wherein the fixed disk 121E has a first fluid control surface 1210E, the rotatable disk 122E has a second fluid control surface 1220E, wherein the rotatable disk 122E and the fixed disk 121E are both provided inside the valve cavity 110E, wherein the second fluid control surface 1220E of the rotatable disk 122E is provided on the first fluid control surface 1210E of the fixed disk 121E, and the rotatable disk 122E is provided to be capable of rotating relative to the fixed disk 121E.

Preferably, the raw water inlet 1104E is communicated with the valve cavity 110E of the valve body 11E.

Preferably, the outer diameter of the valve core 12E of the control valve 10E (the plane valve 10E) is not greater than 35 mm, so as to reduce the size of the inner diameter of the valve cavity 110E of the valve body 11E and the overall structural size of the control valve 10E, such that the plane valve 10E is more suitable for being installed on a faucet.

More preferably, the outer diameter of the valve core 12E of the control valve 10E is not greater than 25 mm.

Most preferably, the outer diameters of the rotatable disk 122E and the fixed disk 121E of the plane valve 10E are not greater than 35 mm.

Preferably, the valve cavity 110E of the control valve 10E is arranged to be horizontal, so that the user can easily and manually operate the control valve 10E.

As shown in FIG.13A to FIG.21C, the control valve 10E of the faucet water softener according to the embodiment of the present invention has a first channel 101E, a second channel 102E, a third channel 103E, a fourth channel 104E, a fifth channel 105E, a sixth channel 106E, a seventh channel 107E, an eighth channel 108E and a raw water outlet channel 109E, wherein the first channel 101E, the third channel 103E, the seventh channel 107E, the eighth channel 108E, the second channel 102E and the raw water outlet channel 109E are respectively provided at the fixed disk 121E and respectively extend from the first fluid control surface 1210E of the fixed disk 121E; the fourth channel 104E, the fifth channel 105E and the sixth channel 106E are respectively provided at the rotatable disk 122E and extend from the second fluid control surface 1220E of the rotatable disk 122E, wherein the first channel 101E is communicated with the first opening 1101E, the third channel 103E is communicated with the third opening 1103E, the seventh channel 107E is communicated with the softened water inlet 1107E, the eighth channel 108E is communicated with the softened water outlet 1108E, the second channel 102E is communicated with the second opening 1102E, the raw water outlet channel 109E is communicated with the raw water outlet 1109E, the fourth channel 104E is communicated with the raw water inlet 1104E, and the sixth channel 106E is communicated with the draining opening 1106E, wherein when the plane valve 10E is in the softening working position, the fourth channel 104E of the plane valve 10E is communicated with the first channel 101E, thereby forming the first communicating passage 1001E communicated with the raw water inlet 1104E and the first opening 1101E respectively, the fifth channel 105E is communicated with the seventh channel 107E and the eighth channel 108E respectively, thereby forming the second communicating passage 1002E communicated with the softened water inlet 1107E and the softened water outlet 1108E respectively.

Preferably, the raw water inlet 1104E and the fourth channel 104E are respectively communicated with the valve cavity 110E of the valve body 11E.

More preferably, both the fifth channel 105E and the sixth channel 106E of the rotatable disk 122E are communicating blind holes.

The plane valve 10E further has a draining channel 1010E, wherein the draining channel 1010E is provided at the fixed disk 121E and extended from the first fluid control surface 1210E of the fixed disk 121E, the sixth channel 106E and the draining channel 1010E are communicated with each other, and the draining channel 1010E is further communicated with the draining opening 1106E.

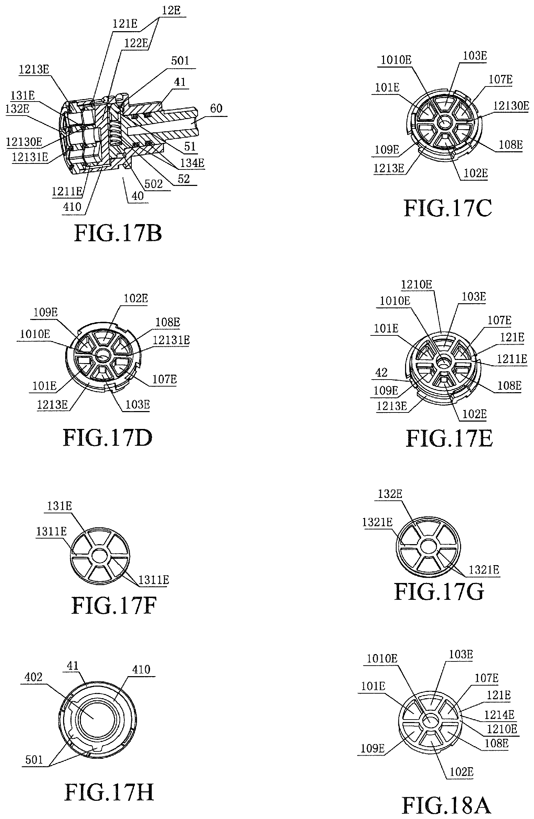

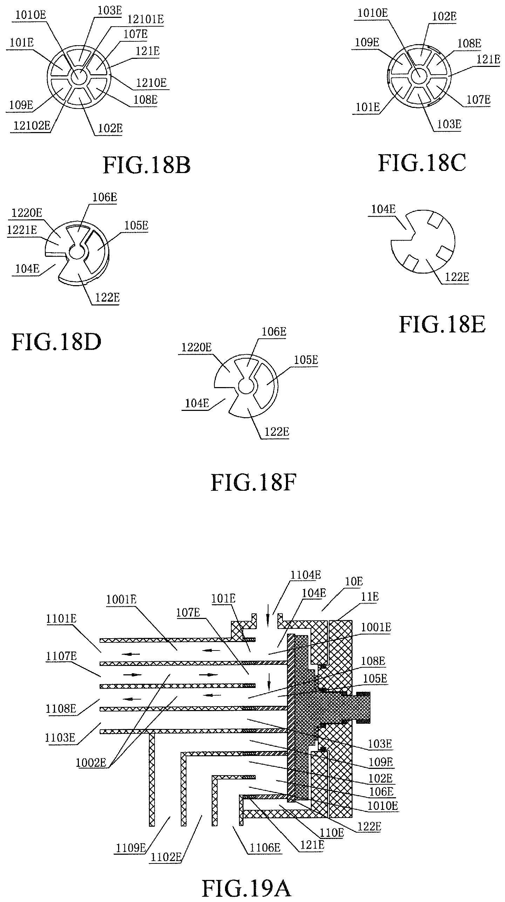

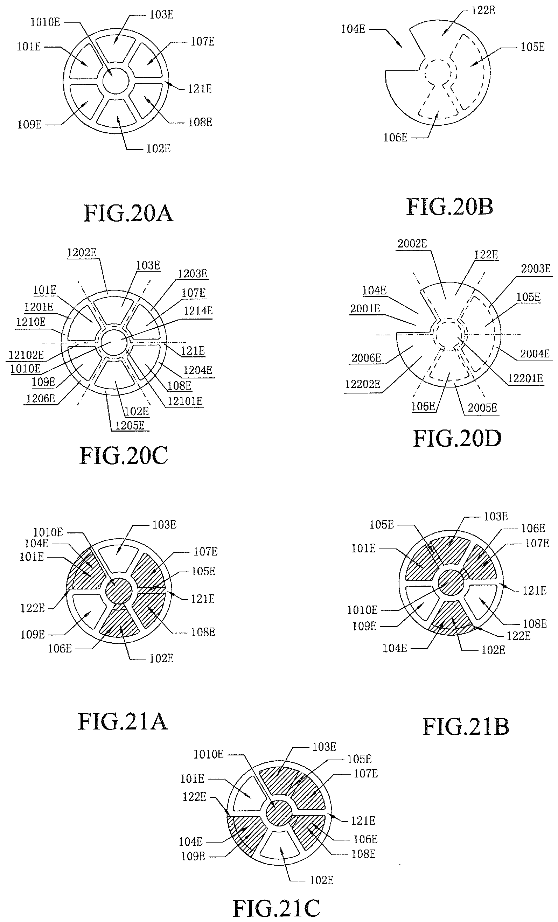

As shown in FIG.18A to FIG.18F and FIG.20A to FIG.20C, the first fluid control surface 1210E of the fixed disk 121E of the plane valve 10E of the faucet water softener according to the embodiment of the present invention defines an inner portion 12101E and an edge portion 12102E extended outward from the inner portion 12101E, wherein the draining channel 1010E of the plane valve 10E is arranged at the inner portion 12101E of the fixed disk 121E, the first channel 101E, the third channel 103E, the seventh channel 107E, the eighth channel 108E, the second channel 102E and the raw water outlet channel 109E are arranged clockwise at the edge portion 12102E of the first fluid control surface 1210E of the fixed disk 121E, in this order, and the fourth channel 104E, the fifth channel 105E and the sixth channel 106E of the plane valve 10E are arranged clockwise at the second fluid control surface 1220E of the rotatable disk 122E, in this order.

Alternatively, the first channel 101E, the third channel 103E, the seventh channel 107E, the eighth channel 108E, the second channel 102E and the raw water outlet channel 109E of the plane valve 10E are arranged counterclockwise at the edge portion 12102E of the first fluid control surface 1210E of the fixed disk 121E, in this order, and the fourth channel 104E, the fifth channel 105E and the sixth channel 106E of the plane valve 10E are counterclockwise are arranged at the second fluid control surface 1220E of the rotatable disk 122E, in this order.

in other words, the first channel 101E, the third channel 103E, the seventh channel 107E, the eighth channel 108E, the second channel 102E and the raw water outlet channel 109E of the plane valve 10E are arranged around the draining channel 1010E.

Preferably, the first channel 101E, the third channel 103E, the seventh channel 107E, the eighth channel 108E, the second channel 102E, the raw water outlet channel 109E and the draining channel 1010E of the plane valve 10E are spacedly arranged at the first fluid control surface 1210E of the fixed disk 121E of the plane valve 10E; the fourth channel 104E, the fifth channel 105E and the sixth channel 106E of the plane valve 10E are spacedly arranged at the second fluid control surface 1220E of the rotatable disk 122E.

As shown in FIG.21A, the rotatable disk 122E of the plane valve 10E of the faucet water softener according to the embodiment of the present invention can rotate relative to the fixed disk 121E, so that the plane valve 10E has a softening working position, wherein when the plane valve 10E is in the softening working position, the fourth channel 104E of the plane valve 10E is communicated with the first channel 101E, thereby forming the first communicating passage 1001E communicated respectively with the raw water inlet 1104E and the first opening 1101E respectively, the fifth channel 105E is communicated with the seventh channel 107E and the eighth channel 108E respectively, thereby forming the second communicating passage 1002E communicated respectively with the softened water inlet 1107E and the softened water outlet 1108E.

As shown in FIG. 21A, when the plane valve 10E is in the softening working position, the third channel 103E and the raw water outlet channel 109E are respectively blocked by the rotatable disk 122E.

As shown in FIG. 21B, the plane valve 10E of the faucet water softener according to the embodiment of the present invention further has a regenerating working position, wherein when the plane valve 10E is in the regeneration working position, the fourth channel 104E of the plane valve 10E is communicated with the second channel 102E, thereby forming the third communicating passage 1003E communicated respectively with the raw water inlet 1104E and the second opening 1102E, and the fifth channel 105E is communicated with the first channel 101E and the third channel 103E respectively, thereby forming the fourth communicating passage 1004E communicated respectively with the first opening 1101E and the third opening 1103E, and the sixth channel 106E is communicated with the seventh channel 107E and the draining channel 1010E respectively, thereby forming the fifth communicating passage 1005E communicated respectively with the softened water inlet 1107E and the draining opening 1106E.

As shown in FIG. 21B, when the plane valve 10E is in the regenerating working position, the eighth channel 108E and the raw water outlet channel 109E are respectively blocked by the rotatable disk 122E.

As shown in FIG.21C, the plane valve 10E of the faucet water softener according to the embodiment of the present invention further has a raw water supplying working position, wherein when the plane valve 10E is in the raw water supply working position, the fourth channel 104E of the plane valve 10E is communicated with the raw water outlet channel 109E, thereby forming the sixth communicating passage 1006E communicated respectively with the raw water inlet 1104E and the raw water outlet 1109E.

As shown in FIG.21C, when the plane valve 10E is in the raw water supply working position, the first channel 101E and the second channel 102E are blocked by the rotatable disk 122E respectively.

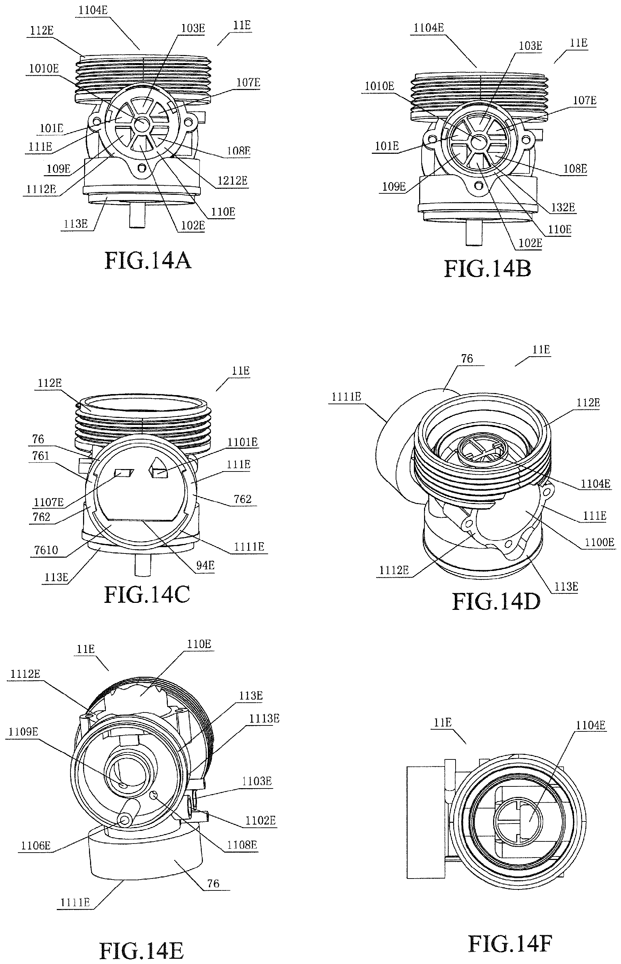

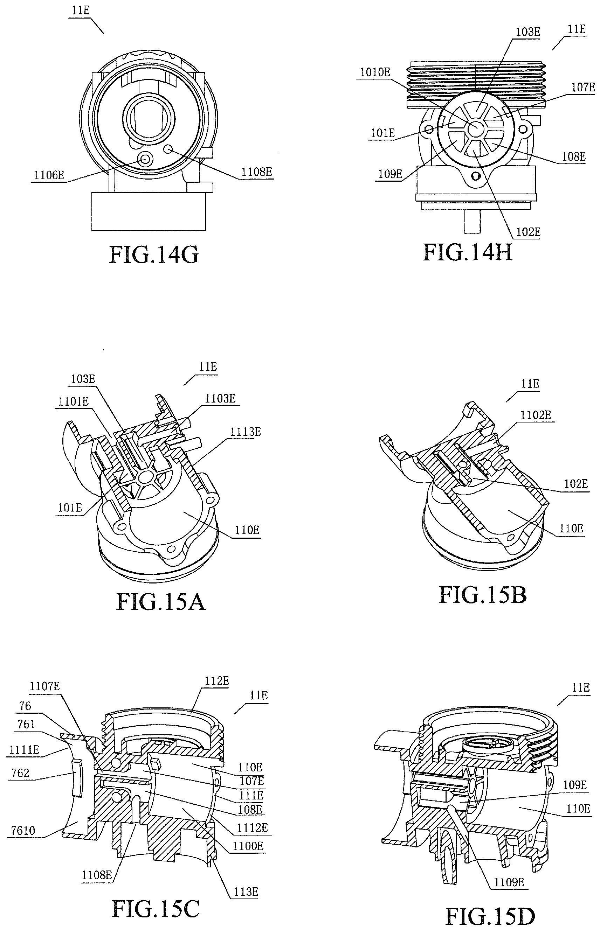

As shown in FIG.14A to FIG.15E, the valve body 11E of the faucet water softener according to the embodiment of the present invention includes a body portion 111E, an upper end 112E extended upward from the body portion 111E, and a lower end 113E extended downwardly from the body portion 111E, wherein the body portion 111E defines the valve cavity 110E.

Preferably, the fixed disk 121E is integrated with the inner wall of the body portion 111E.

As shown in FIG.14A to FIG.15E, the first opening 1101E and the softened water inlet 1107E of the valve body 11E of the faucet water softener according to the embodiment of the present invention are provided at the body portion 111E, and the raw water inlet 1104E is arranged at the upper end 112E of the valve body 11E, and the raw water inlet 1104E is communicated with the valve cavity 110E of the valve body 11E.

As shown in FIG.14A to FIG.15E, the softened water outlet 1108E and the raw water outlet 1109E of the valve body 11E of the faucet water softener according to the embodiment of the present invention are provided at the lower end 113E of the valve body 11E.

Preferably, the draining opening 1106E of the valve body 11E is provided at the lower end 113E of the valve body 11E.

As shown in FIG.14A to FIG.15E , the body portion 111E of the valve body 11E of the faucet water softener according to the embodiment of the present invention forms a first side 1111E, a second side 1112E and a third side 1113E, wherein the third side 1113E extended between the first side 1111E and the second side 1112E, the valve cavity 110E has a valve cavity opening 1100E, wherein the first opening 1101E and the softened water inlet 1107E are provided at the first side 1111E of the body portion 111E, the valve cavity opening 1100E is provided at the second side 1112E of the body portion 111E, the second opening 1102E and the third opening 1103E are provided on the third side 1113E of the body portion 111E.

The first opening 1101E and the softened water inlet 1107E are provided at the first side 1111E of the body portion 111E, the valve cavity opening 1100E is provided at the second side 1112E of the body portion 111E, the second opening 1102E and the third opening 1103E is provided at the third side 1113E of the body portion 111E, which not only facilitates the installation of the control valve 10E on the faucet, but also facilitates the connection between the control valve 10E and the water treatment device 1 and the user's manual operation of the control valve 10E.

As shown in FIG.14A to FIG.15E, further, the softened water outlet 1108E and the raw water outlet 1109E are spacedly defined at the lower end 113E of the valve body 11E.

Preferably, the softened water outlet 1108E, the raw water outlet 1109E and the draining opening 1106E are spacedly formed at the lower end 113E of the valve body 11E.

More preferably, the first side 1111E and the second side 1112E of the body portion 111E are disposed opposite to each other.

As shown in FIG.13C, the faucet water softener according to the embodiment of the present invention further includes a faucet connecting element 75, wherein the faucet connecting element 75 includes a connecting member 751 and a fastening member 752, wherein the connecting member 751 has a connecting end 7511 adapted to be connected to the faucet and an adapting end 7512 extended from the connecting end 7511, the fastening member 752 has a retaining end 7521 and a fastening end 7522 adapted to be fixedly connected to the upper end 112E, wherein the connecting member 751 forms a communicating cavity 7510 suitable for be communicated with the faucet and the raw water inlet 1104E of the valve body 11E, respectively, the retaining end 7521 of the fastening member 752 forms a socket opening 75210, the fastening end 7522 of the fastening member 752 forms a fastening cavity 75220 communicated with the socket opening 75210, wherein the inner diameter of the fastening cavity 75220 of the fastening member 752 is larger than the inner diameter of the socket opening 75210, and the outer diameter of the connecting end 7511 of the connecting member 751 is not larger than the inner diameter of the socket opening 75210 of the fastening member 752, and the outer diameter of the adapting end 7512 of the connecting member 751 is not larger than the inner diameter of the fastening cavity 75220 and is larger than the inner diameter of the socket opening 75210, so that when the connecting end 7511 of the connecting member 751 passes through the socket opening 75210 of the fastening member 752, the adapting end 7512 of the connecting member 751 can be retained in the fastening cavity 75220 of the fastening member 752.

Further, when the faucet connecting element 75 of the present invention is used to install the control valve 10E of the faucet water softener of the present invention at the faucet, can sleeve the retaining end 7521 of the fastening member 752 on the connecting end 7511 of the connecting member 751 and fix the connecting end 7511 at the faucet, and then fix the fastening member 752 at the upper end 112E of the valve body 11E through the fastening end 7522, so that the communicating cavity 7510 of the connecting member 751 is respectively communicated with the faucet and the raw water inlet 1104E of the valve body 11E.

Those skilled in the art can understand that the connecting end 7511 of the connecting member 751 of the faucet connecting element 75 of the present invention can make the raw water inlet 1104E of the control valve 10E of the faucet water softener of the present invention be installed or fixed at the faucet to be communicated with the faucet, by screwing, docking or any other convenient connection type.

Those skilled in the art can understand that the fastening end 7522 of the fastening member 752 of the faucet connecting element 75 of the present invention can make the raw water inlet 1104E of the control valve 10E of the faucet water softener of the present invention be installed or fixed at the upper end 112E of the valve body 11E to be communicated with the faucet, by screwing, docking or any other convenient connection type.

Those skilled in the art can understand that a sealing gasket or sealing ring is provided between the connecting end 7511 of the connecting member 751 of the connecting element 75 of the present invention and the faucet, and a sealing gasket or sealing ring is provided between the adapting end 7512 of the connecting member 751 of the connecting element 75 of the present invention and the upper end 112E of the valve body 11E, to prevent water leakage.

As shown in FIG.1, FIG.8A to FIG.8B and FIG.10 , the faucet water softener according to the embodiment of the present invention further includes a first hose connector 771 and a second hose connector 772, wherein the first hose connector 771 and the second hose connector 772 are respectively fixed at two ends of the first hose 31, wherein the first hose connector 771 and the second hose connector 772 are configured to be connected and fixed to the water treatment device 1 and the control valve 10E, so that the first hose 31 is disposed between the water treatment device 1 and the control valve 10E.

In other words, when the two ends of the first hose 31 of the faucet water softener of the present invention are respectively communicated with the first communicating opening 301 of the water treatment device 1 and the first opening 1101E of the control valve 10E, the first hose connector 771 and the second hose connector 772 can be connected and fixed to the water treatment device 1 and the control valve 10E to maintain the communication between the first hose 31 and the first communicating opening 301 of the water treatment device 1 and the communication between the first hose 31 and the first opening 1101E of the control valve 10E and prevent the first hose 31 from falling off.

It can be understood that the first hose connector 771 and the second hose connector 772 can be any existing ones that can keep both two ends of the first hose 31 be communicated with the first communicating opening 301 of the water treatment device 1 and the first opening 1101E of the control valve 10E, respectively.

Preferably, the first hose connector 771 and the second hose connector 772 of the faucet water softener of the present invention are quick-plug joints.

Correspondingly, the first hose connector 771 and the second hose connector 772 can be any existing quick-connect connectors that can be quickly connected between the water treatment device 1 and the control valve 10E.

More preferably, the structures of the first hose connector 771 and the second hose connector 772 of the faucet water softener of the present invention are the same.

Alternatively, the structures of the first hose connector 771 and the second hose connector 772 of the faucet water softener of the present invention are different.

Most preferably, the first hose connector 771 and the second hose connector 772 of the faucet water softener of the present invention are both 1/4 inch quick-connect joints.

It is worth mentioning that, in some embodiments, the first hose connector 771 and the second hose connector 772 are simple connection mechanisms to help the two ends of the first hose 31 to be connected and fixed to the water treatment device 1 and the control valve 10E.

At this time, the first hose connector 771 and the second hose connector 772 do not participate in the communication between the first communicating opening 301 of the water treatment device 1 and the first opening 1101E of the control valve 10E, only serve to connect and fix and seal the two ends of the first hose 31 in corresponding positions.

However, in other embodiments, the first hose connector 771 and the second hose connector 772 play a transition role, and both two ends of the first hose 31 are respectively fixed to the first hose connector 771 and the second hose connector 772, and the first hose connector 771 is communicated with the first hose 31 and the first communicating opening 301 of the water treatment device 1 respectively, and the second hose connector 772 is respectively communicated with the first hose 31 and the first opening 1101E of the control valve 10E.

In other words, the first hose connector 771 and the second hose connector 772 also play a transition role while helping the two ends of the first hose 31 to be connected and fixed in corresponding positions.

As shown in FIG.1, FIG.8A to FIG.8B and FIG.10 , the faucet water softener according to the embodiment of the present invention further includes a third hose connector 773 and a fourth hose connector 774, wherein two ends of the second hose 32 are fixed at the third hose connector 773 and the fourth hose connector 774, respectively, wherein the third hose connector 773 and the fourth hose connector 774 are configured to be connected and fixed to the water treatment device 1 and the control valve 10E, so that the second hose 32 is disposed between the water treatment device 1 and the control valve 10E.

In other words, when the two ends of the second hose 32 of the faucet water softener of the present invention are respectively communicated with the second communicating opening 302 of the water treatment device 1 and the softened water inlet 1107E of the control valve 10E, the third hose connector 773 and the fourth hose connector 774 can be connected and fixed to the water treatment device 1 and the control valve 10E to maintain the communication between the second hose 32 and the second communicating opening 302 of the water treatment device 1 and the communication between the second hose 32 and the softened water inlet 1107E of the control valve 10E and prevent the second hose 32 from falling off.

It is worth mentioning that, in some embodiments, the third hose connector 773 and the fourth hose connector 774 do not participate in the communication between the second communicating opening 302 of the water treatment device 1 and the softened water inlet 1107E of the control valve 10E, only serve to connect and fix and seal the two ends of the second hose 32 in corresponding positions.

However, in other embodiments, the third hose connector 773 and the fourth hose connector 774 also play a transition role while helping the two ends of the second hose 32 to be connected and fixed in corresponding positions.

In other words, both two ends of the second hose 32 are respectively fixed to the third hose connector 773 and the fourth hose connector 774, and the third hose connector 773 is communicated with the second hose 32 and the second communicating opening 302 of the water treatment device 1 respectively, and the fourth hose connector 774 is respectively communicated with the second hose 32 and the softened water inlet 1107E of the control valve 10E.

As shown in FIG.1, FIG.8A to FIG.8B and FIG.10, preferably, the faucet water softener according to the embodiment of the present invention further includes a transition connector 770, wherein one end of the transition connector 770 is configured to be suitable for be connected with the second hose connector 772 and the fourth hose connector 774 (if any).

Further, the transition connector 770 forms a first transition channel 7701 and a second transition channel 7702, wherein the first transition channel 7701 is adapted to be communicated with the first hose 31 and the first opening 1101E of the control valve 10E, respectively, and the second transition channel 7702 is adapted to be communicated with the second hose 32 and the softened water inlet 1107E of the control valve 10E, respectively.

As shown in FIG.13C, FIG.14C and 15C, the faucet water softener according to the embodiment of the present invention further includes a filter connecting member 76, wherein the filter connecting member 76 includes a sleeving portion 761 disposed at the first side 1111E of the valve body 11E, wherein the sleeving portion 761 forms a sleeving cavity 7610, wherein the sleeving portion 761 is provided around the first opening 1101E and the softened water inlet 1107E.

Further, the faucet water softener further includes a flow deflector 90, and the flow deflector 90 is adapted to be arranged in the sleeving cavity 7610, so that the flow deflector 90 is arranged between the transition connector 770 and the first side 1111E of the body portion 111E of the valve body 11E.

Those skilled in the art can understand that when the control valve 10E of the faucet water softener of the present invention and the water treatment device 1 are connected with each other through the first hose 31 and the second hose 32 (if any), the first hose connector 771, the second hose connector 772, the third hose connector 773 and the fourth hose connector 774 (if any), the transition connector 770 is sleeved within the sleeving portion 761 through the sleeving cavity 7610, such that the first communicating opening 301 and the second communicating opening 302 of the water treatment device 1 are directly communicated with the first opening 1101E and the softened water inlet 1107E of the valve body 11E through the first hose 31 and the second hose 32 (if any), the first hose connector 771, the second hose connector 772, the third hose connector 773, and the fourth hose connector 774 (if any), or by the flow deflector 90 .

Those skilled in the art can understand that the first hose connector 771, the second hose connector 772, the third hose connector 773 and the fourth hose connector 774 of the faucet water softener of the present invention can be installed or fixed on the valve body 11E and the water treatment device 1 of the faucet water softener of the present invention by screwing, docking and any other connection methods respectively, which can be convenient to make the first opening 1101E and the softened water inlet 1107E of the valve body 11E of the faucet water softener of the present invention be communicated with the first communicating opening 301 and the second communicating opening 302 of the water treatment device 1, respectively.

As shown in FIG.13C, FIG.14C and FIG. 15C, the filter connecting member 76 of the faucet water softener according to the embodiment of the present invention further includes at least one first fastening portion 762, wherein the first fastening portion 762 is provided at the sleeving portion 761, so that the sleeving portion 761 is tightly connected with the transition connector 770.

Those skilled in the art can understand that the first fastening portion 762 of the filter connecting member 76 can be a snap-fit structure for snapping the sleeving portion 761 and the transition connector 770 together, or can be a threaded structure for enable the sleeving portion 761 and the transition connector 770 to be screwed together, or other connection methods.

As shown in FIG.10, FIG.13C, FIG.14C and FIG.16B to FIG.16D, the flow deflector 90 of the faucet water softener according to the embodiment of the present invention is disposed between the transition connector 770 and the valve body 11E of the plane valve 10E, wherein the flow deflector 90 has a first flow guiding hole 901 and a second flow guiding hole 902, wherein the first flow guiding hole 901 has a first flow guiding port 9011 and a second flow guiding port 9012, the second flow guiding hole 902 has a third flow guiding port 9021 and a fourth flow guiding port 9022, wherein the flow deflector 90 further has a first side surface 91 and a second side surface 92, wherein the first flow guiding port 9011 and the third flow guiding port 9021 are provided at the first side surface 91 of the flow deflector 90, the second flow guiding port 9012 and the fourth flow guiding port 9022 are provided at the second side surface 92 of the flow deflector 90, wherein the first side surface 91 of the flow deflector 90 is disposed to face the valve body 11E, the second side surface 92 is disposed to face the transition connector 770.

Accordingly, the first flow guiding port 9011 is disposed to be adapted to be communicated with the first opening 1101E of the valve body 11E, the third flow guiding port 9021 is disposed to be adapted to be communicated with the softened water inlet 1107E, the second flow guiding port 9012 is disposed to be adapted to be communicated with the first communicating opening 301 of the water treatment device 1, the fourth flow guiding port 9022 is disposed to be adapted to be communicated with the second communicating opening 302.

Further, the first flow guiding port 9011 is disposed to be adapted to be communicated with the first opening 1101E of the valve body 11E, the third flow guiding port 9021 is disposed to be adapted to be communicated with the softened water inlet 1107E, the second flow guiding port 9012 is disposed to be adapted to be communicated with the first transition channel 7701 of the transition connector 770, the fourth flow guiding port 9022 is disposed to be adapted to be communicated with the second transition channel 7702 of the transition connector 770.

In other words, the first flow guiding hole 901 of the flow deflector 90 is communicated with the first opening 1101E and the first transition channel 7701 of the transition connector 770, respectively, the second flow guiding hole 902 is communicated with the softened water inlet 1107E and the second transition channel 7702 of the transition connector 770, respectively.

In other words, the first flow guiding hole 901 of the flow deflector 90 is communicated with the first opening 1101E and the second hose connector 772, respectively, the second flow guiding hole 902 is communicated with the softened water inlet 1107E and the fourth hose connector 774, respectively.

Preferably, the flow deflector 90 is made of sealing material, so as to be water sealedly provided between the transition connector 770 and the control valve 10E, and play a role of water sealedly sealing the connection between the transition connector 770 and the valve body 11E of the control valve 10E.

It can be understood that the first transition channel 7701 can be communicated with the first opening 1101E of the control valve 10E through the first flow guiding hole 901 of the flow deflector 90, and the second transition channel 7702 can be communicated with the softened water inlet 1107E of the control valve 10E through the second flow guiding hole 902 of the flow deflector 90.

As shown in FIG. 10, FIG. 13C, FIG.14C and FIG.16B to FIG.16D, the flow deflector 90 of the faucet water softener according to the embodiment of the present invention further comprises a positioning protrusion 93, wherein the positioning protrusion 93 is preferably disposed at the first side surface 91, wherein the positioning protrusion 93 is disposed to engage with the positioning groove 94E provided at the valve body 11E, so as to help the flow deflector 90 to be correctly disposed between the valve body 11E of the control valve 10E and the transition connector 770.

It can be understood that when the positioning protrusion 93 of the flow deflector 90 is correctly engaged with the positioning groove 94E provided in the valve body 11E, the first flow guiding port 9011 and the first opening 1101E of the valve body 11E are communicated with each other, the third flow guiding port 9021 is communicated with the softened water inlet 1107E, the second flow guiding port 9012 is communicated with the first transition channel 7701 of the transition connector 770, and the fourth flow guiding port 9022 is communicated with the second transition channel 7702 of the transition connector 770.

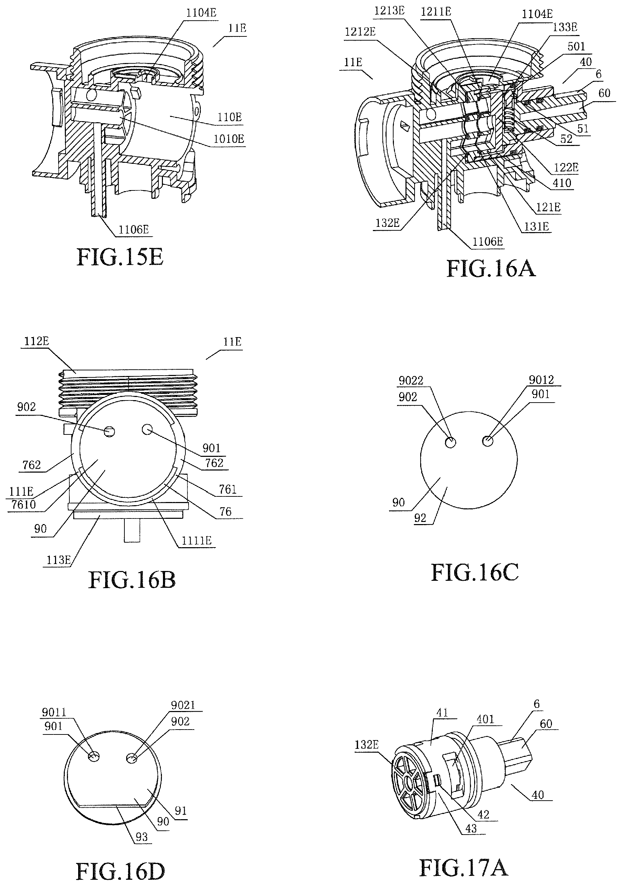

As shown in FIG.17Ato FIG.18F, the fixed disk 121E of the valve core 12E of the plane valve 10E of the faucet water softener according to the embodiment of the present invention comprises an upper end portion 1211E, a lower end portion 1212E and a fixing portion 1213E provided between the upper end portion 1211E and the lower end portion 1212E, wherein the upper end portion 1211E defines the first fluid control surface 1210E of the fixed disk 121E, and the lower end portion 1212E is disposed at the valve cavity 110E of the valve body 11E.

Preferably, the lower end portion 1212E of the fixed disk 121E of the valve core 12E of the plane valve 10E of the faucet water softener of the present invention is integrally provided at the inner wall of the valve body 11E of the plane valve 10E.

As shown in FIG.13C, FIG.16A and FIG.17A to FIG.17B, the plane valve 10E of the faucet water softener according to the embodiment of the present invention further comprises a fixing device 40, wherein the fixing device 40 comprises a fixing holder 41, a first clamping connector 42 and a second clamping connector 43, wherein the fixing holder 41 of the fixing device 40 has an accommodation chamber 410 and at least one water inlet opening 401, wherein the water inlet opening 401 is communicated with the raw water inlet 1104E of the valve body 11E and the accommodation chamber 410 respectively, wherein the first clamping connector 42 is disposed at the fixing portion 1213E of the fixed disk 121E, the second clamping connector 43 is disposed at the fixing holder 41, wherein the first clamping connector 42 and the second clamping connector 43 are disposed to be adapted to be clamped together, so that the fixing portion 1213E of the fixed disk 121E can be fixed at the fixing holder 41 through the first clamping connector 42 and the second clamping connector 43.

Further, the water inlet opening 401 of the fixing holder 41 and the raw water inlet 1104E are both communicated with the valve cavity 110E of the valve body 11E, so that the accommodation chamber 410 of the fixing holder 41 is communicated with the raw water inlet 1104E of the valve body 11E through the water inlet opening 401 and the valve cavity 110E of the valve body 11E, and the faucet water can flow into the accommodation chamber 410 of the fixing holder 41 through the raw water inlet 1104E of the valve body 11E.

As shown in FIG.13C, FIG.16A and FIG.17A to FIG.17B, the accommodation chamber 410 of the fixing holder 41 of the fixing device 40 of the faucet water softener according to the embodiment of the present invention is disposed to be adapted to accommodate the upper end portion 1211E of the fixed disk 121E and the rotatable disk 122E inside the accommodation chamber 410, the fourth channel 104E of the plane valve 10E is disposed to communicate with the accommodation chamber 410 of the fixing holder 41, so that the faucet water can be provided to the fourth channel 104E of the plane valve 10E through the water inlet opening 401 and the accommodation chamber 410 of the fixing holder 41.

In other words, the fourth channel 104E of the plane valve 10E is communicated with the raw water inlet 1104E of the valve body 11E through the accommodation chamber 410 of the fixing holder 41, the water inlet opening 401 and the valve cavity 110E of the valve body 11E.

As shown in FIG.13C, FIG.16A and FIG.17A to FIG.17B, further, the upper end portion 1211E of the fixed disk 121E is adapted to be detachably clamped at the fixing portion 1213E of the fixed disk 121E, the fixing portion 1213E of the fixed disk 121E is adapted to be detachably clamped at the lower end portion 1212E of the fixed disk 121E, so that the upper end portion 1211E of the fixed disk 121E cannot rotate relative to the fixing portion 1213E, the fixing portion 1213E of the fixed disk 121E cannot rotate relative to the lower end portion 1212E.

It is worth mentioning that the upper end portion 1211E of the fixed disk 121E of the valve core 12E of the plane valve 10E of the faucet water softener of the present invention is detachably clamped at the fixing portion 1213E of the fixed disk 121E, the fixing portion 1213E of the fixed disk 121E is detachably clamped at the lower end portion 1212E of the fixed disk 121E, and the upper end portion 1211E of the fixed disk 121E and the rotatable disk 122E are accommodated inside the accommodation chamber 410 of the fixing holder 41, so that the upper end portion 1211E and the fixing portion 1213E of the fixed disk 121E and the rotatable disk 122E can be integrated together through the fixing holder 41, the first clamping connector 42 and the second clamping connector 43 of the fixing device 40.

Especially, since the upper end portion 1211E of the fixed disk 121E defines the first fluid control surface 1210E of the fixed disk 121E, and the upper end portion 1211E of the fixed disk 121E is detachably clamped at the fixing portion 1213E of the fixed disk 121E, so that the upper end portion 1211E can be manufactured separately and the side surface of the upper end portion 1211E facing the rotatable disk 122E can be easily processed, such as being polished smooth, to form the first fluid control surface 1210E.

However, if the fixed disk 121E of the valve core 12E of the plane valve 10E of the faucet water softener of the present invention is fixedly disposed at the valve body 11E, or the fixed disk 121E of the valve core 12E of the plane valve 10E is integrated with the valve body 11E, the side surface of the upper end portion 1211E of the fixed disk 121E of the valve core 12E of the plane valve 10E, which faces the rotatable disk 122E, is difficult to be processed and obtain the first fluid control surface 1210E.

As shown in FIG.13C, FIG.16A and FIG.17A to FIG.17B, the first clamping connector 42 of the fixing device 40 of the control valve 10E of the faucet water softener according to the embodiment of the present invention comprises a plurality of hooks disposed at the side wall of the fixing portion 1213E of the fixed disk 121E, the second clamping connector 43 has a plurality of clamping concave grooves 430, wherein the hooks 421 of the first clamping connector 42 are adapted to engage with the clamping concave grooves 430 of the second clamping connector 43 together, so that the first clamping connector 42 is clamped with the second clamping connector 43.

Alternatively, the first clamping connector 42 has a plurality of clamping concave grooves 430 provided at the side wall of the fixing portion 1213E of the fixed disk 121E, the second clamping connector 43 has a plurality of hooks 421 disposed at the fixing holder 41, wherein the hooks 421 of the second clamping connector 43 are adapted to engage with the clamping concave grooves 430 of the first clamping connector 42.

In other words, the hooks 421 of the fixing device 40 are disposed at the fixing holder 41, and the clamping concave grooves 430 are disposed at the side wall of the fixing portion 1213E of the fixed disk 121E.

Further, the fixing device 40 is provided with a set of guiding grooves 400 and a set of guiding members 45, wherein the guiding grooves 400 are disposed at the side wall of the fixing portion 1213E of the fixed disk 121E respectively, the guiding members 45 are disposed at the second clamping connector 43 and extend from the second clamping connector 43, wherein the guiding members 45 are disposed directly facing the clamping concave grooves 430 respectively, and the width of the guiding member 45 is not greater than the width of the guiding groove 400, so that the first clamping connector 42 and the second clamping connector 43 can be clamped together under the guidance of the guiding grooves 400 and the guiding members 45.

As shown in FIG.13C, FIG.16A and FIG.17A to FIG.17B, the plane valve 10E of the faucet water softener according to the embodiment of the present invention further comprises a driving assembly 6, wherein the driving assembly 6 is disposed for driving the rotatable disk 122E of the plane valve 10E to rotate relative to the fixed disk 121E.

As shown in FIG.13C, FIG.16A and FIG.17A to FIG.17B, exemplarily, the driving assembly 6 comprises a valve rod 60, the fixing holder 41 further comprises an operation opening 402, wherein the operation opening 402 is communicated with the accommodation chamber 410 of the fixing holder 41, wherein the valve rod 60 has a driving end 61 and an operating end 62 extended from the driving end 61, wherein the driving end 61 of the valve rod 60 is disposed inside the accommodation chamber 410 of the fixing holder 41, the operating end 62 of the valve rod 60 is extended from the driving end 61 and crosses out the accommodation chamber 410 of the fixing holder 41 through the operation opening 402 of the fixing holder 41.

Accordingly, when the operating end 62 of the valve rod 60 is operated to rotate, the driving end 61 is driven to rotate and further drives the rotatable disk 122E to rotate, so that the plane valve 10E is controlled to under the corresponding working position.

Accordingly, the upper end portion 1211E and the fixing portion 1213E of the fixed disk 121E, the rotatable disk 122E and the valve rod 60 can be integrated together through the fixing holder 41, the first clamping connector 42 and the second clamping connector 43 of the fixing device 40, so as to reduce the manufacturing difficulty of the fixed disk 121E, and reduce the difficulty of assembling the upper end portion 1211E and the fixing portion 1213E of the fixed disk 121E, the rotatable disk 122E and the valve rod 60 into the valve cavity 110E of the valve body 11E.

It is appreciated that the way of integrating the upper end portion 1211E and the fixing portion 1213E of the fixed disk 121E, the rotatable disk 122E and the valve rod 60 together through the fixing holder 41, the first clamping connector 42 and the second clamping connector 43 of the fixing device 40 also makes the upper end portion 1211E and the fixing portion 1213E of the fixed disk 121E, the rotatable disk 122E and the valve rod 60 more convenient for the automated assembly and production of the plane valve 10E.

Further, the outer diameter of the driving end 61 of the valve rod 60 is smaller than the inner diameter of the accommodation chamber 410 of the fixing holder 41 and greater than the inner diameter of the operation opening 402 of the fixing holder 41, the outer diameter of the operating end 62 of the valve rod 60 is smaller than the inner diameter of operation opening 402 of the fixing holder 41, so that the fixing holder 41 can be can be pressed against the driving end 61 of the valve rod 60 under the action of external force, and the rotatable disk 122E can be pressed against the upper end portion 1211E of the fixed disk 121E under the action of the driving end 61 of the valve rod 60, and the second fluid control surface 1220E of the rotatable disk 122E is disposed at the first fluid control surface 1210E of the fixed disk 121E.

It is appreciated that the driving assembly 6 can be any mechanism or component for driving the rotatable disk 122E of the plane valve 10E to rotate relative to the fixed disk 121E.

Exemplarily, the driving assembly 6 also can be a gear set for driving the rotatable disk 122E of the plane valve 10E to rotate relative to the fixed disk 121E, wherein the gear set comprises a driving gear and driven cogs disposed at the side wall of the rotatable disk 122E, the driving gear is engaged with and driven cogs of the rotatable disk 122E, so that the users or the operators can drive the rotatable disk 122E to rotate relative to the fixed disk 121E by rotating the driving gear.

Exemplarily, the driving assembly 6 also comprises a driving rod disposed at the rotatable disk 122E of the plane valve 10E and paralleled with the second fluid control surface 1220E of the rotatable disk 122E, and the users can drive the rotatable disk 122E to rotate relative to the fixed disk 121E by driving the driving rod of the driving assembly 6.

Referring to FIG.13C, the fixing device 40 of the faucet water softener according to the embodiment of the present invention further comprises a fixing member 44, wherein the fixing member 44 is disposed pressing against the fixing holder 41, and the fixing member 44 is disposed to be adapted to be fixed at the valve body 11E of the plane valve 10E.

Accordingly, the fixing holder 41 is held inside the valve cavity 110E of the valve body 11E through the fixing member 44.

As shown in FIG. 13C, FIG.16A, FIG.17B and FIG.17H, the control valve 10E of the faucet water softener according to the embodiment of the present invention further comprises a positioning assembly 50, wherein the positioning assembly 50 has a restricting element 51, a resetting element 52 disposed at the restricting element 51, a plurality of cambered restricting grooves 501 disposed at the inner wall of the fixing holder 41 and an operation chamber 502 disposed at the driving end 61 of the valve rod 60, wherein the restricting element 51 and the resetting element 52 are both disposed inside the operation chamber 502, and the resetting element 52 is disposed between the restricting element 51 and the driving end 61, so that when the driving end 61 of the valve rod 60 is rotated and the restricting element 51 directly faces the restricting grooves 501, the restricting element 51 can move into the restricting grooves 501 under the action of the resetting force (or elastic force) of the resetting element 52; at this time, when the driving end 61 of the valve rod 60 continues to be rotated to make the fixing holder 41 press the restricting element 51 and further to make the restricting element 51 retract into the operation chamber 502, the driving end 61 of the valve rod 60 can be easily rotated and the restricting element 51 is kept retracted inside the operation chamber 502 under the pressure of the fixing holder 41.

It is appreciated that when the driving end 61 of the valve rod 60 is rotated to make the restricting element 51 directly facing the restricting grooves 501 and further to make the restricting element 51 to move into the restricting grooves 501, the plane valve 10E is maintained under a corresponding working position, and the faucet water softener of the present invention is under a corresponding working state.

It should be understood that the resetting element 52 is a resetting spring.

Alternatively, the resetting element 52 is a resetting elastic piece.

Preferably, the restricting element 51 is disposed to be engaged with the restricting grooves 501, so that the restricting element 51 can be stably held inside the restricting grooves 501 when there is no appropriate external force to drive the valve rod 60 to rotate.

As shown in FIG.13C, FIG.16A and FIG.17A to FIG.17G, the plane valve 10E of the faucet water softener according to the embodiment of the present invention further comprises a sealing assembly 13E, wherein the sealing assembly 13E has a first seal 131E, wherein the first seal 131E is disposed between the upper end portion 1211E and the fixing portion 1213E of the fixed disk 121E.

Further, the first seal 131E is provided with a plurality of first sealing strips 1311E, the fixing portion 1213E of the fixed disk 121E is provided with a set of first sealing grooves 12130E, wherein the first sealing grooves 12130E are disposed to respectively surround the first channel 101E, the third channel 103E, the seventh channel 107E, the eighth channel 108E, the second channel 102E, the raw water outlet channel 109E and the draining channel 1010E of the fixed disk 121E, the first sealing strips 1311E of the first seal 131E are disposed according to the first sealing grooves 12130E of the fixing portion 1213E, so that the first sealing strips 1311E of the first seal 131E can be engaged with the first sealing grooves 12130E of the fixing portion 1213E and realizes the sealing between the upper end portion 1211E and the fixing portion 1213E of the fixed disk 121E.

It is appreciated that the first sealing grooves 12130E are defined at one side of the fixing portion 1213E facing the upper end portion 1211E.

Further, the sealing assembly 13E is provided with a second seal 132E, wherein the second seal 132E is disposed between the fixing portion 1213E and the lower end portion 1212E of the fixed disk 121E.

Further, the second seal 132E has a plurality of second sealing strips 1321E, the fixing portion 1213E of the fixed disk 121E has a plurality of second sealing grooves 12131E, wherein the second sealing grooves 12131E are disposed to respectively surround the first channel 101E, the third channel 103E, the seventh channel 107E, the eighth channel 108E, the second channel 102E, the raw water outlet channel 109E and the draining channel 1010E of the fixed disk 121E, the second sealing strips 1321E of the second seal 132E are disposed according to the second sealing grooves 12131E of the fixing portion 1213E, so that the second sealing strips 1321E of the second seal 132E can be engaged with the second sealing grooves 12131E of the fixing portion 1213E and realizes the sealing between the lower end portion 1212E and the fixing portion 1213E of the fixed disk 121E.

It is appreciated that the second sealing grooves 12131E are defined at a side of the fixing portion 1213E facing the lower end portion 1212E.

As shown in FIG.13C, FIG.16A and FIG.17A to FIG.17G, the sealing assembly 13E of the control valve 10E of the faucet water softener according to the embodiment of the present invention further comprises at least one first sealing ring 133E, wherein the first sealing ring 133E is disposed at the outer surface of the fixing holder 41, so as to realize the sealing between the fixing holder 41 and the inner wall of the valve body 11E and prevent the water from flowing out between the fixing holder 41 and the inner wall of the valve body 11E.

Further, the sealing assembly 13E comprises at least one second sealing ring 134E, wherein the second sealing ring 134E is disposed between the valve rod 60 and the fixing holder 41, so as to realize the sealing between the valve rod 60 and the inner wall of the fixing holder 41 and prevent the water from flowing out between the valve rod 60 and the inner wall of the fixing holder 41.

As shown in FIG.13C, the control valve 10E of the faucet water softener according to the embodiment of the present invention further comprises a knob 80, wherein the knob 80 is disposed at the operating end 62 of the valve rod 60, so that the users can rotate the valve rod 60 to rotate the rotatable disk 122E and control the plane valve 10E to be under the corresponding working position.

As shown in FIG.18A to FIG.21C, the first fluid control surface 1210E of the fixed disk 121E of the plane valve 10E of the faucet water softener according to the embodiment of the present invention has an inner portion 12101E and an edge portion 12102E extended outward from the inner portion 12101E, which are shown by the dashed lines, wherein the inner portion 12101E and the edge portion 12102E are provided at a top end portion 1214E of the fixed disk 121E, and the edge portion 12102E (or the part other than the inner portion 12101E) of the first fluid control surface 1210E are equally divided into a first portion 1201E, a second portion 1202E, a third portion 1203E, a fourth portion 1204E, a fifth portion 1205E and a sixth portion 1206E, which are shown by the dashed lines, the second fluid control surface 1220E of the rotatable disk 122E of the plane valve 10E has an inner region 12201E and an edge region 12202E extended outward from the inner region 12201E, which are shown by the dashed lines, wherein the inner region 12201E and the edge region 12202E are provided at a bottom end portion 1221E of the rotatable disk 122E, and the edge region 12202E (or the part other than the inner region 12201E) of the second fluid control surface 1220E are equally divided into a first region 2001E, a second region 2002E, a third region 2003E, a fourth region 2004E, a fifth region 2005E and a sixth region 2006E, which are shown by the dashed lines, wherein the first channel 101E is extended downward from the first portion 1201E of the first fluid control surface 1210E of the fixed disk 121E, the third channel 103E is extended downward from the second portion 1202E of the first fluid control surface 1210E of the fixed disk 121E, the seventh channel 107E is extended downward from the third portion 1203E of the first fluid control surface 1210E of the fixed disk 121E, the eighth channel 108E is extended downward from the fourth portion 1204E of the first fluid control surface 1210E of the fixed disk 121E, the second channel 102E is extended downward from the fifth portion 1205E of the first fluid control surface 1210E of the fixed disk 121E, the raw water outlet channel 109E is extended downward from the sixth portion 1206E of the first fluid control surface 1210E of the fixed disk 121E, the fourth channel 104E is extended upward from the first region 2001E of the second fluid control surface 1220E of the rotatable disk 122E, the fifth channel 105E is extended upward from the third region 2003E and the fourth region 2004E of the second fluid control surface 1220E of the rotatable disk 122E, the sixth channel 106E is extended upward from the fifth region 2005E and the inner region 12201E of the second fluid control surface 1220E of the rotatable disk 122E, the draining channel 1010E is extended downward from the inner portion 12101E of the first fluid control surface 1210E of the fixed disk 121E.

As shown in FIG.20C and FIG.21D, preferably, the edge portion 12102E of the first fluid control surface 1210E are equally divided clockwise into the first portion 1201E, the second portion 1202E, the third portion 1203E, the fourth portion 1204E, the fifth portion 1205E and the sixth portion 1206E, the edge region 12202E of the second fluid control surface 1220E of the rotatable disk 122E of the plane valve 10E are equally divided clockwise into the first region 2001E, the second region 2002E, the third region 2003E, the fourth region 2004E, the fifth region 2005E and the sixth region 2006E.

In other words, the first fluid control surface 1210E of the fixed disk 121E of the plane valve 10E defines six equal divisions, and the second fluid control surface 1220E of the rotatable disk 122E of the plane valve 10E defines six equal divisions, wherein when the rotatable disk 122E of the plane valve 10E is rotated until the first equal division (the first region 2001E) of the second fluid control surface 1220E of the rotatable disk 122E directly faces the first equal division (the first portion 1201E) of the first fluid control surface 1210E of the fixed disk 121E, the third equal division (the third region 2003E) and the fourth equal division (the fourth region 2004E) of the second fluid control surface 1220E of the rotatable disk 122E of the plane valve 10E directly faces the third equal division (the third portion 1203E) and the fourth equal division (the fourth portion 1204E) of the first fluid control surface 1210E of the fixed disk 121E, the fifth equal division (the fifth region 2005E) of the second fluid control surface 1220E of the rotatable disk 122E directly faces the fifth equal division (the fifth portion 1205E) of the first fluid control surface 1210E of the fixed disk 121E, so that the fourth channel 104E of the plane valve 10E is communicated with the first channel 101E, the fifth channel 105E is communicated with the seventh channel 107E and the eighth channel 108E, and the sixth channel 106E is communicated with the second channel 102E and the draining channel 1010E respectively, so as to allow the faucet water to flow into the water treatment device 1 through the raw water inlet 1104E, the fourth channel 104E, the first channel 101E, the first opening 1101E and the first communicating opening 301 of the water treatment device 1, and the softened water after softening treatment of the water treatment device 1 flows out from the second communicating opening 302 of the water treatment device 1, and then flows out and is supplied to the user through the softened water inlet 1107E, the seventh channel 107E, the fifth channel 105E, the eighth channel 108E and the softened water outlet 1108E. Accordingly, the faucet water softener is at the softening working position.

Further, when the rotatable disk 122E of the plane valve 10E is rotated until the first equal division (the first region 2001E) of the second fluid control surface 1220E of the rotatable disk 122E directly faces the sixth equal division (the sixth portion 1206E) of the first fluid control surface 1210E of the fixed disk 121E, the third equal division (the third region 2003E) and the fourth equal division (the fourth region 2004E) of the second fluid control surface 1220E of the rotatable disk 122E of the plane valve 10E directly faces the second equal division (the second portion 1202E) and the third equal division (the third portion 1203E) of the first fluid control surface 1210E of the fixed disk 121E, the fifth equal division (the fifth region 2005E) of the second fluid control surface 1220E of the rotatable disk 122E directly faces the fourth equal division (the fourth portion 1204E) of the first fluid control surface 1210E of the fixed disk 121E, so that the fourth channel 104E of the plane valve 10E is communicated with the raw water outlet channel 109E, the fifth channel 105E is communicated with the third channel 103E and the seventh channel 107E, and the sixth channel 106E is communicated with the eighth channel 108E and the draining channel 1010E respectively, so as to allow the faucet water to flow through the raw water inlet 1104E, the fourth channel 104E, the raw water outlet channel 109E, and then flow out through the raw water outlet 1109E and be supplied. Accordingly, the faucet water softener is at the raw water supplying working position.

Further, when the rotatable disk 122E of the plane valve 10E is rotated until the first equal division (the first region 2001E) of the second fluid control surface 1220E of the rotatable disk 122E directly faces the fifth equal division (the fifth portion 1205E) of the first fluid control surface 1210E of the fixed disk 121E, the third equal division (the third region 2003E) and the fourth equal division (the fourth region 2004E) of the second fluid control surface 1220E of the rotatable disk 122E of the plane valve 10E directly faces the first equal division (the first portion 1201E) and the second equal division (the second portion 1202E) of the first fluid control surface 1210E of the fixed disk 121E, the fifth equal division (the fifth region 2005E) of the second fluid control surface 1220E of the rotatable disk 122E directly faces the third equal division (the third portion 1203E) of the first fluid control surface 1210E of the fixed disk 121E, so that the fourth channel 104E is communicated with the second channel 102E, the fifth channel 105E of the plane valve 10E is communicated with the first channel 101E and the third channel 103E respectively, and the sixth channel 106E is communicated with the seventh channel 107E and the draining channel 1010E respectively, so as to allow the faucet water to flow from the raw water inlet 1104E, the fourth channel 104E and the second channel 102E to the second opening 1102E, and then flows into the ejecting opening 182E of the injector 18E, and after the faucet water is injected by the injector 18E, the faucet water is mixed with the liquid from the brine opening 181E to generate a regeneration solution, and then the regeneration solution flows into the third opening 1103E through the injecting opening 183E of the injector 18E, and then flows through the third channel 103E, the fifth channel 105E, the first channel 101E and the first opening 1101E to the water treatment device 1, the regeneration solution flows into the water treatment device 1 through the first communicating opening 301 of the water treatment device 1 to regenerate the water treatment material or mechanism of the water treatment device 1, for example, softening the resin, the waste water generated after regeneration flows out through the second communicating opening 302 of the water treatment device 1, and then flows through the softened water inlet 1107E of the valve body 11E, the seventh channel 107E, the sixth channel 106E, the draining channel 1010E and the draining opening 1106E, accordingly, the faucet water softener is at the regenerating working state.

It is worth mentioning that when the users need to switch the faucet water softener according to the embodiment of the present invention from the softening working state to the raw water supplying working state, only need to anticlockwise rotate the rotatable disk 122E of the plane valve 10E for one equal division angle, so that the first region 2001E of the second fluid control surface 1220E of the rotatable disk 122E directly faces the sixth portion 1206E of the first fluid control surface 1210E of the fixed disk 121E; when the users need to switch the faucet water softener according to the embodiment of the present invention from the raw water supplying working state to the regenerating working state, only need to anticlockwise rotate the rotatable disk 122E of the plane valve 10E for one equal division angle again, so that the first region 2001E of the second fluid control surface 1220E of the rotatable disk 122E directly faces the fifth portion 1205E of the first fluid control surface 1210E of the fixed disk 121E, as shown in FIG.21A to FIG.21C.

In other words, the structure of the plane valve 10E of the faucet water softener of the present invention enables the three working states of the softening working state, the raw water supplying working state and the regenerating working state to be continuously distributed, so that the complete switching between two adjacent working states of the softening working state, the raw water supplying working state and the regenerating working state of the faucet water softener of the present invention can be realized only by rotating the rotatable disk 122E of the plane valve 10E for one equal division angle.

The switching mode between the three working states of the faucet water softener determined by the structure of the plane valve 10E of the faucet water softener of the present invention will make the switching between the three working states of the faucet water softener of the present invention more in line with the usage habits of the users and not easily cause an error in working state switching due to the different rotation angles when the users switch the working states.

It is appreciated that since the edge portion 12102E of the first fluid control surface 1210E of the plane valve 10E of the faucet water softener according to the embodiment of the present invention is divided into six equal divisions, and the edge region 12202E of the second fluid control surface 1220E of the rotatable disk 122E of the plane valve 10E is divided into six equal divisions, accordingly, each time the faucet water softener of the present invention realizes one working state switching, the rotatable disk 122E of the plane valve 10E rotates 60 degrees.

Preferably, the edge portion 12102E of the first fluid control surface 1210E are equally divided anticlockwise into the first portion 1201E, the second portion 1202E, the third portion 1203E, the fourth portion 1204E, the fifth portion 1205E and the sixth portion 1206E, the edge region 12202E of the second fluid control surface 1220E of the rotatable disk 122E of the plane valve 10E are equally divided anticlockwise into the first region 2001E, the second region 2002E, the third region 2003E, the fourth region 2004E, the fifth region 2005E and the sixth region 2006E.

In other words, the structure of the plane valve 10E of the faucet water softener of the present invention enables the three working states of the regenerating working state, the raw water supplying working state and the softening working state to be continuously distributed, so that the complete switching between two adjacent working states of the regenerating working state, the raw water supplying working state and the softening working state of the faucet water softener of the present invention can be realized only by rotating the rotatable disk 122E of the plane valve 10E for one equal division angle.

As shown in FIG.13A, FIG.13C, FIG. 21A to FIG.21C, the plane valve 10E of the faucet water softener according to the embodiment of the present invention further comprises a stopper 14E, wherein the stopper 14E is provided to prevent the invalid rotating of the rotatable disk 122E of the plane valve 10E relative to the fixed disk 121E.

In other words, when the rotatable disk 122E of the plane valve 10E is rotated until the first region 2001E of the second fluid control surface 1220E of the rotatable disk 122E directly faces the first portion 1201E of the first fluid control surface 1210E of the fixed disk 121E, the faucet water softener of the present invention is switched to the softening working state, rotate clockwise the rotatable disk 122E of the plane valve 10E for an equal angle to communicate the fourth channel 104E of the plane valve 10E with the third channel 103E, so as to make the faucet water flow from the fourth channel 104E to the third channel 103E and further flow out through the third opening 1103E, the ejecting opening 182E and the brine opening 181E of the injector 18E.

when the rotatable disk 122E of the plane valve 10E is rotated until the first region 2001E of the second fluid control surface 1220E of the rotatable disk 122E directly faces the fifth portion 1205E of the first fluid control surface 1210E of the fixed disk 121E, the faucet water softener of the present invention is switched to the regenerating working state, rotate anticlockwise the rotatable disk 122E of the plane valve 10E for an equal angle to communicate the fourth channel 104E and the eighth channel 108E of the plane valve 10E, so as to make the faucet water flow from the fourth channel 104E to the eighth channel 108E and further flow out through the softened water outlet 1108E.

The above two rotation modes of the rotatable disk 122E of the plane valve 10E relative to the fixed disk 121E cannot make the faucet water softener of the present invention realize practical functions, which are invalid rotations.

As shown in FIG.13A and FIG.13C, the stopper 14E of the faucet water softener according to the embodiment of the present invention comprises a first stopping member 141E and a second stopping member 142E, wherein the first stopping member 141E and the second stopping member 142E are respectively provided on the valve body 11E, the first stopping member 141E is arranged to prevent the knob 80 from further clockwise rotation when the rotatable disk 122E of the plane valve 10E is rotated so that the first region 2001E of the second fluid control surface 1220E of the rotatable disk 122E directly faces the first portion 1201E of the first fluid control surface 1210E of the fixed disk 121E; the second stopping member 142E is provided to prevent the knob 80 from further anticlockwise rotation when the rotatable disk 122E of the plane valve 10E is rotated so that the rotatable disk 122E of the plane valve 10E is rotated until the first region 2001E of the second fluid control surface 1220E of the rotatable disk 122E directly faces the fifth portion 1205E of the first fluid control surface 1210E of the fixed disk 121E, so as to prevent the rotatable disk 122E of the plane valve 10E from rotating meaninglessly relative to the fixed disk 121E.

The stopper 14E of the faucet water softener according to the embodiment of the present invention further comprises a blocker 143E, wherein the blocker 143E is provided at the knob 80 and protruded outward from the knob 80, so as to enable the blocker 143E to be blocked by the first stopping member 141E when the first region 2001E of the second fluid control surface 1220E of the rotatable disk 122E directly faces the first portion 1201E of the first fluid control surface 1210E of the fixed disk 121E, and be blocked by the second stopping member 142E when the rotatable disk 122E of the plane valve 10E is rotated so that the rotatable disk 122E of the plane valve 10E is rotated until the first region 2001E of the second fluid control surface 1220E of the rotatable disk 122E directly faces the fifth portion 1205E of the first fluid control surface 1210E of the fixed disk 121E.

As shown in FIG.13A and FIG.13C, the plane valve 10E of the faucet water softener according to the embodiment of the present invention further comprises a reminding mechanism 15E, wherein the reminding mechanism 15E is provided to give a block to the knob 80 when the user switches the faucet water softener of the present invention to the regenerating working state, so that the user has to significantly increase the rotating force of rotating the knob 80, the knob 80 can be rotated to continue to rotate and switch the faucet water softener of the present invention to the regenerating working state.

In this way, the user can be reminded that the faucet water softener of the present invention is switched to the regenerating working state.

As shown in FIG.13A and FIG.13C, the reminding mechanism 15E of the plane valve 10E of the faucet water purifier according to the first embodiment of the present invention comprises a driven member 151E and an elastic element 152E, wherein the driven member 151E comprises a driven end 1511E and a fixed end 1512E extended from the driven end 1511E, wherein the elastic element 152E is provided at the fixed end 1512E, the driven end 1511E is provided to face the knob 80, wherein when the user rotates the rotatable disk 122E of the plane valve 10E to make the first region 2001E of the second fluid control surface 1220E of the rotatable disk 122E directly face the fifth portion 1205E of the first fluid control surface 1210E of the fixed disk 121E, the driven end 1511E of the driven member151E of the reminding mechanism 15E will block the blocker 143E, when the user increases the force to rotate the knob 80, the blocker 143E drives the driven end 1511E of the driven member 151E, so as to deform the elastic element 152E and continue to rotate the knob 80, and make the rotatable disk 122E continue to rotate and the first region 2001E of the second fluid control surface 1220E of the rotatable disk 122E directly face the fifth portion 1205E of the first fluid control surface 1210E of the fixed disk 121E.

Preferably, the elastic element 152E is a spring.

As shown in FIG.13A and FIG.13C, the valve body 11E further comprises a valve main body 191E and a valve housing 192E, wherein the valve housing 192E is provided on the outer surface of the valve main body 191E.

It is appreciated that the first stopping member 141E, the second stopping member 142E and the reminding mechanism 15E are respectively provided at the valve housing 192E of the valve body 11E.

Further, the valve housing 192E of the valve body 11E comprises an upper housing 1921E and a lower housing 1922E, wherein the upper housing 1921E and the lower housing 1922E of the valve housing 192E form a valve body cavity 1920E therebetween, wherein the valve body cavity 1920E is provided to receive the valve main body 191E of the valve body 11E inside the valve body cavity 1920E.

As shown in FIG.1, FIG.10 and FIG.13C, the faucet water softener according to the embodiment of the present invention further provides a hose connecting assembly 77 having a first hose 31, a first hose connector 771 and a second hose connector 772, wherein the first hose connector 771 and the second hose connector 772 are respectively fixed at two ends of the first hose 31, wherein the first hose connector 771 and the second hose connector 772 are configured to be connected and fixed to the water treatment device 1 and the control valve 10E, so that the first hose 31 is disposed between the water treatment device 1 and the control valve 10E.

As shown in FIG.1, FIG.10 and FIG.13C, the hose connecting assembly 77 of the faucet water softener according to the embodiment of the present invention further includes a second hose 32, a third hose connector 773 and a fourth hose connector 774, wherein two ends of the second hose 32 are fixed at the third hose connector 773 and the fourth hose connector 774, respectively, wherein the third hose connector 773 and the fourth hose connector 774 are configured to be connected and fixed to the water treatment device 1 and the control valve 10E, so that the second hose 32 is disposed between the water treatment device 1 and the control valve 10E.

As shown in FIG.1, FIG.10, FIG.13C and FIG.14C, preferably, the hose connecting assembly 77 of the faucet water softener according to the embodiment of the present invention further includes a transition connector 770, wherein one end of the transition connector 770 is configured to be suitable for being detachably arranged with on the sleeving portion 761, and another end of the transition connector 770 is configured to be suitable for being connected with the second hose connector 772 and the fourth hose connector 774 (if any).

Further, the transition connector 770 forms a first transition channel 7701 and a second transition channel 7702, wherein the first transition channel 7701 is adapted to be communicated with the first hose 31 and the first opening 1101E of the control valve 10E, respectively, and the second transition channel 7702 is adapted to be communicated with the second hose 32 and the softened water inlet 1107E of the control valve 10E, respectively.

It can be understood that the first transition channel 7701 can be communicated with the first opening 1101E of the control valve 10E through the first flow guiding hole 901 of the flow deflector 90, and the second transition channel 7702 can be communicated with the softened water inlet 1107E of the control valve 10E through the second transition channel 7702 of the flow deflector 90.

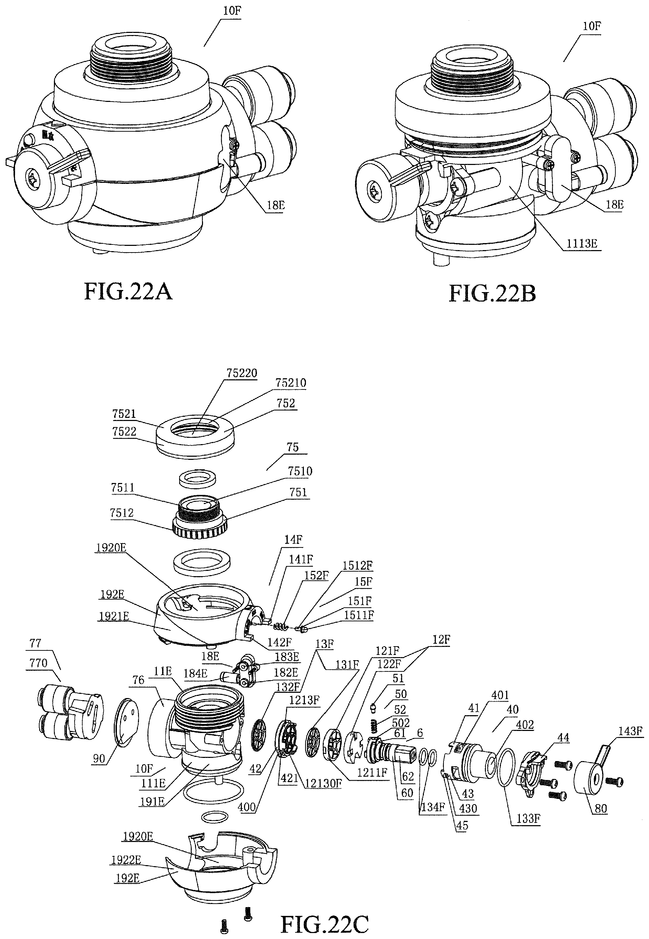

FIG.22A to FIG.30C illustrates an alternative embodiment the control valve 10E of the faucet water softener of the embodiment of the present invention, wherein the control valve 10F comprises a valve body 11E and a valve core12F, wherein the valve body 11E defines a valve cavity 110E, a first opening 1101E, a second opening 1102E, a third opening 1103E, a softened water inlet 1107E, a softened water outlet 1108E, a raw water outlet 1109E, a raw water inlet 1104E and a draining opening 1106E, wherein the valve core 12F is disposed inside the valve cavity 110E, wherein the first opening 1101E of the valve body 11E is adapted to be communicated with the first communicating opening 301 of the water treatment device 1, the softened water inlet 1107E of the valve body 11E is adapted to be communicated with the second communicating opening 302 of the water treatment device 1, the raw water inlet 1104E of the valve body 11E is adapted to be communicated with a source of a raw water (for example, a water outlet of a faucet).

As shown in FIG.12A to FIG.12H, the control valve 10F of the faucet water softener according to the embodiment of the present invention further has an injector 18E, wherein the injector 18E has an ejecting opening 182E communicated with the second opening 1102E of the valve body 11E, an injecting opening 183E communicated with the third opening 1103E of the valve body 11E, and a brine opening 181E communicated with the ejecting opening 182E and the injecting opening 183E respectively, when the water flow, such as a faucet water flow, flows from the ejecting opening 182E of the injector 18E to the injecting opening 183E of the injector 18E, a negative pressure is generated in the brine opening 181E of the injector 18E, so that the regeneration solution can be flow from the brine opening 181E of the injector 18E to the injecting opening 183E of the injector 18E. Correspondingly, the brine opening 181E of the injector 18E is communicated with the ejecting opening 182E and the injecting opening 183E of the injector 18E, respectively.

As shown in FIG.12A to FIG.12H, the injector 18E of the faucet water softener according to the embodiment of the present invention includes an injector body 180E, wherein the injector body 180E defines a nozzle 1804E, a suctioning chamber 1805E and a liquid mixing cavity 1806E, wherein the nozzle 1804E is communicated with the ejecting opening 182E, the suctioning chamber 1805E is communicated with the brine opening 181E, the liquid mixing cavity 1806E is communicated with the injecting opening 183E, the nozzle 1804E, the suctioning chamber 1805E and the liquid mixing cavity 1806E defines a three-way structure.

Further, the ejecting opening 182E and the injecting opening 183E are formed on the surface of the injector body 180E, and the nozzle 1804E, the suctioning chamber 1805E and the liquid mixing cavity 1806E are formed inside the injector body 180E.

Preferably, the injector body 180E is plate-shaped.

The plate-shaped injector body 180E can effectively reduce the size of the control valve 10F, so that the control valve 10F is more convenient to be installed on a faucet.

As shown in FIG.12A to FIG.12H, the injector body 180E of the injector 18E of the faucet water softener according to the embodiment of the present invention includes a flexible plate 1801E, a rigid plate 1802E, a first forming portion 1807E and a second forming portion 1808E, wherein the first forming portion 1807E and the second forming portion 1808E are disposed between the flexible plate 1801E and the rigid plate 1802E, wherein the flexible plate 1801E, the first forming portion 1807E, the second forming portion 1808E and the rigid plate 1802E defines the suctioning chamber 1805E and the liquid mixing cavity 1806E, and the flexible plate 1801E, the first forming portion 1807E and the rigid plate 1802E define the nozzle 1804E.

It can be understood that the flexible plate 1801E is made of a flexible material, such as rubber, and the rigid plate 1802E is made of a rigid material, such as rigid plastic.

Preferably, the first forming portion 1807E and the second forming portion 1808E are integrated with the rigid plate 1802E.

The first forming portion 1807E and the second forming portion 1808E are also made of rigid material, such as rigid plastic.

Alternatively, the first forming portion 1807E and the second forming portion 1808E are integrated with the flexible plate 1801E.

The first forming portion 1807E and the second forming portion 1808E are also made of a flexible material, such as rubber.

Correspondingly, when the flexible plate 1801E is pressed against the first forming portion 1807E and the second forming portion 1808E, a sealing can be achieved between the flexible plate 1801E, the first forming portion 1807E and the second forming portion 1808E.

As shown in FIG. 1, FIG.11A to FIG.12H, the injector 18E of the faucet water softener according to the embodiment of the present invention further includes a solution suctioning pipe 184E, wherein one end of the solution suctioning pipe 184E is communicated with the brine opening 181E of the injector 18E, so that the salt solution can be supplied through the solution suctioning pipe 184E.

As shown in FIG.1, FIG.11A to FIG.12H, the faucet water softener according to the embodiment of the present invention further has a salt solution hose 33, wherein one end of the salt solution hose 33 (for example, through the solution suctioning pipe 184E) is communicated with the brine opening 181E of the injector 18E, and another end is adapted to be communicated with a container for holding salt solution, for example, the salt solution tank 34, so that the salt solution can flow to the brine opening 181E of the injector 18E through the salt solution hose 33.

That is, one end of the solution suctioning pipe 184E of the injector 18E is communicated with the brine opening 181E, and another end of the solution suctioning pipe 184E is communicated with the salt solution hose 33.

One end of the salt solution hose 33 is communicated with the brine opening 181E of the injector 18E through the solution suctioning pipe 184E, another end of the salt solution hose 33 is communicated with the container for holding salt solution, so that the user can make the salt solution hose 33 be communicated with the brine opening 181E of the injector 18E, and the salt solution hose 33 be detached from the injector 18E without tools.

In other words, the salt solution hose 33 allows the faucet water softener of the present invention to be communicated with the salt solution hose 33 and the brine opening 181E of the injector 18E only during regeneration, and when the faucet water softener of the present invention is during end of regeneration or non-regeneration, the salt solution hose 33 can be removed from the injector 18E, so that the faucet water softener of the present invention takes up less space when softening raw water.

As shown in FIG.11A to FIG.11B, the faucet water softener according to the embodiment of the present invention further has a filtering element 35, wherein the filtering element 35 is arranged on the salt solution hose 33 to filter the salt solution.

Preferably, the filtering element 35 is disposed at one end of the salt solution hose 33, which is communicated with the salt solution tank 34.

Optionally, the filtering element 35 is disposed at one end of the salt solution hose 33, which is communicated with the brine opening 181E of the injector 18E.

It can be understood that the filtering element 35 may be a filter mesh for filtering salt particles, or may be other filter components capable of filtering salt particles.

As shown in FIG.12A, the control valve 10F of the faucet water softener according to the embodiment of the present invention further has a sealing element 19E, wherein the sealing element 19E is adapted to seal the brine opening 181E of the injector 18E to seal the brine opening 181E of the injector 18E when the faucet water softener of the present invention is in a non-regeneration state to prevent the brine opening 181E of the injector 18E from being polluted.

Preferably, the sealing element 19E is provided on the injector 18E to seal the brine opening 181E of the injector 18E.

More preferably, the sealing element 19E is provided at the solution suctioning pipe 184E of the injector 18E.

It can be understood that the sealing element 19E can be a sealing cover or a sealing plug.

As shown in FIG.1, FIG.22A to FIG.24F and FIG.28A, the control valve 10F of the faucet water purifier according to the embodiment of the present invention has a softening working position, wherein when the control valve 10F is under the softening working position, the valve core 12F of the control valve 10F defines a first communicating passage 1001F and a second communicating passage 1002F, wherein the first communicating passage 1001F is communicated with the first opening 1101E of the valve body 11E and the raw water inlet 1104E respectively, the second communicating passage 1002F is communicated with the softened water inlet 1107E of the valve body 11E and the softened water outlet 1108E respectively.

Accordingly, when the control valve 10F is under the softening working position, under the action of water pressure, the raw water (or the faucet water) flows into the raw water inlet 1104E of the valve body 11E of the control valve 10F, and then flows to the first opening 1101E of the valve body 11E through the first communicating passage 1001F, so as to further flow to the water treatment device 1 through the first communicating opening 301 of the water treatment device 1, after the raw water is softened by the water treatment device 1, and the generated softened water can flow out from the second communicating opening 302 of the water treatment device 1.Since the softened water inlet 1107E and the softened water outlet 1108E are communicated with each other through the second communicating passage 1002F, the softened water flowing out of the second communicating opening 302 of the water treatment device 1 flows out and is supplied through the softened water inlet 1107E, the second communicating passage 1002F and the softened water outlet 1108E in sequence.

It can be understood that when the control valve 10F of the faucet water softener according to the embodiment of the present invention is controlled to be in the softening working position, the faucet water softener of the present invention is controlled to be in its softening working state.

Preferably, the softened water outlet 1108E has a porous structure, it can be understood that the water outlet of the porous structure is more conducive to improving the user's experience of using softened water and saving water.

As shown in FIG.1, FIG.22A to FIG.24F and FIG.28B, the control valve 10F of the faucet water softener according to the embodiment of the present invention has a regenerating working position, wherein when the control valve 10F is under the regenerating working position, the valve core 12F of the control valve 10F defines a third communicating passage 1003F, a fourth communicating passage 1004F and a fifth communicating passage 1005F, wherein the third communicating passage 1003F is communicated with the second opening 1102E and the raw water inlet 1104E of the valve body 11E respectively, the fourth communicating passage 1004F is communicated with the first opening 1101E and the third opening 1103E of the valve body 11E, the fifth communicating passage 1005F is communicated with the softened water inlet 1107E and the draining opening 1106E of the valve body 11E respectively.

Correspondingly, when the control valve 10E is in the regenerating working position, raw water (or faucet water) flows into the raw water inlet 1104E of the valve body 11E of the control valve 10F under the action of water pressure, and it flows to the second opening 1102E of the valve body 11E through the third communicating passage 1003F, and then flows into the ejecting opening 182E of the injector 18E and is ejected, it is mixed with a salt solution (for example, sodium chloride solution) from the brine opening 181E of the injector 18E to generate a regeneration solution, the regeneration solution flows into the third opening 1103E of the valve body 11E through the injecting opening 183E of the injector 18E, and then flows into the first opening 1101E of the valve body 11E through the fourth communicating passage 1004F, and the regeneration solution flows into the water treatment device 1 through the communicating opening 301 of the water treatment device 1 to regenerate the water treatment materials or mechanisms of the water treatment device 1, such as a softening material, and then the waste water from the regeneration of the water treatment device 1 flows out through the second communicating opening 302 of the water treatment device 1, and then is exhausted through the softened water inlet 1107E, the fifth communicating passage 1005F and the draining opening 1106E of the valve body 11E in sequence.

It can be understood that when the control valve 10F of the faucet water softener according to the embodiment of the present invention is controlled to be in the regenerating working position, the faucet water softener of the present invention is controlled to be in its regenerating working state.

It is worth mentioning that the waste water generated after regeneration flows out of the draining opening 1106E, which is independently set and separated from the softened water outlet 1108E, so that the waste water generated after regeneration will not pollute the softened water outlet 1108E.

As shown in FIG.1, FIG.22A to FIG.24F and FIG.28C, the control valve 10F of the faucet water softener according to the embodiment of the present invention further has a raw water supplying working position, wherein when the control valve 10F is under the raw water supplying working position, the valve core 12E of the control valve 10E defines a sixth communicating passage 1006F, wherein the sixth communicating passage 1006F is communicated with the raw water outlet 1109E and the raw water inlet 1104E of the valve body 11E respectively.

Accordingly, when the control valve 10F is under the raw water supplying working position, under the action of water pressure, the raw water or the faucet water flows into the raw water inlet 1104E of the valve body 11E of the control valve 10F, and then flows into the raw water opening 1109E of the valve body 11E through the sixth communicating passage 1006F, such that the raw water can be provided by the raw water opening 1109E.

It can be understood that when the control valve 10F of the faucet water softener according to the embodiment of the present invention is controlled to be in the raw water supplying working position, the faucet water softener of the present invention is controlled to be in its raw water supplying working state.

Alternatively, the first opening 1101E of the valve body 11E of the control valve 10F of the faucet water softener according to the embodiment of the present invention is communicated with the second communicating opening 302 of the water treatment device 1, and the softened water inlet 1107E of the valve body 11E is communicated with the first communicating opening 301 of the water treatment device 1, the raw water inlet 1104E of the valve body 11E is communicated with the faucet water source, and the ejecting opening 182E of the injector 18E is communicated with the second opening 1102E of the valve body 11E, the injecting opening 183E of the injector 18E is communicated with the third opening 1103E of the valve body 11E.

Correspondingly, when the control valve 10F is in the softening working position, raw water (or faucet water) flows into the raw water inlet 1104E of the valve body 11E of the control valve 10F under the action of water pressure, and flows to the first opening 1101E of the valve body 11E through the first communicating passage 1001F, and further flows into the water treatment device 1 from the second communicating opening 302 of the water treatment device 1, and the softened water after the softening treatment of the water treatment device 1 flows out from the water treatment device 1 through the first communicating opening 301 of the water treatment device 1. Since the softened water inlet 1107E and the softened water outlet 1108E are communicated with each other through the second communicating passage 1002F, the softened water flowing out of the first communicating opening 301 of the water treatment device 1 flows through the softened water inlet 1107E, the second communicating passage 1002F and the softened water outlet 1108E in sequence and are supplied; when the control valve 10F is in the regenerating working position, the faucet water or raw water flows into the raw water inlet 1104E of the valve body 11E under the action of water pressure, and flows to the second opening 1102E of the valve body 11E through the third communicating passage 1003F, and then flows into the ejecting opening 182E of the injector 18E, after it is ejected through the injector 18E, and it is mixed with the salt solution (such as sodium chloride solution) from the brine opening 181E, so as to generate a regeneration solution, and the regeneration solution flows into the third opening 1103E of the valve body 11E through the injecting opening 183E of the injector 18E, and then flows into the first opening 1101E of the valve body 11E through the four communicating passage 1004F, and after the regeneration solution flows into the water treatment device 1 from the second communicating opening 302 of the water treatment device 1 to regenerate the water treatment materials or mechanisms of the water treatment device 1, such as, a softening resin, the waste water generated after regeneration flows out from the first communicating opening 301 of the water treatment device 1, and then flows out through the softened water inlet 1107E, the fifth communicating passage 1005F and the draining opening 1106E of the valve body 11E in sequence.

As shown in FIG.22A to FIG.30C, the control valve 10F of the faucet water softener according to the embodiment of the present invention is a plane valve, wherein the valve core 12F of the plane valve 10F further comprises a fixed disk 121F and a rotatable disk 122F, wherein the fixed disk 121F has a first fluid control surface 1210F, the rotatable disk 122F has a second fluid control surface 1220F, wherein the rotatable disk 122F and the fixed disk 121F are both provided inside the valve cavity 110E of the valve body 11E of the control valve 10F, wherein the second fluid control surface 1220F of the rotatable disk 122F is provided on the first fluid control surface 1210F of the fixed disk 121F, and the rotatable disk 122F is provided to be capable of rotating relative to the fixed disk 121F.

Preferably, the outer diameter of the valve core 12F of the control valve 10F (the plane valve 10F) is not greater than 35 mm, so as to reduce the size of the inner diameter of the valve cavity 110E of the valve body 11E and the overall structural size of the control valve 10F, such that the plane valve 10F is more suitable for being installed on a faucet.

More preferably, the outer diameter of the valve core 12F of the control valve 10F is not greater than 25 mm.

Most preferably, the outer diameters of the rotatable disk 122F and the fixed disk 121F of the plane valve 10F are not greater than 35 mm.

Preferably, the valve cavity 110E of the control valve 10F is arranged to be horizontal, so that the user can easily and manually operate the control valve 10F.

As shown in FIG.22A to FIG.30C, the control valve 10F of the faucet water softener according to the embodiment of the present invention has a first channel 101F, a second channel 102F, a third channel 103F, a fourth channel 104F, a fifth channel 105F, a sixth channel 106F, a seventh channel 107F, an eighth channel 108F, a raw water outlet channel 109F and a raw water inlet channel 1011F, wherein the first channel 101F, the third channel 103F, the seventh channel 107F, the eighth channel 108F, the second channel 102F, the raw water outlet channel 109F and the raw water inlet channel 1011F are provided at the fixed disk 121E and extended from the first fluid control surface 1210F of the fixed disk 121F, respectively; the fourth channel 104F, the fifth channel 105F and the sixth channel 106F are provided at the rotatable disk 122F and extended from the second fluid control surface 1220F of the rotatable disk 122F, respectively, wherein the first channel 101F is communicated with the first opening 1101E, the third channel 103F is communicated with the third opening 1103E, the seventh channel 107F is communicated with the softened water inlet 1107E, the eighth channel 108F is communicated with the softened water outlet 1108E, the second channel 102F is communicated with the second opening 1102E, the raw water outlet channel 109F is communicated with the raw water outlet 1109E, the raw water inlet channel 1011F is communicated with the raw water inlet 1104E, the fourth channel 104F is communicated with the raw water inlet channel 1011F, and the sixth channel 106F is communicated with the draining opening 1106E, wherein when the plane valve 10F is in the softening working position, the fourth channel 104F of the plane valve 10F is communicated with the raw water inlet channel 1011F and the first channel 101F respectively" thereby forming the first communicating passage 1001F communicated with the raw water inlet 1104E and the first opening 1101E respectively, the fifth channel 105F is communicated with the seventh channel 107F and the eighth channel 108F respectively, thereby forming the second communicating passage 1002F communicated with the softened water inlet 1107E and the softened water outlet 1108E respectively.

Preferably, the draining opening 1106E and the sixth channel 106F are respectively communicated with the valve cavity 110E.

More preferably, both the fourth channel 104F and the fifth channel 105F of the rotatable disk 122F are communicating blind holes.

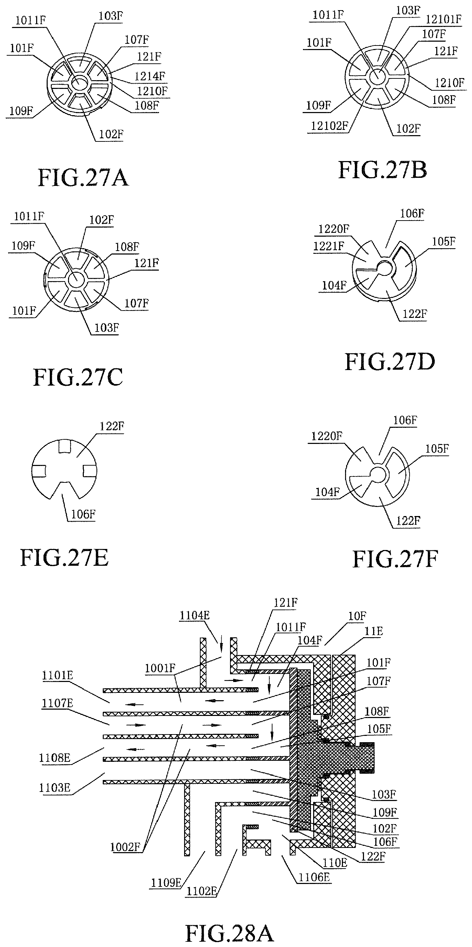

As shown in FIG.27A to FIG.27F and FIG.29A to FIG.30C, the first fluid control surface 1210F of the fixed disk 121F of the plane valve 10F of the faucet water softener according to the embodiment of the present invention defines an inner portion 12101F and an edge portion 12102F extended outward from the inner portion12101F, wherein the raw water inlet channel 1011F of the plane valve 10F is arranged at the inner portion 12101F of the fixed disk 121F, the first channel 101F, the third channel 103F, the seventh channel 107F, the eighth channel 108F, the second channel 102F and the raw water outlet channel 109F are arranged clockwise at the edge portion 12102F of the first fluid control surface 1210F of the fixed disk 121F, in this order, and the fourth channel 104F, the fifth channel 105F and the sixth channel 106F of the plane valve 10F are arranged clockwise at the second fluid control surface 1220F of the rotatable disk 122F, in this order.

Alternatively, the first channel 101F, the third channel 103F, the seventh channel 107F, the eighth channel 108F, the second channel 102F and the raw water outlet channel 109F of the plane valve 10F are arranged counterclockwise at the edge portion 12102F of the first fluid control surface 1210F of the fixed disk 121F, in this order, and the fourth channel 104F, the fifth channel 105F and the sixth channel 106F of the plane valve 10F are counterclockwise are arranged at the second fluid control surface 1220F of the rotatable disk 122F, in this order.

In other words, the first channel 101F, the third channel 103F, the seventh channel 107F, the eighth channel 108F, the second channel 102F and the raw water outlet channel 109F of the plane valve 10F are arranged around the raw water inlet channel 1011F.

Preferably, the first channel 101F, the third channel 103F, the seventh channel 107F, the eighth channel 108F, the second channel 102F, the raw water outlet channel 109F and the raw water inlet channel 1011F of the plane valve 10F are spacedly arranged at the first fluid control surface 1210F of the fixed disk 121F of the plane valve 10F; the fourth channel 104F, the fifth passage 105F and the sixth channel 106F of the plane valve 10F are spacedly arranged at the second fluid control surface 1220F of the rotatable disk 122F.

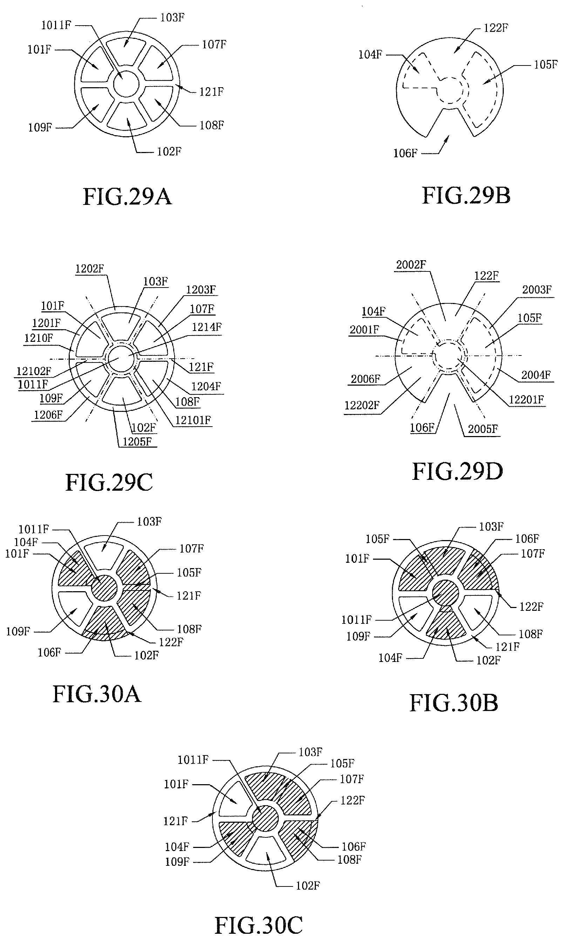

As shown in FIG.28A and FIG.30A, the rotatable disk 122F of the plane valve 10F of the faucet water softener according to the embodiment of the present invention can rotate relative to the fixed disk 121F, so that the plane valve 10F has a softening working position, wherein when the plane valve 10F is in the softening working position, the fourth channel 104F of the plane valve 10F is communicated with the raw water inlet channel 1011F and the first channel 101F respectively, thereby forming the communicating passage 1001F communicated respectively with the raw water inlet 1104E and the first opening 1101E respectively, the fifth channel 105F is communicated with the seventh channel 107F and the eighth channel 108F respectively, thereby forming the second communicating passage 1002F communicated respectively with the softened water inlet 1107E and the softened water outlet 1108E.

As shown in FIG.30A, when the plane valve 10F is in the softening working position, the third channel 103F and the raw water outlet channel 109F are respectively blocked by the rotatable disk 122F.

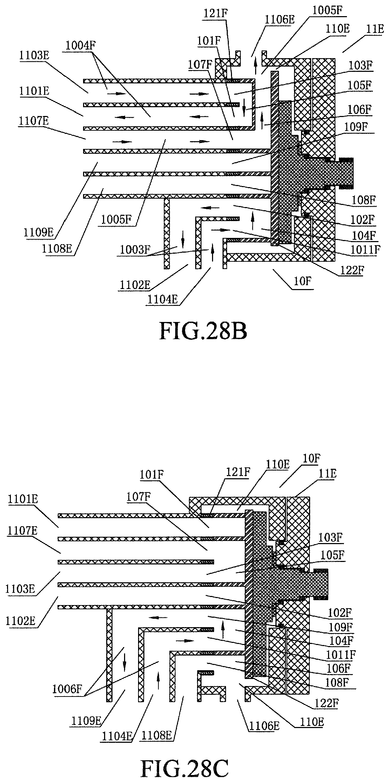

As shown in FIG.28B and FIG.30B, the plane valve 10F of the faucet water softener according to the embodiment of the present invention further has a regenerating working position, wherein when the plane valve 10F is in the regeneration working position, the fourth channel 104F of the plane valve 10F is communicated with the raw water inlet channel 1011F and the second channel 102F respectively, thereby forming the third communicating passage 1003F communicated respectively with the raw water inlet 1104E and the second opening 1102E, and the fifth channel 105F is communicated with the first channel 101F and the third channel 103F respectively, thereby forming the fourth communicating passage 1004F communicated respectively with the first opening 1101E and the third opening 1103E, and the sixth channel 106F is communicated with the seventh channel 107F, thereby forming the fifth communicating passage 1005F communicated respectively with the softened water inlet 1107E and the draining opening 1106E.

As shown in FIG.30B, when the plane valve 10F is in the regenerating working position, the eighth channel 108F and the raw water outlet channel 109F are respectively blocked by the rotatable disk 122F.

As shown in FIG.28C and FIG.30C, the plane valve 10F of the faucet water softener according to the embodiment of the present invention further has a raw water supplying working position, wherein when the plane valve 10F is in the raw water supplying working position, the fourth channel 104F of the plane valve 10F is communicated with the raw water inlet channel 1011F and the raw water outlet channel 109F respectively, thereby forming the sixth communicating passage 1006F communicated respectively with the raw water inlet 1104E and the raw water outlet 1109E.

As shown in FIG.30C, when the plane valve 10F is in the raw water supplying working position, the first channel 101F and the second channel 102F are blocked by the rotatable disk 122F respectively.

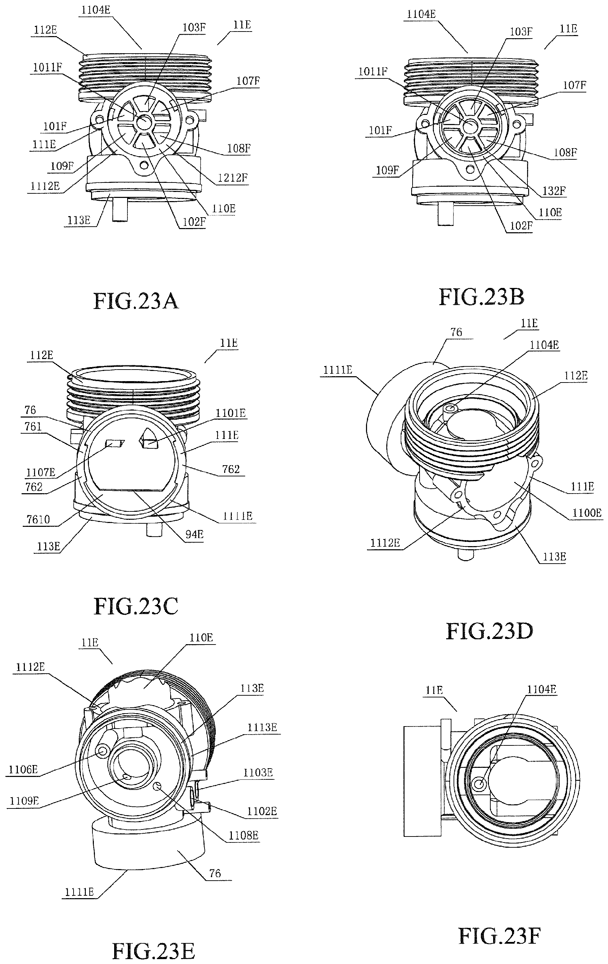

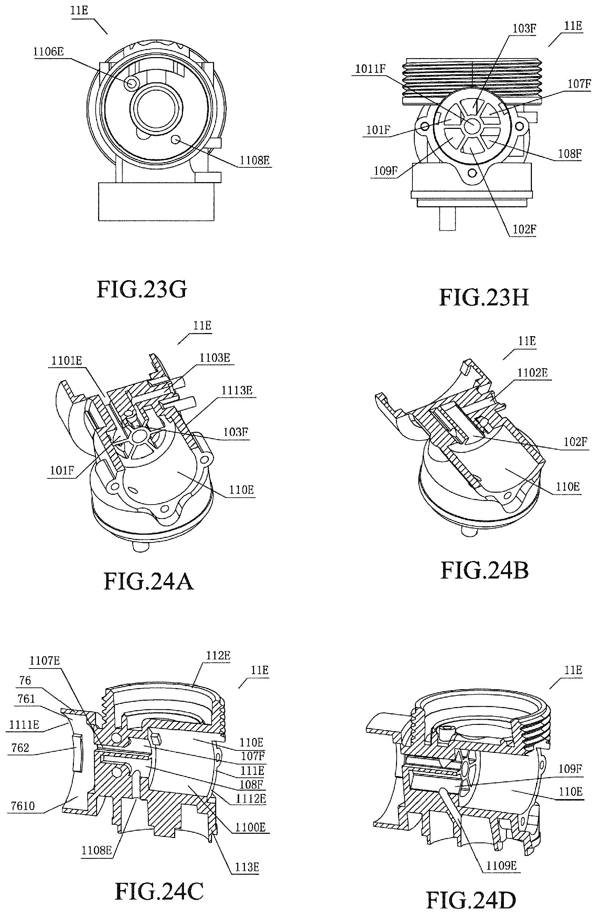

As shown in FIG.23A to FIG.24F, the valve body 11E of the faucet water softener according to the embodiment of the present invention includes a body portion 111E, an upper end 112E extended upward from the body portion 111E, and a lower end 113E extended downwardly from the body portion 111E, wherein the body portion 111E defines the valve cavity 110E.

Preferably, the fixed disk 121F is integrated with the inner wall of the body portion 111E.

As shown in FIG.23A to FIG.24F, the first opening 1101E and the softened water inlet 1107E of the valve body 11E of the faucet water softener according to the embodiment of the present invention are provided at the body portion 111E, and the raw water inlet 1104E is arranged at the upper end 112E of the valve body 11E.

As shown in FIG.23A to FIG.24F, the softened water outlet 1108E and the raw water outlet 1109E of the valve body 11E of the faucet water softener according to the embodiment of the present invention are provided at the lower end 113E of the valve body 11E.

Preferably, the draining opening 1106E of the valve body 11E is provided at the lower end 113E of the valve body 11E, the draining opening 1106E is communicated with the valve cavity 110E of the valve body 11E.

As shown in FIG.23A to FIG.24F, the body portion 111E of the valve body 11E of the faucet water softener according to the embodiment of the present invention forms a first side 1111E, a second side 1112E and a third side 1113E, wherein the third side 1113E extended between the first side 1111E and the second side 1112E, the valve cavity 110E has a valve cavity opening 1100E, wherein the first opening 1101E and the softened water inlet 1107E are provided at the first side 1111E of the body portion 111E, the valve cavity opening 1100E is provided at the second side 1112E of the body portion 111E, the second opening 1102E and the third opening 1103E are provided on the third side 1113E of the body portion 111E.

The first opening 1101E and the softened water inlet 1107E are provided at the first side 1111E of the body portion 111E, the valve cavity opening 1100E is provided at the second side 1112E of the body portion 111E, the second opening 1102E and the third opening 1103E is provided at the third side 1113E of the body portion 111E, which not only facilitates the installation of the control valve 10F on the faucet, but also facilitates the connection between the control valve 10F and the water treatment device 1 and the user's manual operation of the control valve 10F.

As shown in FIG.23A to FIG.24F, further, the softened water outlet 1108E and the raw water outlet 1109E are spacedly defined at the lower end 113E of the valve body 11E.

Preferably, the softened water outlet 1108E, the raw water outlet 1109E and the draining opening 1106E are spacedly formed at the lower end 113E of the valve body 11E.

More preferably, the first side 1111E and the second side 1112E of the body portion 111E are disposed opposite to each other.

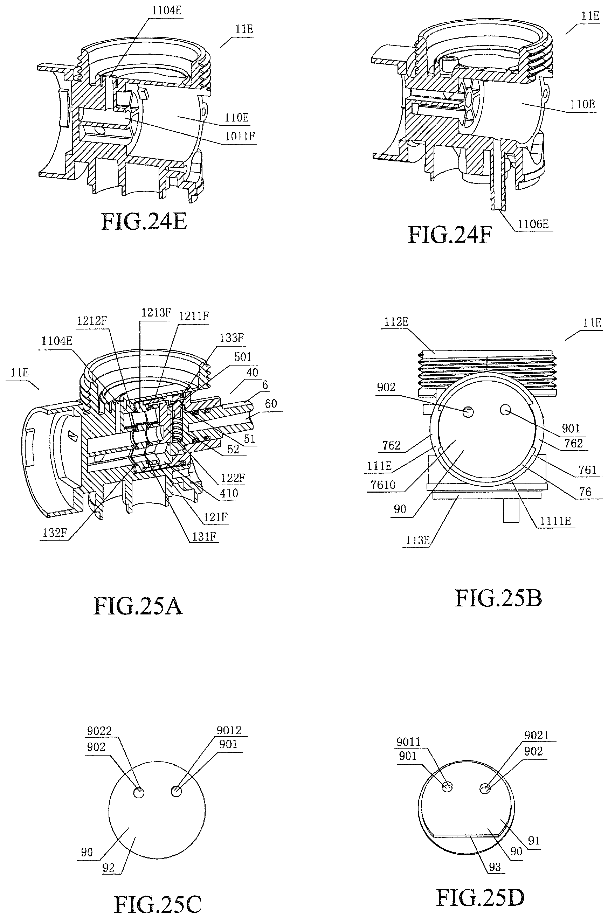

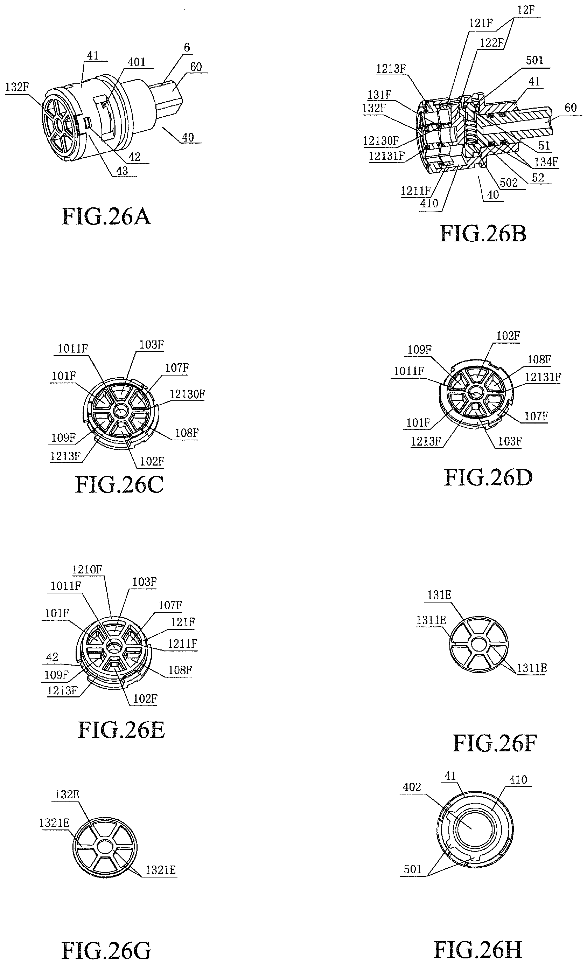

As shown in FIG.25A, FIG.26A to FIG.26E, the fixed disk 121F of the valve core 12F of the plane valve 10F of the faucet water softener according to the embodiment of the present invention comprises an upper end portion 1211F a lower end portion 1212F and a fixing portion 1213F provided between the upper end portion 1211F and the lower end portion 1212F, wherein the upper end portion 1211F defines the first fluid control surface 1210F of the fixed disk 121F, and the lower end portion 1212F is disposed at the valve cavity 110E of the valve body 11E

Preferably, the lower end portion 1212F of the fixed disk 121F of the valve core 12F of the plane valve 10F of the faucet water softener of the present invention is integrally provided at the inner wall of the valve body 11E of the plane valve 10F.

As shown in FIG.22C, FIG.25A to FIG.26H, the plane valve 10F of the faucet water softener according to the embodiment of the present invention further comprises a sealing assembly 13F, wherein the sealing assembly 13F has a first seal 131F, wherein the first seal 131F is disposed between the upper end portion 1211F and the fixing portion 1213F of the fixed disk 121F.

Further, the first seal 131F is provided with a plurality of first sealing strips 1311F, the fixing portion 1213F of the fixed disk 121F is provided with a set of first sealing grooves 12130F, wherein the first sealing grooves 12130F are disposed to respectively surround the first channel 101F, the third channel 103F, the seventh channel 107F, the eighth channel 108F, the second channel 102F, the raw water outlet channel 109F and the raw water inlet channel 1011F of the fixed disk 121F, the first sealing strips 1311F of the first seal 131F are disposed according to the first sealing grooves 12130F of the fixing portion 1213F, so that the first sealing strips 1311F of the first seal 131F can be engaged with the first sealing grooves 12130F of the fixing portion 1213F and realizes the sealing between the upper end portion 1211F and the fixing portion 1213F of the fixed disk 121F.

It is appreciated that the first sealing grooves 12130F are defined at one side of the fixing portion 1213F, which faces the upper end portion 1211F.

Further, the sealing assembly 13F is provided with a second seal 132F, wherein the second seal 132F is disposed between the fixing portion 1213F and the lower end portion 1212F of the fixed disk 121F.

Further, the second seal 132F has a plurality of second sealing strips 1321F, the fixing portion 1213F of the fixed disk 121F has a plurality of second sealing grooves 12131F, wherein the second sealing grooves 12131F are disposed to respectively surround the first channel 101F, the third channel 103F, the seventh channel 107F, the eighth channel 108F, the second channel 102F, the raw water outlet channel 109F and the raw water inlet channel 1011F of the fixed disk 121F, the second sealing strips 1321F of the second seal 132F are disposed according to the second sealing grooves 12131F of the fixing portion 1213F, so that the second sealing strips 1321F of the second seal 132F can be engaged with the second sealing grooves 12131F of the fixing portion 1213F and realizes the sealing between the lower end portion 1212F and the fixing portion 1213F of the fixed disk 121F.

It is appreciated that the second sealing grooves 12131F are defined at one side of the fixing portion 1213F, which faces the lower end portion 1212F.

As shown in FIG.22C, FIG.25A to FIG.26B, the sealing assembly 13F of the faucet water softener according to the embodiment of the present invention further comprises at least one first sealing ring 133F, wherein the first sealing ring 133F is disposed at the outer surface of the fixing holder 41, so as to realize the sealing between the fixing holder 41 and the inner wall of the valve body 11E and prevent the water from flowing out between the fixing holder 41 and the inner wall of the valve body 11E.

Further, the sealing assembly 13F comprises at least one second sealing ring 134F, wherein the second sealing ring 134F is disposed between the valve rod 60 and the fixing holder 41, so as to realize the sealing between the valve rod 60 and the inner wall of the fixing holder 41 and prevent the water from flowing out between the valve rod 60 and the inner wall of the fixing holder 41.

As shown in FIG.22C, FIG.25A to FIG.26B, the water inlet opening 401 of the fixing holder 41 of the fixed device 40 and the draining opening 1106E of the plane valve 10F of the faucet water softener according to the embodiment of the present invention are respectively communicated with the valve cavity 110E of the valve body 11E, and the water inlet opening 401 of the fixed support 41 is communicated with the accommodation chamber 410, the accommodation chamber 410 of the fixing holder 41 is communicated with the sixth channel 106F of the plane valve 10F, so that the effluent can be discharged from the sixth channel 106F, the accommodation chamber 410 of the fixing holder 41, the water inlet opening 401, the valve cavity 110E of the valve body 11E and the draining opening 1106E.

As shown in FIG.22C, FIG.25A to FIG.26B, the accommodation chamber 410 of the fixing holder 41 of the fixing device 40 of the faucet water softener according to the embodiment of the present invention is disposed to be adapted to accommodate the upper end portion 1211F of the fixed disk 121F and the rotatable disk 122F inside the accommodation chamber 410, the sixth channel 106F of the plane valve 10F is disposed to communicate with the accommodation chamber 410 of the fixing holder 41, so that the effluent can be discharged from through the water inlet opening 401 and the draining opening 1106E of the plane valve 10F.

As shown in FIG.22C, FIG.25A to FIG.26B, further, the upper end portion 1211F of the fixed disk 121F is adapted to be detachably clamped at the fixing portion 1213F of the fixed disk 121F, the fixing portion 1213F of the fixed disk 121F is adapted to be detachably clamped at the lower end portion 1212F of the fixed disk 121F, so that the upper end portion 1211F of the fixed disk 121F cannot rotate relative to the fixing portion 1213F, the fixing portion 1213F of the fixed disk 121F cannot rotate relative to the lower end portion 1212F.

As shown in FIG.27A to FIG.30C, the first fluid control surface 1210F of the fixed disk 121F of the plane valve 10F of the faucet water softener according to the embodiment of the present invention has an inner portion 12101F and an edge portion 12102F extended outward from the inner portion 12101F, which are shown by the dashed lines, wherein the inner portion 12101F and the edge portion 12102F are provided at a top end portion 1214F of the fixed disk 121F, and the edge portion 12102F (or the part other than the inner portion 12101F) of the first fluid control surface 1210F are equally divided into a first portion 1201F, a second portion 1202F, a third portion 1203F, a fourth portion 1204F, a fifth portion 1205F and a sixth portion 1206F, which are shown by the dashed lines, the second fluid control surface 1220F of the rotatable disk 122F of the plane valve 10F has an inner region 12201F and an edge region 12202F extended outward from the inner region 12201F, which are shown by the dashed lines, wherein the inner region 12201F and the edge region 12202F are provided at a bottom end portion 1221F of the rotatable disk 122F, and the edge region 12202F (or the part other than the inner region 12201F) of the second fluid control surface 1220F are equally divided into a first region 2001F, a second region 2002F, a third region 2003F, a fourth region 2004F, a fifth region 2005F and a sixth region 2006F, which are shown by the dashed lines, wherein the first channel 101F is extended downwardly from the first portion 1201F of the first fluid control surface 1210F of the fixed disk 121F, the third channel 103F is extended downwardly from the second portion 1202F of the first fluid control surface 1210F of the fixed disk 121F, the seventh channel 107F is extended downwardly from the third portion 1203F of the first fluid control surface 1210F of the fixed disk 121F, the eighth channel 108F is extended downwardly from the fourth portion 1204F of the first fluid control surface 1210F of the fixed disk 121F, the second channel 102F is extended downwardly from the fifth portion 1205F of the first fluid control surface 1210F of the fixed disk 121F, the raw water outlet channel 109F is extended downwardly from the sixth portion 1206F of the first fluid control surface 1210F of the fixed disk 121F, the fourth channel 104F is extended upwardly from the first region 2001F and the inner region 12201F of the second fluid control surface 1220F of the rotatable disk 122F, the fifth channel 105F is extended upwardly from the third region 2003F and the fourth region 2004F of the second fluid control surface 1220F of the rotatable disk 122F, the sixth channel 106F is extended upwardly from the fifth region 2005F, the raw water inlet channel 1011F is extended downwardly from the inner portion 12101F of the first fluid control surface 1210F of the fixed disk 121F.

As shown in FIG.29C to FIG.29D, preferably, the edge portion 12102F of the first fluid control surface 1210F are equally divided clockwise into the first portion 1201F, the second portion 1202F, the third portion 1203F, the fourth portion 1204F, the fifth portion 1205F and the sixth portion 1206F, the edge region 12202F of the second fluid control surface 1220F of the rotatable disk 122F of the plane valve 10F are equally divided clockwise into the first region 2001F, the second region 2002F, the third region 2003F, the fourth region 2004F, the fifth region 2005F and the sixth region 2006F.

In other words, the first fluid control surface 1210F of the fixed disk 121F of the plane valve 10F defines six equal divisions, and the second fluid control surface 1220F of the rotatable disk 122F of the plane valve 10F defines six equal divisions, wherein when the rotatable disk 122F of the plane valve 10F is rotated until the first equal division (the first region 2001F) of the second fluid control surface 1220F of the rotatable disk 122F directly faces the first equal division (the first portion 1201F) of the first fluid control surface 1210F of the fixed disk 121F, the third equal division (the third region 2003F) and the fourth equal division (the fourth region 2004F) of the second fluid control surface 1220F of the rotatable disk 122F of the plane valve 10F directly faces the third equal division (the third portion 1203F) and the fourth equal division (the fourth portion 1204F) of the first fluid control surface 1210F of the fixed disk 121F, the fifth equal division (the fifth region 2005F) of the second fluid control surface 1220F of the rotatable disk 122F directly faces the fifth equal division (the fifth portion 1205F) of the first fluid control surface 1210F of the fixed disk 121F, so that the fourth channel 104F of the plane valve 10F is communicated with the raw water inlet channel 1011F and the first channel 101F respectively, the fifth channel 105F is communicated with the seventh channel 107F and the eighth channel 108F, and the sixth channel 106F is communicated with the second channel 102F, so as to allow the faucet water to flow into the water treatment device 1 through the raw water inlet 1104E,the raw water inlet channel 1011F, the fourth channel 104F, the first channel 101F, the first opening 1101E and the first communicating opening 301 of the water treatment device 1, and the softened water after softening treatment of the water treatment device 1 flows out from the second communicating opening 302 of the water treatment device 1, and then flows out and is supplied to the user through the softened water inlet 1107E, the seventh channel 107F, the fifth channel 105F, the eighth channel 108F and the softened water outlet 1108E. Accordingly, the faucet water softener is at the softening working position.

Further, when the rotatable disk 122F of the plane valve 10F is rotated until the first equal division (the first region 2001F) of the second fluid control surface 1220F of the rotatable disk 122F directly faces the sixth equal division (the sixth portion 1206F) of the first fluid control surface 1210F of the fixed disk 121F, the third equal division (the third region 2003F) and the fourth equal division (the fourth region 2004F) of the second fluid control surface 1220F of the rotatable disk 122F of the plane valve 10F directly faces the second equal division (the second portion 1202F) and the third equal division (the third portion 1203F) of the first fluid control surface 1210F of the fixed disk 121F, the fifth equal division (the fifth region 2005F) of the second fluid control surface 1220F of the rotatable disk 122F directly faces the fourth equal division (the fourth portion 1204F) of the first fluid control surface 1210F of the fixed disk 121F, so that the fourth channel 104F of the plane valve 10F is communicated with the raw water inlet channel 1011F and the raw water outlet channel 109F respectively, the fifth channel 105F is communicated with the third channel 103F and the seventh channel 107F respectively, and the sixth channel 106F is communicated with the eighth channel 108F, so as to allow the raw water to flow through the raw water inlet 1104E, the raw water inlet channel 1011F, the fourth channel 104F, the raw water outlet channel 109F, and then flow out through the raw water outlet 1109E and be supplied. Accordingly, the faucet water softener is at the raw water supplying working position.

Further, when the rotatable disk 122F of the plane valve 10F is rotated until the first equal division (the first region 2001F) of the second fluid control surface 1220F of the rotatable disk 122F directly faces the fifth equal division (the fifth portion 1205F) of the first fluid control surface 1210F of the fixed disk 121F, the third equal division (the third region 2003F) and the fourth equal division (the fourth region 2004F) of the second fluid control surface 1220F of the rotatable disk 122F of the plane valve 10F directly faces the first equal division (the first portion 1201F) and the second equal division (the second portion 1202F) of the first fluid control surface 1210F of the fixed disk 121F, the fifth equal division (the fifth region 2005F) of the second fluid control surface 1220F of the rotatable disk 122F directly faces the third equal division (the third portion 1203F) of the first fluid control surface 1210F of the fixed disk 121F, so that the fourth channel 104F is communicated with the raw water inlet channel 1011F and the second channel 102F, the fifth channel 105F of the plane valve 10F is communicated with the first channel 101F and the third channel 103F respectively, and the sixth channel 106F is communicated with the seventh channel 107F, so as to allow the faucet water to flow from the raw water inlet 1104E, the raw water inlet channel 1011F, the fourth channel 104F and the second channel 102F to the second opening 1102E, and then flows into the ejecting opening 182E of the injector 18E, and after the faucet water is injected by the injector 18E, the faucet water is mixed with the liquid from the brine opening 181E to generate a regeneration solution, and then the regeneration solution flows into the third opening 1103E through the injecting opening 183E of the injector 18E, and then flows through the third channel 103F, the fifth channel 105F, the first channel 101F and the first opening 1101E to the water treatment device 1, the regeneration solution flows into the water treatment device 1 through the first communicating opening 301 of the water treatment device 1 to regenerate the water treatment material or mechanism of the water treatment device 1, for example, softening the resin, the waste water generated after regeneration flows out through the second communicating opening 302 of the water treatment device 1, and then flows out through the softened water inlet 1107E of the valve body 11E, the seventh channel 107F, the sixth channel 106F and the draining opening 1106E, accordingly, the faucet water softener is at the regenerating working state.

It is worth mentioning that when the users need to switch the faucet water softener according to the embodiment of the present invention from the softening working state to the raw water supplying working state, only need to anticlockwise rotate the rotatable disk 122F of the plane valve 10F for one equal division angle, so that the first region 2001F of the second fluid control surface 1220F of the rotatable disk 122F directly faces the sixth portion 1206F of the first fluid control surface 1210F of the fixed disk 121F; when the users need to switch the faucet water softener according to the embodiment of the present invention from the raw water supplying working state to the regenerating working state, only need to anticlockwise rotate the rotatable disk 122F of the plane valve 10F for one equal division angle again, so that the first region 2001F of the second fluid control surface 1220F of the rotatable disk 122F directly faces the fifth portion 1205F of the first fluid control surface 1210F of the fixed disk 121F, as shown in FIG.29A to FIG.30C.

In other words, the structure of the plane valve 10F of the faucet water softener of the present invention enables the three working states of the softening working state, the raw water supplying working state and the regenerating working state to be continuously distributed, so that the complete switching between two adjacent working states of the softening working state, the raw water supplying working state and the regenerating working state of the faucet water softener of the present invention can be realized only by rotating the rotatable disk 122F of the plane valve 10F for one equal division angle.

The switching mode between the three working states of the faucet water softener determined by the structure of the plane valve 10F of the faucet water softener of the present invention will make the switching between the three working states of the faucet water softener of the present invention more in line with the usage habits of the users and not easily cause an error in working state switching due to the different rotation angles when the users switch the working states.

It is appreciated that since the edge portion 12102F of the first fluid control surface 1210F of the plane valve 10F of the faucet water softener according to the embodiment of the present invention is divided into six equal divisions, and the edge region 12202F of the second fluid control surface 1220F of the rotatable disk 122F of the plane valve 10F is divided into six equal divisions, accordingly, each time the faucet water softener of the present invention realizes one working state switching, the rotatable disk 122F of the plane valve 10F rotates 60 degrees.

Alternatively, the edge portion 12102F of the first fluid control surface 1210F are equally divided anticlockwise into the first portion 1201F, the second portion 1202F, the third portion 1203F, the fourth portion 1204F, the fifth portion 1205F and the sixth portion 1206F, the edge region 12202F of the second fluid control surface 1220F of the rotatable disk 122F of the plane valve 10F are equally divided anticlockwise into the first region 2001F, the second region 2002F, the third region 2003F, the fourth region 2004F, the fifth region 2005F and the sixth region 2006F.

In other words, the structure of the plane valve 10F of the faucet water softener of the present invention enables the three working states of the regenerating working state, the raw water supplying working state and the softening working state to be continuously distributed, so that the complete switching between two adjacent working states of the regenerating working state, the raw water supplying working state and the softening working state of the faucet water softener of the present invention can be realized only by rotating the rotatable disk 122F of the plane valve 10F for one equal division angle.

As shown in Fig.22C, FIG. 29A to FIG.30C, the plane valve 10F of the faucet water softener according to the embodiment of the present invention further comprises a stopper 14F, wherein the stopper 14F is provided to prevent the invalid rotating of the rotatable disk 122F of the plane valve 10F relative to the fixed disk 121F.

In other words, when the rotatable disk 122F of the plane valve 10F is rotated until the first region 2001F of the second fluid control surface 1220F of the rotatable disk 122F directly faces the first portion 1201F of the first fluid control surface 1210F of the fixed disk 121F, the faucet water softener of the present invention is switched to the softening working state, rotate clockwise the rotatable disk 122F of the plane valve 10F for an equal angle to communicate the fourth channel 104F with the raw water inlet channel 1011F and the third channel 103F of the plane valve 10F respectively, so as to make the raw water flow from the raw water inlet channel 1011F and the fourth channel 104F to the third channel 103F, and further flow out through the third opening 1103E, the injecting opening 183E and the brine opening 181E of the injector 18E; and when the rotatable disk 122F of the plane valve 10F is rotated until the first region 2001F of the second fluid control surface 1220F of the rotatable disk 122F directly faces the fifth portion 1205F of the first fluid control surface 1210F of the fixed disk 121F, the faucet water softener of the present invention is switched to the regenerating working state, rotate anticlockwise the rotatable disk 122F of the plane valve 10F for an equal angle, make the fourth channel 104F of the plane valve 10F be communicated with the raw water inlet channel 1011F and the eighth channel 108F respectively, so as to make the raw water flow from the raw water inlet channel 1011F and the fourth channel 104F to the eighth channel 108F, and then make the raw water flow out through the softened water outlet 1108E.

The above two rotation modes of the rotatable disk 122F of the plane valve 10F relative to the fixed disk 121F cannot make the faucet water softener of the present invention realize practical functions, which are invalid rotations.

As shown in Fig.22C,FIG.29A to FIG.30C, the stopper 14F of the faucet water softener according to the embodiment of the present invention comprises a first stopping member 141F and a second stopping member 142F, wherein the first stopping member 141F and the second stopping member 142F are respectively provided on the valve body 11E, the first stopping member 141F is arranged to prevent the knob 80 from further clockwise rotation when the rotatable disk 122F of the plane valve 10F is rotated so that the first region 2001F of the second fluid control surface 1220F of the rotatable disk 122F directly faces the first portion 1201F of the first fluid control surface 1210F of the fixed disk 121F; the second stopping member 142F is provided to prevent the knob 80 from further anticlockwise rotation when the rotatable disk 122F of the plane valve 10F is rotated so that the rotatable disk 122F of the plane valve 10F is rotated until the first region 2001F of the second fluid control surface 1220F of the rotatable disk 122F directly faces the fifth portion 1205F of the first fluid control surface 1210F of the fixed disk 121F, so as to prevent the rotatable disk 122F of the plane valve 10F from rotating meaninglessly relative to the fixed disk 121F.

The stopper 14F of the faucet water softener according to the embodiment of the present invention further comprises a blocker 143F, wherein the blocker 143F is provided at the knob 80 and protruded outward from the knob 80, so as to enable the blocker 143F to be blocked by the first stopping member 141F when the first region 2001F of the second fluid control surface 1220F of the rotatable disk 122F directly faces the first portion 1201F of the first fluid control surface 1210F of the fixed disk 121F, and be blocked by the second stopping member 142F when the rotatable disk 122F of the plane valve 10F is rotated so that the rotatable disk 122F of the plane valve 10F is rotated until the first region 2001F of the second fluid control surface 1220F of the rotatable disk 122F directly faces the fifth portion 1205F of the first fluid control surface 1210F of the fixed disk 121F.

As shown in Fig.22C,FIG.29A to FIG.30C, the plane valve 10F of the faucet water softener according to the embodiment of the present invention further comprises a reminding mechanism 15F, wherein the reminding mechanism 15F is provided to give a block to the knob 80 when the user switches the faucet water softener of the present invention to the regenerating working state, so that the user has to significantly increase the rotating force of rotating the knob 80, the knob 80 can be rotated to continue to rotate and switch the faucet water softener of the present invention to the regenerating working state.

In this way, the user can be reminded that the faucet water softener of the present invention is switched to the regenerating working state.

As shown in Fig.22C,FIG.29A to FIG.30C, the reminding mechanism 15F of the plane valve 10F of the faucet water softener according to the embodiment of the present invention comprises a driven member 151F and an elastic element 152F, wherein the driven member 151F comprises a driven end 1511F and a fixed end 1512F extended from the driven end 1511F, wherein the elastic element 152F is provided at the fixed end 1512F, the driven end 1511F is provided to face the knob 80, wherein when the user rotates the rotatable disk 122F of the plane valve 10F to make the first region 2001F of the second fluid control surface 1220F of the rotatable disk 122F directly face the fifth portion 1205F of the first fluid control surface 1210F of the fixed disk 121F, the driven end 1511F of the driven member151F of the reminding mechanism 15F will block the blocker 143F, when the user increases the force to rotate the knob 80, the blocker 143F drives the driven end 1511F of the driven member 151F, so as to deform the elastic element 152F and continue to rotate the knob 80, and make the rotatable disk 122F continue to rotate and the first region 2001F of the second fluid control surface 1220F of the rotatable disk 122F directly face the fifth portion 1205F of the first fluid control surface 1210F of the fixed disk 121F.

Preferably, the elastic element 152F is a spring.

As shown in FIG.22C, the valve body 11E further comprises a valve main body 191E and a valve housing 192E, wherein the valve housing 192E is provided on the outer surface of the valve main body 191E.

It is appreciated that the first stopping member 141F, the second stopping member 142F and the reminding mechanism 15F are respectively provided at the valve housing 192E of the valve body 11E.

Further, the valve housing 192E of the valve body 11E comprises an upper housing 1921E and a lower housing 1922E, wherein the upper housing 1921E and the lower housing 1922E of the valve housing 192E form a valve body cavity 1920E therebetween, wherein the valve body cavity 1920E is provided to receive the valve main body 191E of the valve body 11E inside the valve body cavity 1920E.

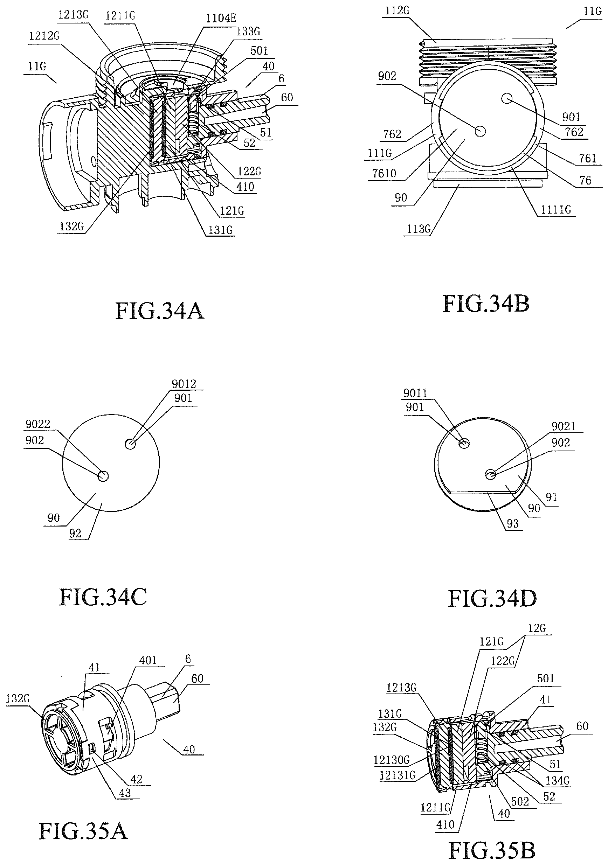

FIG.1, FIG.31A to FIG.39C illustrate another alternative embodiment the control valve 10E of the faucet water softener of the embodiment of the present invention, wherein the control valve 10G comprises a valve body 11G and a valve core12G, wherein the valve body 11G defines a valve cavity 110G, a first opening 1101E, a second opening 1102E, a third opening 1103E, a raw water outlet 1109E and a raw water inlet 1104E, wherein the valve core 12G is provided inside the valve cavity 110G, wherein the first opening 1101E of the valve body 11G is adapted to be communicated with the first communicating opening 301 of the water treatment device 1, the raw water inlet 1104E of the valve body 11G is adapted to be communicated with a raw water source (for example, a water outlet of a faucet).

As shown in FIG.1, FIG.11A to FIG.12H, the control valve 10G of the faucet water softener according to the embodiment of the present invention further has an injector 18E, wherein the injector 18E has an ejecting opening 182E communicated with the second opening 1102E of the valve body 11G, an injecting opening 183E communicated with the third opening 1103E of the valve body 11G, and a brine opening 181E communicated with the ejecting opening 182E and the injecting opening 183E respectively, when the water flow, such as a faucet water flow, flows from the ejecting opening 182E of the injector 18E to the injecting opening 183E of the injector 18E, a negative pressure is generated in the brine opening 181E of the injector 18E, so that the regeneration solution can be flow from the brine opening 181E of the injector 18E to the injecting opening 183E of the injector 18E. Correspondingly, the brine opening 181E of the injector 18E is communicated with the ejecting opening 182E and the injecting opening 183E of the injector 18E, respectively.

As shown in FIG.1, FIG.11Ato FIG.12H, the injector 18E of the faucet water softener according to the embodiment of the present invention includes an injector body 180E, wherein the injector body 180E defines a nozzle 1804E, a suctioning chamber 1805E and a liquid mixing cavity 1806E, wherein the nozzle 1804E is communicated with the ejecting opening 182E, the suctioning chamber 1805E is communicated with the brine opening 181E, the liquid mixing cavity 1806E is communicated with the injecting opening 183E, the nozzle 1804E, the suctioning chamber 1805E and the liquid mixing cavity 1806E defines a three-way structure. Further, the ejecting opening 182E and the injecting opening 183E are formed on the surface of the injector body 180E, and the nozzle 1804E, the suctioning chamber 1805E and the liquid mixing cavity 1806E are formed inside the injector body 180E. Preferably, the injector body 180E is plate-shaped. The plate-shaped injector body 180E can effectively reduce the size of the control valve 10G so that the control valve 10G is more convenient to be installed on a faucet.

As shown in FIG.1, FIG.11Ato FIG.12H, the injector body 180E of the injector 18E of the faucet water softener according to the embodiment of the present invention includes a flexible plate 1801E, a rigid plate 1802E, a first forming portion 1807E and a second forming portion 1808E, wherein the first forming portion 1807E and the second forming portion 1808E are disposed between the flexible plate 1801E and the rigid plate 1802E, wherein the flexible plate 1801E, the first forming portion 1807E, the second forming portion 1808E and the rigid plate 1802E defines the suctioning chamber 1805E and the liquid mixing cavity 1806E, and the flexible plate 1801E, the first forming portion 1807E and the rigid plate 1802E define the nozzle 1804E. It can be understood that the flexible plate 1801E is made of a flexible material, such as rubber, and the rigid plate 1802E is made of a rigid material, such as rigid plastic. Preferably, the first forming portion 1807E and the second forming portion 1808E are integrated with the rigid plate 1802E. The first forming portion 1807E and the second forming portion 1808E are also made of rigid material, such as rigid plastic. Alternatively, the first forming portion 1807E and the second forming portion 1808E are integrated with the flexible plate 1801E. The first forming portion 1807E and the second forming portion 1808E are also made of a flexible material, such as rubber. Correspondingly, when the flexible plate 1801E is pressed against the first forming portion 1807E and the second forming portion 1808E, a sealing can be achieved between the flexible plate 1801E, the first forming portion 1807E and the second forming portion 1808E.

As shown in FIG.1 and FIG.11A to FIG.12H, the injector 18E of the faucet water softener according to the embodiment of the present invention further includes a solution suctioning pipe 184E, wherein one end of the solution suctioning pipe 184E is communicated with the brine opening 181E so that the salt solution can be supplied through the solution suctioning pipe 184E.

As shown in FIG.1, FIG.11A to FIG.12H, the faucet water softener according to the embodiment of the present invention further has a salt solution hose 33, wherein one end of the salt solution hose 33 (for example, through the solution suctioning pipe 184E) is communicated with the brine opening 181E of the injector 18E, and another end is adapted to be communicated with a container for holding salt solution, for example, the salt solution tank 34, so that the salt solution can flow to the brine opening 181E of the injector 18E through the salt solution hose 33. That is, one end of the solution suctioning pipe 184E of the injector 18E is communicated with the brine opening 181E, and another end of the solution suctioning pipe 184E is communicated with the salt solution hose 33. One end of the salt solution hose 33 is communicated with the brine opening 181E of the injector 18E through the solution suctioning pipe 184E, another end of the salt solution hose 33 is communicated with the container for holding salt solution, so that the user can make the salt solution hose 33 be communicated with the brine opening 181E of the injector 18E, and the salt solution hose 33 be detached from the injector 18E without tools. In other words, the salt solution hose 33 allows the faucet water softener of the present invention to be communicated with the salt solution hose 33 and the brine opening 181E of the injector 18E only during regeneration, and when the faucet water softener of the present invention is during end of regeneration or non-regeneration, the salt solution hose 33 can be removed from the injector 18E, so that the faucet water softener of the present invention takes up less space when softening raw water.

As shown in FIG.11A to FIG.11B, the faucet water softener according to the embodiment of the present invention further has a filtering element 35, wherein the filtering element 35 is arranged on the salt solution hose 33 to filter the salt solution. Preferably, the filtering element 35 is disposed at one end of the salt solution hose 33, which is communicated with the salt solution tank 34. Optionally, the filtering element 35 is disposed at one end of the salt solution hose 33, which is communicated with the brine opening 181E of the injector 18E. It can be understood that the filtering element 35 may be a filter mesh for filtering salt particles, or may be other filter components capable of filtering salt particles.

As shown in FIG.12A, the control valve 10G of the faucet water softener according to the embodiment of the present invention further has a sealing element 19E, wherein the sealing element 19E is adapted to seal the brine opening 181E of the injector 18E to seal the brine opening 181E of the injector 18E when the faucet water softener of the present invention is in a non-regeneration state to prevent the brine opening 181E of the injector 18E from being polluted. Preferably, the sealing element 19E is provided on the injector 18E to seal the brine opening 181E of the injector 18E. More preferably, the sealing element 19E is provided at the solution suctioning pipe 184E of the injector 18E. It can be understood that the sealing element 19E can be a sealing cover or a sealing plug.

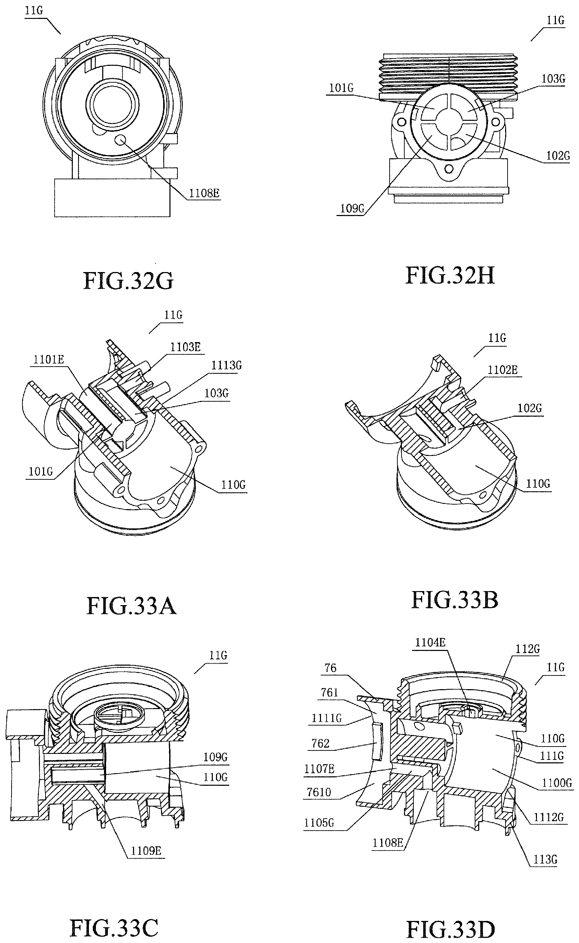

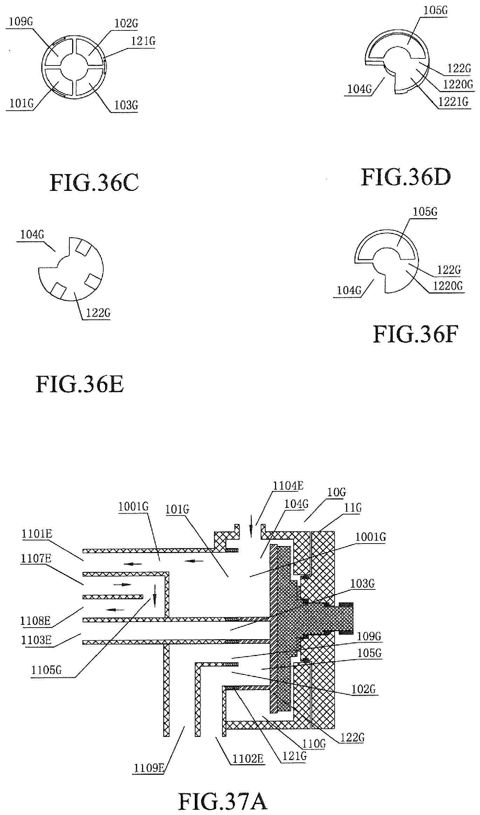

As shown in FIG.33D, FIG.37A to FIG.37C the valve body 11G of the control valve 10G of the faucet water softener of the embodiment of the present invention further defines a softened water inlet 1107E and a softened water outlet 1108E, wherein the softened water inlet 1107E of the valve body 11G is adapted to be communicated with the second communicating opening 302 of the water treatment device 1, the softened water inlet 1107E is further communicated with the softened water outlet 1108E. It can be understood that the softened water inlet 1107E of the valve body 11G is communicated with the second communicating opening 302 of the water treatment device 1 through the second hose 32. As shown in FIG.33D, FIG.37A to FIG.37C, the valve body 11G of the control valve 10G of the faucet water softener of the embodiment of the present invention further defines a guiding passage 1105G, wherein the guiding passage 1105G of the valve body 11G is communicated with the softened water inlet 1107E and the softened water outlet 1108E, such that the softened water inlet 1107E and the softened water outlet 1108E are communicated with each other.

As shown in FIG.1, FIG.32A to FIG.33D and FIG.37A, the control valve 10G of the faucet water softener according to the embodiment of the present invention further has a softening working position, wherein when the control valve 10G is under the softening working position, the valve core 12G of the control valve 10G defines a first communicating passage 1001G, wherein the first communicating passage 1001G is communicated with the first opening 1101E and the raw water inlet 1104E of the valve body 11G respectively. Accordingly, when the control valve 10G is under the softening working position, under the action of water pressure, the raw water or the faucet water flows into the raw water inlet 1104E of the valve body 11G of the control valve 10G, and then flows to the first opening 1101E of the valve body 11G through the first communicating passage 1001G, so as to further flow to the water treatment device 1 through the first communicating opening 301 of the water treatment device 1, after the raw water is softened by the water treatment device 1, and the generated softened water can flow out from the second communicating opening 302 of the water treatment device 1. Since the softened water inlet 1107E and the softened water outlet 1108E are communicated with each other, the softened water flowing out of the second communicating opening 302 of the water treatment device 1 flows out and is supplied through the softened water inlet 1107E and the softened water outlet 1108E in sequence. It can be understood that when the control valve 10G of the faucet water softener according to the embodiment of the present invention is controlled to be in the softening working position, the faucet water softener of the present invention is controlled to be in its softening working state. Preferably, the softened water outlet 1108E has a porous structure, it can be understood that the water outlet of the porous structure is more conducive to improving the user's experience of using softened water and saving water.

As shown in FIG.1, FIG.32A to FIG.33D and FIG.37B, the control valve 10G of the faucet water softener according to the embodiment of the present invention has a regenerating working position, wherein when the control valve 10G is under the regenerating working position, the valve core 12G of the control valve 10G defines a second communicating passage 1002G and a third communicating passage 1003G, wherein the second communicating passage 1002G is communicated with the second opening 1102E of the valve body 11G and the raw water inlet 1104E respectively, the third communicating passage 1003G is communicated with the first opening 1101E of the valve body 11G and the third opening 1103E respectively. Correspondingly, when the control valve 10G is in the regenerating working position, raw water (or faucet water) flows into the raw water inlet 1104E of the valve body 11G of the control valve 10G under the action of water pressure, and it flows to the second opening 1102E of the valve body 11G through the second communicating passage 1002G, and then flows into the ejecting opening 182E of the injector 18E and is ejected, it is mixed with a solution from the brine opening 181E of the injector 18E to generate a regeneration solution, the regeneration solution flows into the third opening 1103E of the valve body 11G through the injecting opening 183E of the injector 18E, and then flows into the first opening 1101E of the valve body 11G through the third communicating passage 1003G, and the regeneration solution flows into the water treatment device 1 through the communicating opening 301 of the water treatment device 1 to regenerate the water treatment materials or mechanisms of the water treatment device 1, such as a softening material, and then the waste water from the regeneration of the water treatment device 1 flows out through the second communicating opening 302 of the water treatment device 1, and then is exhausted through the softened water inlet 1107E and the softened water outlet 1108E of the valve body 11G in sequence. It can be understood that when the control valve 10G of the faucet water softener according to the embodiment of the present invention is controlled to be in the regenerating working position, the faucet water softener of the present invention is controlled to be in its regenerating working state. It is worth mentioning that when the control valve 10G is in the regenerating working position, the waste water generated after regeneration flows out from the softened water outlet 1108E, and at this time, the softened water outlet 1108E is used as a drain outlet.

As shown in FIG.1, FIG.32A to FIG.33D and FIG.37C, the control valve 10G of the faucet water softener according to the embodiment of the present invention further has a raw water supplying working position, wherein when the control valve 10G is under the raw water supplying working position, the valve core 12G of the control valve 10G defines a fourth communicating passage 1004G, wherein the fourth communicating passage 1004G is communicated with the raw water outlet 1109E and the raw water inlet 1104E of the valve body 11G respectively. Accordingly, when the control valve 10G is under the raw water supplying working position, under the action of water pressure, the raw water or the faucet water flows into the raw water inlet 1104E of the valve body 11G of the control valve 10G, and then flows into the raw water opening 1109E of the valve body 11G through the fourth communicating passage 1004G, such that the raw water can be provided by the raw water opening 1109E. It can be understood that when the control valve 10G of the faucet water softener according to the embodiment of the present invention is controlled to be in the raw water supplying working position, the faucet water softener of the present invention is controlled to be in its raw water supplying working state.

Alternatively, the first opening 1101E of the valve body 11G of the control valve 10G of the faucet water softener according to the embodiment of the present invention is communicated with the second communicating opening 302 of the water treatment device 1, and the softened water inlet 1107E of the valve body 11G is communicated with the first communicating opening 301 of the water treatment device 1, the raw water inlet 1104E of the valve body 11G is communicated with the faucet water source, and the ejecting opening 182E of the injector 18E is communicated with the second opening 1102E of the valve body 11G, the injecting opening 183E of the injector 18E is communicated with the third opening 1103E of the valve body 11G. Correspondingly, when the control valve 10G is in the softening working position, raw water (or faucet water) flows into the raw water inlet 1104E of the valve body 11G of the control valve 10G under the action of water pressure, and flows to the first opening 1101E of the valve body 11G through the first communicating passage 1001G, and further flows into the water treatment device 1 from the second communicating opening 302 of the water treatment device 1, and the softened water after the softening treatment of the water treatment device 1 flows out the first communicating opening 301 of the water treatment device 1. Since the softened water inlet 1107E and the softened water outlet 1108E are communicated with each other, the softened water flowing out of the first communicating opening 301 of the water treatment device 1 flows through the softened water inlet 1107E and the softened water outlet 1108E in sequence and are supplied; when the control valve 10G is in the regenerating working position, the faucet water or raw water flows into the raw water inlet 1104E of the valve body 11G under the action of water pressure, and flows to the second opening 1102E of the valve body 11G through the second communicating passage 1002G, and then flows into the ejecting opening 182E of the injector 18E, after it is injected through the injector 18E, and it is mixed with the salt solution (such as sodium chloride solution) from the brine opening 181E, so as to generate a regeneration solution, and the regeneration solution flows into the third opening 1103E of the valve body 11G through the injecting opening 183E of the injector 18E, and then flows into the first opening 1101E of the valve body 11G through the third communicating passage 1003G, and after the regeneration solution flows into the water treatment device 1 from the second communicating opening 302 of the water treatment device 1 to regenerate the water treatment materials or mechanisms of the water treatment device 1, such as, a softening resin, the waste water generated after regeneration flows out from the first communicating opening 301 of the water treatment device 1, and then flows out through the softened water inlet 1107E and the softened water outlet 1108E of the valve body 11G in sequence.

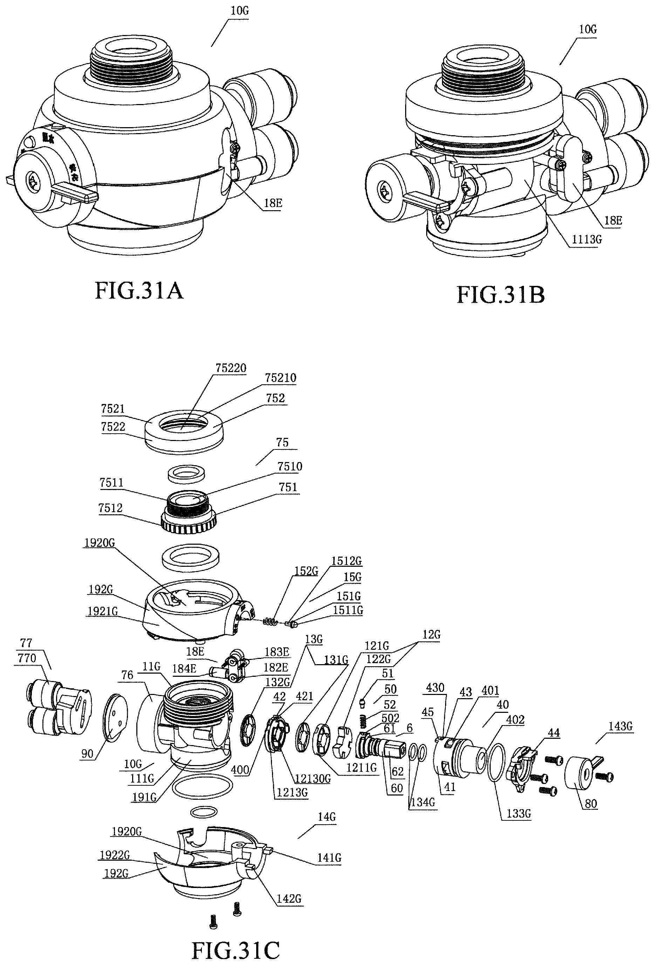

As shown in FIG.31C to FIG.39C, the control valve 10G of the faucet water softener according to the embodiment of the present invention is a plane valve, wherein the valve core 12G of the plane valve 10G further comprises a fixed disk 121G and a rotatable disk 122G, wherein the fixed disk 121G has a first fluid control surface 1210G, the rotatable disk 122G has a second fluid control surface 1220G, wherein the rotatable disk 122G and the fixed disk 121G are both provided inside the valve cavity 110G of the valve body 11G of the control valve 10G, wherein the second fluid control surface 1220G of the rotatable disk 122G is provided on the first fluid control surface 1210G of the fixed disk 121G, and the rotatable disk 122G is provided to be capable of rotating relative to the fixed disk 121G. Preferably, the outer diameter of the valve core 12G of the control valve 10G (the plane valve 10G) is not greater than 35 mm, so as to reduce the size of the inner diameter of the valve cavity 110G of the valve body 11G and the overall structural size of the control valve 10G, such that the plane valve 10G is more suitable for being installed on a faucet. More preferably, the outer diameter of the valve core 12G of the control valve 10G is not greater than 25 mm. Most preferably, the outer diameters of the rotatable disk 122G and the fixed disk 121G of the plane valve 10G are not greater than 35 mm. Preferably, the valve cavity 110G of the control valve 10G is arranged to be horizontal, so that the user can easily and manually operate the control valve 10G.

As shown in FIG.31C to FIG.39C, the plane valve 10G of the faucet water softener according to the embodiment of the present invention has a first channel 101G, a second channel 102G, a third channel 103G, a fourth channel 104G, a fifth channel 105G and a raw water outlet channel 109G, wherein the first channel 101G, the third channel 103G, the second channel 102G and the raw water outlet channel 109G are respectively provided at the fixed disk 121G and extended from the first fluid control surface 1210G of the fixed disk 121G; the fourth channel 104G and the fifth channel 105G are respectively provided at the rotatable disk 122G and extended from the second fluid control surface 1220G of the rotatable disk 122G, wherein the first channel 101G is communicated with the first opening 1101E, the third channel 103G is communicated with the third opening 1103E, the second channel 102G is communicated with the second opening 1102E, the raw water outlet channel 109G is communicated with the raw water outlet 1109E, the fourth channel 104G is communicated with the raw water inlet 1104E, wherein when the plane valve 10G is under the softening working position, the fourth channel 104G is communicated with the first channel 101G, so as to define the first communicating passage 1001G communicated with the raw water inlet 1104E and the first opening 1101E. Preferably, the raw water inlet 1104E and the fourth channel 104G are respectively communicated with the valve cavity 110G of the valve body 11G, and the fifth channel 105G of the rotatable disk 122G is a guiding blind hole.

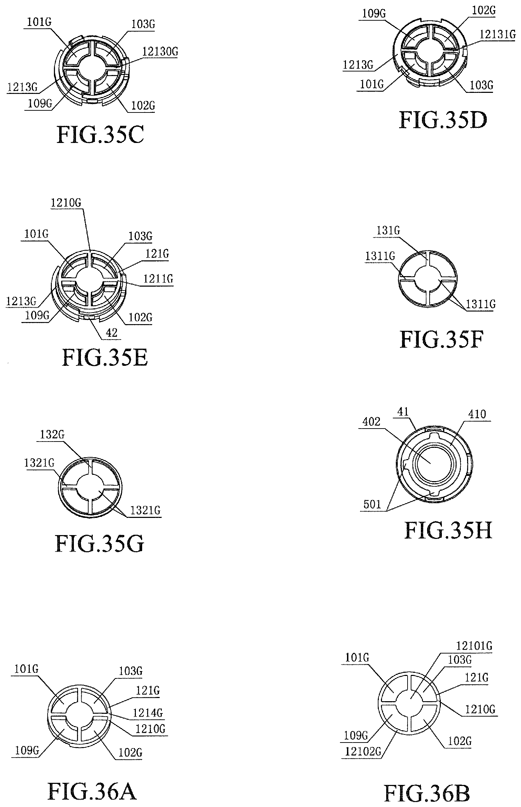

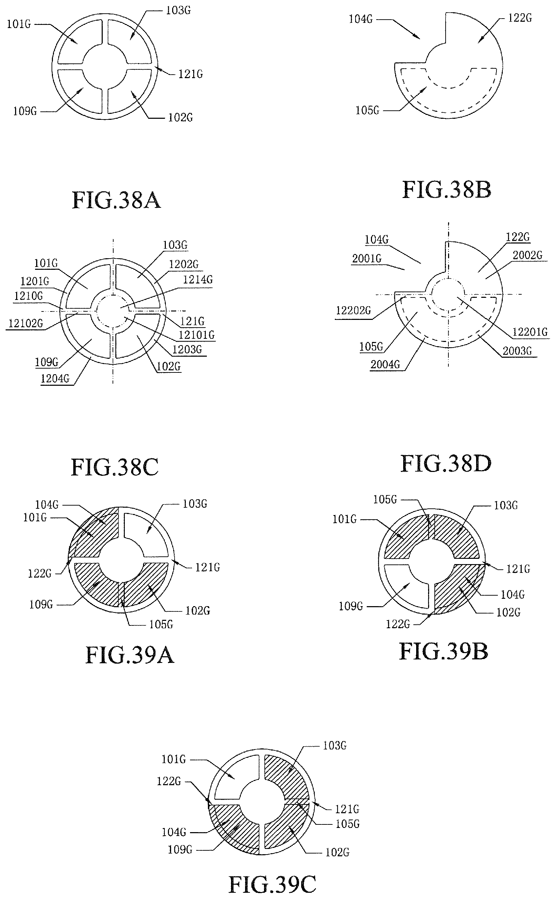

As shown in FIG.36A to FIG.36F and FIG.38A to FIG.38D, the first fluid control surface 1210G of the fixed disk 121G of the plane valve 10G of the faucet water softener according to the embodiment of the present invention defines an inner portion 12101G and an edge portion 12102G extended outward from the inner portion12101G, wherein the first channel 101G, the third channel 103G, the second channel 102G and the raw water outlet channel 109G of the plane valve 10G are arranged clockwise at the edge portion 12102G of the first fluid control surface 1210G of the fixed disk 121G in this order. Preferably, the first channel 101G, the third channel 103G, the second channel 102G and the raw water outlet channel 109G of the plane valve 10G are arranged anticlockwise at the edge portion 12102G of the first fluid control surface 1210G of the fixed disk 121G in this order. Alternatively, the first channel 101G, the third channel 103G, the second channel 102G and the raw water outlet channel 109G of the plane valve 10G are spacedly arranged at the first fluid control surface 1210G of the fixed disk 121G of the plane valve 10G in this order, the fifth channel 105G and the sixth channel 106G of the plane valve 10G are spacedly arranged at the second fluid control surface 1220G of the rotatable disk 122G.

As shown in FIG.37A and FIG.38A, the rotatable disk 122G of the plane valve 10G of the faucet water softener according to the embodiment of the present invention can rotate relative to the fixed disk 121G, so that the plane valve 10G has a softening working position, wherein when the plane valve 10G is in the softening working position, the fourth channel 104G of the plane valve 10G is communicated with the first channel 101G, thereby forming the first communicating passage 1001G communicated respectively with the raw water inlet 1104E and the first opening 1101E respectively. As shown in FIG.38A, when the plane valve 10G is in the softening working position, the third channel 103G is blocked by the rotatable disk 122G.

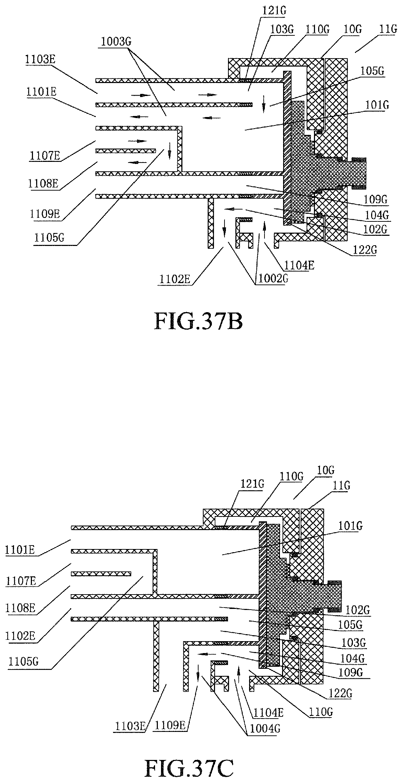

As shown in FIG.37B and FIG.38B, the plane valve 10G of the faucet water softener according to the embodiment of the present invention further has a regenerating working position, wherein when the plane valve 10G is in the regeneration working position, the fourth channel 104G of the plane valve 10G is communicated with the second channel 102G , thereby forming the second communicating passage 1002G communicated respectively with the raw water inlet 1104E and the second opening 1102E, and the fifth channel 105G is communicated with the first channel 101G and the third channel 103G respectively, thereby forming the third communicating passage 1003G communicated respectively with the first opening 1101E and the third opening 1103E. As shown in FIG.38B, when the plane valve 10G is in the regenerating working position, the raw water outlet channel 109G are blocked by the rotatable disk 122G.

As shown in FIG.37C and FIG.38C, the plane valve 10G of the faucet water softener according to the embodiment of the present invention further has a raw water supplying working position, wherein when the plane valve 10G is in the raw water supplying working position, the fourth channel 104G is communicated with the raw water outlet channel 109G, thereby forming the fourth communicating passage 1004G communicated respectively with the raw water inlet 1104E and the raw water outlet 1109E. As shown in FIG.38C, when the plane valve 10G is in the raw water supplying working position, the first channel 101G is blocked by the rotatable disk 122G.

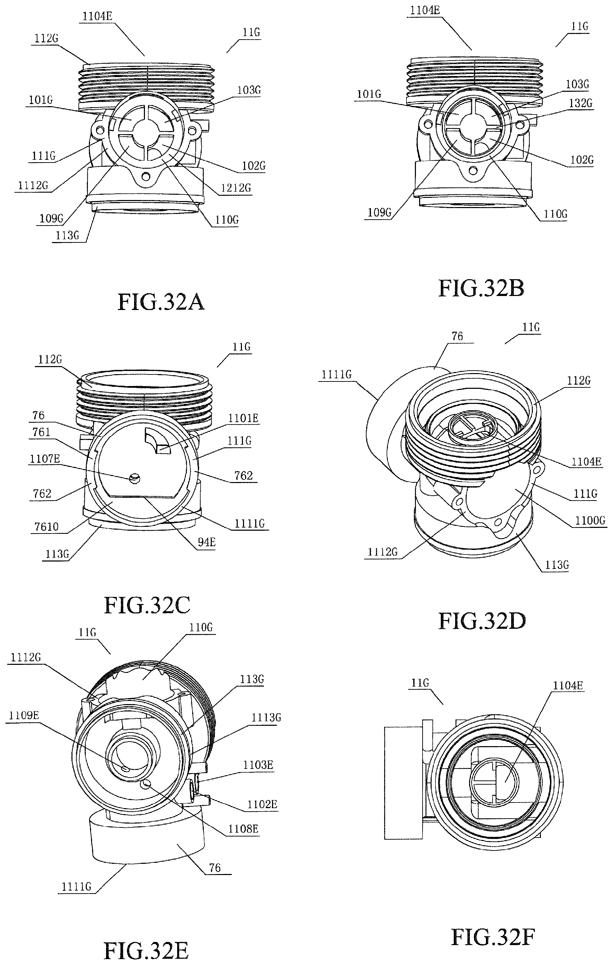

As shown in FIG.32A to FIG.33D, the valve body 11G of the faucet water softener according to the embodiment of the present invention includes a body portion 111G, an upper end 112G extended upward from the body portion 111G, and a lower end 113G extended downwardly from the body portion 111G, wherein the body portion 111G defines the valve cavity 110G. Preferably, the fixed disk 121G is integrated with the inner wall of the body portion 111G.

As shown in FIG.32Ato FIG.33D, the first opening 1101E and the softened water inlet 1107E of the valve body 11G of the faucet water softener according to the embodiment of the present invention are provided at the body portion 111G, and the raw water inlet 1104E is arranged at the upper end 112G of the valve body 11G.

As shown in FIG.32A to FIG.33D, the softened water outlet 1108E and the raw water outlet 1109E of the valve body 11G of the faucet water softener according to the embodiment of the present invention are provided at the lower end 113G of the valve body 11G.

As shown in FIG.32Ato FIG.33D, the body portion 111G of the valve body 11G of the faucet water softener according to the embodiment of the present invention forms a first side 1111G, a second side 1112G and a third side 1113G, wherein the third side 1113G extended between the first side 1111G and the second side 1112G, the valve cavity 110G has a valve cavity opening 1100G, wherein the first opening 1101E and the softened water inlet 1107E are provided at the first side 1111G of the body portion 111G, the valve cavity opening 1100G is provided at the second side 1112G of the body portion 111G, the second opening 1102E and the third opening 1103E are provided on the third side 1113G of the body portion 111G. The first opening 1101E and the softened water inlet 1107E are provided at the first side 1111G of the body portion 111G, the valve cavity opening 1100G is provided at the second side 1112G of the body portion 111G, the second opening 1102E and the third opening 1103E is provided at the third side 1113G of the body portion 111G, which not only facilitates the installation of the control valve 10G on the faucet, but also facilitates the connection between the control valve 10G and the water treatment device 1 and the user's manual operation of the control valve 10G.

As shown in FIG.32Ato FIG.33D, further, the softened water outlet 1108E and the raw water outlet 1109E are spacedly defined at the lower end 113G of the valve body 11G. Preferably, the softened water outlet 1108E and the raw water outlet 1109E are spacedly formed at the lower end 113G of the valve body 11G. More preferably, the first side 1111G and the second side 1112G of the body portion 111G are disposed opposite to each other.

As shown in FIG.32A, FIG.34A and FIG.35A to FIG.35E, the fixed disk 121G of the valve core 12G of the plane valve 10G of the faucet water softener according to the embodiment of the present invention comprises an upper end portion 1211G, a lower end portion 1212G and a fixing portion 1213G provided between the upper end portion 1211G and the lower end portion 1212G, wherein the upper end portion 1211G defines the first fluid control surface 1210G of the fixed disk 121G, and the lower end portion 1212G is disposed at the valve cavity 110G of the valve body 11G. Preferably, the lower end portion 1212G of the fixed disk 121G of the valve core 12G of the plane valve 10G of the faucet water softener of the present invention is integrally provided at the inner wall of the valve body 11G of the plane valve 10G.

As shown in FIG.31C, FIG.34A to FIG.35H, the plane valve 10G of the faucet water softener according to the embodiment of the present invention further comprises a sealing assembly 13G, wherein the sealing assembly 13G has a first seal 131G, wherein the first seal 131G is disposed between the upper end portion 1211G and the fixing portion 1213G of the fixed disk 121G. Further, the first seal 131G has a plurality of first sealing strips 1311G, the fixing portion 1213G of the fixed disk 121G has a plurality of first sealing grooves 12130G, wherein the first sealing grooves 12130G are disposed to respectively surround the first channel 101G, the third channel 103G, the second channel 102G and the raw water outlet channel 109G of the fixed disk 121G, the first sealing strips 1311G of the first seal 131G are disposed according to the first sealing grooves 12130G of the fixing portion 1213G, so that the first sealing strips 1311G of the first seal 131G can be engaged with the first sealing grooves 12130G of the fixing portion 1213G and realizes the sealing between the upper end portion 1211G and the fixing portion 1213G of the fixed disk 121G. It is appreciated that the first sealing grooves 12130G are defined at one side of the fixing portion 1213G, which faces the upper end portion 1211G. Further, the sealing assembly 13G has a second seal 132G, wherein the second seal 132G is disposed between the fixing portion 1213G and the lower end portion 1212G of the fixed disk 121G. Further, the second seal 132G has a plurality of second sealing strips 1321G, the fixing portion 1213G of the fixed disk 121G has a plurality of second sealing grooves 12131G, wherein the second sealing grooves 12131G are disposed to respectively surround the first channel 101G, the third channel 103G, , the second channel 102G and the raw water outlet channel 109G of the fixed disk 121G, the second sealing strips 1321G of the second seal 132G are disposed according to the second sealing grooves 12131G of the fixing portion 1213G, so that the second sealing strips 1321G of the second seal 132G can be engaged with the second sealing grooves 12131G of the fixing portion 1213G and realizes the sealing between the lower end portion 1212G and the fixing portion 1213G of the fixed disk 121G. It is appreciated that the first sealing grooves 12130G are defined at one side of the fixing portion 1213G, which faces the lower end portion 1212G.

As shown in FIG.31C, FIG.34A to FIG.35H, the sealing assembly 13G of the faucet water softener according to the embodiment of the present invention further comprises at least one first sealing ring 133G, wherein the first sealing ring 133G is disposed at the outer surface of the fixing holder 41, so as to realize the sealing between the fixing holder 41 and the inner wall of the valve body 11G and prevent the raw water from flowing out between the fixing holder 41 and the inner wall of the valve body 11G. Further, the sealing assembly 13G comprises at least one second sealing ring 134G, wherein the second sealing ring 134G is disposed between the valve rod 60 and the fixing holder 41, so as to realize the sealing between the valve rod 60 and the inner wall of the fixing holder 41 and prevent the water flow from flowing out between the valve rod 60 and the inner wall of the fixing holder 41.

As shown in FIG.31C, FIG.34A to FIG.35H, the plane valve 10G of the faucet water softener according to the embodiment of the present invention further comprises a fixing device 40, wherein the fixing device 40 comprises a fixing holder 41, a first clamping connector 42 and a second clamping connector 43, wherein the fixing holder 41 of the fixing device 40 has an accommodation chamber 410 and at least one water inlet opening 401, wherein the water inlet opening 401 is communicated with the raw water inlet 1104E of the valve body 11G and the accommodation chamber 410 respectively, wherein the first clamping connector 42 is disposed at the fixing portion 1213G of the fixed disk 121G, the second clamping connector 43 is disposed at the fixing holder 41, wherein the first clamping connector 42 and the second clamping connector 43 are disposed to be adapted to be clamped together, so that the fixing portion 1213G of the fixed disk 121G can be fixed at the fixing holder 41 through the first clamping connector 42 and the second clamping connector 43. Further, the water inlet opening 401 of the fixing holder 41 and the raw water inlet 1104E are both communicated with the valve cavity 110G of the valve body 11G, so that the accommodation chamber 410 of the fixing holder 41 is communicated with the raw water inlet 1104E of the valve body 11G through the water inlet opening 401 and the valve cavity 110G of the valve body 11G, and the raw water can flow into the accommodation chamber 410 of the fixing holder 41 through the raw water inlet 1104E of the valve body 11G. As shown in FIG.31C, FIG.34A to FIG.35H, the accommodation chamber 410 of the fixing holder41 of the fixing device 40 of the faucet water softener according to the embodiment of the present invention is disposed to be adapted to accommodate the upper end portion 1211G of the fixed disk 121G and the rotatable disk 122G inside the accommodation chamber 410, the fourth channel 104G of the plane valve 10G is disposed to communicate with the accommodation chamber 410 of the fixing holder 41, so that raw water can be provided to the fourth channel 104G of the plane valve 10G through the water inlet opening 401 and the accommodation chamber 410 of the fixing holder 41. In other words, the fourth channel 104G of the plane valve 10G is communicated with the raw water inlet 1104E of the valve body 11G through the accommodation chamber 410 of the fixing holder 41, the water inlet opening 401 and the valve cavity 110G of the valve body 11G. As shown in FIG.31C, FIG.34A to FIG.35H, further, the upper end portion 1211G of the fixed disk 121G is adapted to be detachably clamped at the fixing portion 1213G of the fixed disk 121G, the fixing portion 1213G of the fixed disk 121G is adapted to be detachably clamped at the lower end portion 1212G of the fixed disk 121G, so that the upper end portion 1211G of the fixed disk 121G cannot rotate relative to the fixing portion 1213G, the fixing portion 1213G of the fixed disk 121G cannot rotate relative to the lower end portion 1212G.

As shown in FIG.36Ato FIG.39C, the first fluid control surface 1210G of the fixed disk 121G of the plane valve 10G of the faucet water softener according to the embodiment of the present invention has an inner portion 12101G and an edge portion 12102G extended outward from the inner portion 12101G, which are shown by the dashed lines, wherein the inner portion 12101G and the edge portion 12102G are provided at a top end portion 1214G of the fixed disk 121G, and the edge portion 12102G (or the part other than the inner portion 12101G) of the first fluid control surface 1210G are equally divided into a first portion 1201G, a second portion 1202G, a third portion 1203G and a fourth portion 1204G, which are shown by the dashed lines, the second fluid control surface 1220G of the rotatable disk 122G of the plane valve 10G has an inner region 12201G and an edge region 12202G extended outward from the inner region 12201G, which are shown by the dashed lines, wherein the inner region 12201G and the edge region 12202G are provided at a bottom end portion 1221G of the rotatable disk 122G, and the edge region 12202G (or the part other than the inner region 12201G) of the second fluid control surface 1220G are equally divided into a first region 2001G, a second region 2002G, a third region 2003G and a fourth region 2004G, which are shown by the dashed lines, wherein the first channel 101G is extended downward from the first portion 1201G of the first fluid control surface 1210G of the fixed disk 121G, the third channel 103G is extended downward from the second portion 1202G of the first fluid control surface 1210G of the fixed disk 121G, the second channel 102G is extended downward from the third portion 1203G of the first fluid control surface 1210G of the fixed disk 121G, the raw water outlet channel 109G is extended downward from the fourth portion 1204G of the first fluid control surface 1210G of the fixed disk 121G, the fourth channel 104G is extended downward from the first region 2001G of the second fluid control surface 1220G of the rotatable disk 122G, the fifth channel 105G is extended upward from the third region 2003G and the fourth region 2004G of the second fluid control surface 1220G of the rotatable disk 122G. As shown in Fig.38C and Fig.38D, preferably, the edge portion 12102G of the first fluid control surface 1210G is equally divided clockwise the first portion 1201G, the second portion 1202G, the third portion 1203G and the fourth portion 1204G, and the edge region 12202G of the second fluid control surface 1220G of the rotatable disk 122G of the plane valve 10G is equally divided into the first region 2001G, the second region 2002G, the third region 2003G and the fourth region 2004G. In other words, the first fluid control surface 1210G of the fixed disk 121G of the plane valve 10G defines four equal divisions, and the second fluid control surface 1220G of the rotatable disk 122G of the plane valve 10G defines four equal divisions, wherein when the rotatable disk 122G of the plane valve 10G is rotated until the first equal division (the first region 2001G) of the second fluid control surface 1220G of the rotatable disk 122G directly faces the first equal division (the first portion 1201G) of the first fluid control surface 1210G of the fixed disk 121G, the third equal division (the third region 2003G) and the fourth equal division (the fourth region 2004G) of the second fluid control surface 1220G of the rotatable disk 122G of the plane valve 10G directly faces the third equal division (the third portion 1203G) and the fourth equal division (the fourth portion 1204G) of the first fluid control surface 1210G of the fixed disk 121G, so that the fourth channel 104G of the plane valve 10G is communicated with the first channel 101G, the fifth channel 105G is communicated with the second channel 102G and the raw water outlet channel 109G respectively, so as to allow the faucet water to flow into the water treatment device 1 through the raw water inlet 1104E, the fourth channel 104G, the first channel 101G, the first opening 1101E and the first communicating opening 301 of the water treatment device 1, and the softened water after softening treatment of the water treatment device 1 flows out from the second communicating opening 302 of the water treatment device 1, and then flows out and is supplied to the user through the softened water inlet 1107E and the softened water outlet 1108E. Accordingly, the faucet water softener is at the softening working position. Further, when the rotatable disk 122G of the plane valve 10G is rotated until the first equal division (the first region 2001G) of the second fluid control surface 1220G of the rotatable disk 122G directly faces the fourth equal division (the fourth portion 1204G) of the first fluid control surface 1210G of the fixed disk 121G, the third equal division (the third region 2003G) and the fourth equal division (the fourth region 2004G) of the second fluid control surface 1220G of the rotatable disk 122G of the plane valve 10G directly face the second equal division (the second portion 1202G) and the third equal division (the third portion 1203G) of the first fluid control surface 1210G of the fixed disk 121G, so that the fourth channel 104G of the plane valve 10G is communicated with the raw water outlet channel 109G, the fifth channel 105G of the plane valve 10G is communicated with the second channel 102G and the third channel 103G respectively, so as to allow the raw water to flow through the raw water inlet 1104E, the fourth channel 104G, the raw water outlet channel 109G, and then flow out through the raw water outlet 1109E and be supplied. Accordingly, the faucet water softener is at the raw water supplying working position. Further, when the rotatable disk 122G of the plane valve 10G is rotated until the first equal division (the first region 2001G) of the second fluid control surface 1220G of the rotatable disk 122G directly faces the third equal division (the third portion 1203G) of the first fluid control surface 1210G of the fixed disk 121G, the third equal division (the third region 2003G) and the fourth equal division (the fourth region 2004G) of the second fluid control surface 1220G of the rotatable disk 122G of the plane valve 10G directly faces the first equal division (the first portion 1201G) and the second equal division (the second portion 1202G) of the first fluid control surface 1210G of the fixed disk 121G, so that the fourth channel 104G is communicated with the second channel 102G, the fifth channel 105G of the plane valve 10G is communicated with the first channel 101G and the third channel 103G respectively, so as to allow the faucet water to flow from the raw water inlet 1104E, the fourth channel 104G and the second channel 102G to the second opening 1102E, and then flows into the ejecting opening 182E of the injector 18E, and after the faucet water is injected by the injector 18E, the faucet water is mixed with the liquid from the brine opening 181E to generate a regeneration solution, and then the regeneration solution flows into the third opening 1103E through the injecting opening 183E of the injector 18E, and then flows through the third channel 103G, the fifth channel 105G, the first channel 101G and the first opening 1101E to the water treatment device 1, the regeneration solution flows into the water treatment device 1 through the first communicating opening 301 of the water treatment device 1 to regenerate the water treatment material or mechanism of the water treatment device 1, for example, softening the resin, the waste water generated after regeneration flows out through the second communicating opening 302 of the water treatment device 1, and then flows through the softened water inlet 1107E and the softened water outlet 1108E. Accordingly, the faucet water softener is at the regenerating working state.

It is worth mentioning that when the users need to switch the faucet water softener according to the embodiment of the present invention from the softening working state to the raw water supplying working state, only need to anticlockwise rotate the rotatable disk 122G of the plane valve 10G for one equal division angle, so that the first region 2001G of the second fluid control surface 1220G of the rotatable disk 122G directly faces the fourth portion 1204G of the first fluid control surface 1210G of the fixed disk 121G; when the users need to switch the faucet water softener according to the embodiment of the present invention from the raw water supplying working state to the regenerating working state, only need to anticlockwise rotate the rotatable disk 122G of the plane valve 10G for one equal division angle again, so that the first region 2001G of the second fluid control surface 1220G of the rotatable disk 122G directly faces the third portion 1203G of the first fluid control surface 1210G of the fixed disk 121G, as shown in FIG.38A to FIG.39C. In other words, the structure of the plane valve 10G of the faucet water softener of the present invention enables the three working states of the softening working state, the raw water supplying working state and the regenerating working state to be continuously distributed, so that the complete switching between two adjacent working states of the softening working state, the raw water supplying working state and the regenerating working state of the faucet water softener of the present invention can be realized only by rotating the rotatable disk 122G of the plane valve 10G for one equal division angle. The switching mode between the three working states of the faucet water softener determined by the structure of the plane valve 10G of the faucet water softener of the present invention will make the switching between the three working states of the faucet water softener of the present invention more in line with the usage habits of the users and not easily cause an error in working state switching due to the different rotation angles when the users switch the working states. It is appreciated that since the edge portion 12102G of the first fluid control surface 1210G of the plane valve 10G of the faucet water softener according to the embodiment of the present invention is divided into four equal divisions, and the edge region 12202G of the second fluid control surface 1220G of the rotatable disk 122G of the plane valve 10G is divided into four equal divisions, accordingly, each time the faucet water softener of the present invention realizes one working state switching, the rotatable disk 122G of the plane valve 10G rotates 90 degree. Alternatively, the edge portion 12102G of the first fluid control surface 1210G are equally divided anticlockwise into the first portion 1201G, the second portion 1202G, the third portion 1203G and the fourth portion 1204G, the edge region 12202G of the second fluid control surface 1220G of the rotatable disk 122G of the plane valve 10G are equally divided anticlockwise into the first region 2001G, the second region 2002G, the third region 2003G and the fourth region 2004G. In other words, the structure of the plane valve 10G of the faucet water softener of the present invention enables the three working states of the regenerating working state, the raw water supplying working state and the softening working state to be continuously distributed, so that the complete switching between two adjacent working states of the regenerating working state, the raw water supplying working state and the softening working state of the faucet water softener of the present invention can be realized only by rotating the rotatable disk 122G of the plane valve 10G for one equal division angle.

As shown in FIG.31C, FIG.38A to FIG.39C, the plane valve 10G of the faucet water softener according to the embodiment of the present invention further comprises a stopper 14G, wherein the stopper 14G is provided to prevent the invalid rotating of the rotatable disk 122G of the plane valve 10G relative to the fixed disk 121G. In other words, when the rotatable disk 122G of the plane valve 10G is rotated until the first region 2001G of the second fluid control surface 1220G of the rotatable disk 122G directly faces the first portion 1201G of the first fluid control surface 1210G of the fixed disk 121G, the faucet water softener of the present invention is switched to the softening working state, rotate clockwise the rotatable disk 122G of the plane valve 10G for an equal angle to communicate the fourth channel 104G of the plane valve 10G with the third channel 103G, so as to make the raw water flow from the fourth channel 104G to the third channel 103G and further flow out through the third opening 1103E, the ejecting opening 182E and the brine opening 181E of the injector 18E. When the rotatable disk 122G of the plane valve 10G is rotated until the first region 2001G of the second fluid control surface 1220G of the rotatable disk 122G directly faces the third portion 1201G of the first fluid control surface 1210G of the fixed disk 121G, the faucet water softener of the present invention is switched to the regenerating working state, rotate anticlockwise the rotatable disk 122G of the plane valve 10G for an equal angle to communicate the fourth channel 104G of the plane valve 10G with the third channel 103G, so as to make the faucet water flow from the fourth channel 104G to the third channel 103G and further flow out through the third opening 1103E, the ejecting opening 182E and the brine opening 181E of the injector 18E. The above two rotation modes of the rotatable disk 122G of the plane valve 10G relative to the fixed disk 121G cannot make the faucet water softener of the present invention realize practical functions, which are invalid rotations.

As shown in FIG.31C, FIG.38A to FIG.39C, the stopper 14G of the faucet water softener according to the embodiment of the present invention comprises a first stopping member 141G and a second stopping member 142G, wherein the first stopping member 141G and the second stopping member 142G are respectively provided on the valve body 11G, the first stopping member 141G is arranged to prevent the knob 80 from further clockwise rotation when the rotatable disk 122G of the plane valve 10G is rotated so that the first region 2001G of the second fluid control surface 1220G of the rotatable disk 122G directly faces the first portion 1201G of the first fluid control surface 1210G of the fixed disk 121G; the second stopping member 142G is provided to prevent the knob 80 from further anticlockwise rotation when the rotatable disk 122G of the plane valve 10G is rotated so that the rotatable disk 122G of the plane valve 10G is rotated until the first region 2001G of the second fluid control surface 1220G of the rotatable disk 122G directly faces the third portion 1203G of the first fluid control surface 1210G of the fixed disk 121G, so as to prevent the rotatable disk 122G of the plane valve 10G from rotating meaninglessly relative to the fixed disk 121G. The stopper 14G of the faucet water softener according to the embodiment of the present invention further comprises a blocker 143G, wherein the blocker 143G is provided at the knob 80 and protruded outward from the knob 80, so as to enable the blocker 143G to be blocked by the first stopping member 141G when the first region 2001G of the second fluid control surface 1220G of the rotatable disk 122G directly faces the first portion 1201G of the first fluid control surface 1210G of the fixed disk 121G, and be blocked by the second stopping member 142G when the rotatable disk 122G of the plane valve 10G is rotated so that the rotatable disk 122G of the plane valve 10G is rotated until the first region 2001G of the second fluid control surface 1220G of the rotatable disk 122G directly faces the third portion 1203G of the first fluid control surface 1210G of the fixed disk 121G.

As shown in FIG.31C, FIG.38A to FIG.39C, the plane valve 10G of the faucet water softener according to the embodiment of the present invention further comprises a reminding mechanism 15G, wherein the reminding mechanism 15G is provided to give a block to the knob 80 when the user switches the faucet water softener of the present invention to the regenerating working state, so that the user has to significantly increase the rotating force of rotating the knob 80, the knob 80 can be rotated to continue to rotate and switch the faucet water softener of the present invention to the regenerating working state. In this way, the user can be reminded that the faucet water softener of the present invention is switched to the regenerating working state.

As shown in FIG.31C, FIG.38A to FIG.39C, the reminding mechanism 15G of the plane valve 10G of the faucet water softener according to the embodiment of the present invention comprises a driven member 151G and an elastic element 152G, wherein the driven member 151G comprises a driven end 1511G and a fixed end 1512G extended from the driven end 1511G, wherein the elastic element 152G is provided at the fixed end 1512G, the driven end 1511G is provided to face the knob 80, wherein when the user rotates the rotatable disk 122G of the plane valve 10G to make the first region 2001G of the second fluid control surface 1220G of the rotatable disk 122G directly face the third portion 1203G of the first fluid control surface 1210G of the fixed disk 121G, the driven end 1511G of the driven member151G of the reminding mechanism 15G will block the blocker 143G, when the user increases the force to rotate the knob 80, the blocker 143G drives the driven end 1511G of the driven member 151G, so as to deform the elastic element 152G and continue to rotate the knob 80, and make the rotatable disk 122G continue to rotate and the first region 2001G of the second fluid control surface 1220G of the rotatable disk 122G directly face the third portion 1203G of the first fluid control surface 1210G of the fixed disk 121G. Preferably, the elastic element 152G is a spring.

As shown in FIG.31C, the valve body 11G further comprises a valve main body 191G and a valve housing 192G, wherein the valve housing 192G is provided on the outer surface of the valve main body 191G. It is appreciated that the first stopping member 141G, the second stopping member 142G and the reminding mechanism 15G are respectively provided at the valve housing 192G of the valve body 11G. Further, the valve housing 192G of the valve body 11G comprises an upper housing 1921G and a lower housing 1922G, wherein the upper housing 1921G and the lower housing 1922G of the valve housing 192G form a valve body cavity 1920G therebetween, wherein the valve body cavity 1920G is provided to receive the valve main body 191G of the valve body 11G inside the valve body cavity 1920G.

FIG.1, FIG.40A to FIG.48C illustrate another alternative embodiment the control valve 10E of the faucet water softener of the embodiment of the present invention, wherein the control valve 10H comprises a valve body 11G and a valve core12H, wherein the valve body 11G defines a valve cavity 110G, a first opening 1101E, a second opening 1102E, a third opening 1103E, a raw water outlet 1109E and a raw water inlet 1104E, wherein the valve core 12H is disposed inside the valve cavity 110G, wherein the first opening 1101E of the valve body 11G is adapted to be communicated with the first communicating opening 301 of the water treatment device 1, the raw water inlet 1104E of the valve body 11G is adapted to be communicated with a source of a raw water (for example, a water outlet of a faucet).

As shown in FIG.1, FIG.11A to FIG.12H, the control valve 10H of the faucet water softener according to the embodiment of the present invention further has an injector 18E, wherein the injector 18E has an ejecting opening 182E communicated with the second opening 1102E of the valve body 11G, an injecting opening 183E communicated with the third opening 1103E of the valve body 11G, and a brine opening 181E communicated with the ejecting opening 182E and the injecting opening 183E respectively, when the water flow, such as a faucet water flow, flows from the ejecting opening 182E of the injector 18E to the injecting opening 183E of the injector 18E, a negative pressure is generated in the brine opening 181E of the injector 18E, so that the regeneration solution can be flow from the brine opening 181E of the injector 18E to the injecting opening 183E of the injector 18E. Correspondingly, the brine opening 181E of the injector 18E is communicated with the ejecting opening 182E and the injecting opening 183E of the injector 18E, respectively.

As shown in FIG.1, FIG.11A to FIG.12H, the injector 18E of the faucet water softener according to the embodiment of the present invention includes an injector body 180E, wherein the injector body 180E defines a nozzle 1804E, a suctioning chamber 1805E and a liquid mixing cavity 1806E, wherein the nozzle 1804E is communicated with the ejecting opening 182E, the suctioning chamber 1805E is communicated with the brine opening 181E, the liquid mixing cavity 1806E is communicated with the injecting opening 183E, the nozzle 1804E, the suctioning chamber 1805E and the liquid mixing cavity 1806E defines a three-way structure. Further, the ejecting opening 182E and the injecting opening 183E are formed on the surface of the injector body 180E, and the nozzle 1804E, the suctioning chamber 1805E and the liquid mixing cavity 1806E are formed inside the injector body 180E. Preferably, the injector body 180E is plate-shaped. The plate-shaped injector body 180E can effectively reduce the size of the control valve 10H so that the control valve 10H is more convenient to be installed on a faucet.

As shown in FIG.1, FIG.11A to FIG.12H, the injector body 180E of the injector 18E of the faucet water softener according to the embodiment of the present invention includes a flexible plate 1801E, a rigid plate 1802E, a first forming portion 1807E and a second forming portion 1808E, wherein the first forming portion 1807E and the second forming portion 1808E are disposed between the flexible plate 1801E and the rigid plate 1802E, wherein the flexible plate 1801E, the first forming portion 1807E, the second forming portion 1808E and the rigid plate 1802E defines the suctioning chamber 1805E and the liquid mixing cavity 1806E, and the flexible plate 1801E, the first forming portion 1807E and the rigid plate 1802E define the nozzle 1804E. It can be understood that the flexible plate 1801E is made of a flexible material, such as rubber, and the rigid plate 1802E is made of a rigid material, such as rigid plastic. Preferably, the first forming portion 1807E and the second forming portion 1808E are integrated with the rigid plate 1802E. The first forming portion 1807E and the second forming portion 1808E are also made of rigid material, such as rigid plastic. Alternatively, the first forming portion 1807E and the second forming portion 1808E are integrated with the flexible plate 1801E. The first forming portion 1807E and the second forming portion 1808E are also made of a flexible material, such as rubber. Correspondingly, when the flexible plate 1801E is pressed against the first forming portion 1807E and the second forming portion 1808E, a sealing can be achieved between the flexible plate 1801E, the first forming portion 1807E and the second forming portion 1808E.

As shown in FIG.1 and FIG.11A to FIG.12H, the injector 18E of the faucet water softener according to the embodiment of the present invention further includes a solution suctioning pipe 184E, wherein one end of the solution suctioning pipe 184E is communicated with the brine opening 181E so that the salt solution can be supplied through the solution suctioning pipe 184E.

As shown in FIG.1, FIG.11A to FIG.12H, the faucet water softener according to the embodiment of the present invention further has a salt solution hose 33, wherein one end of the salt solution hose 33 (for example, through the solution suctioning pipe 184E) is communicated with the brine opening 181E of the injector 18E, and another end is adapted to be communicated with a container for holding salt solution, for example, the salt solution tank 34, so that the salt solution can flow to the brine opening 181E of the injector 18E through the salt solution hose 33. That is, one end of the solution suctioning pipe 184E of the injector 18E is communicated with the brine opening 181E, and another end of the solution suctioning pipe 184E is communicated with the salt solution hose 33. One end of the salt solution hose 33 is communicated with the brine opening 181E of the injector 18E through the solution suctioning pipe 184E, another end of the salt solution hose 33 is communicated with the container for holding salt solution, so that the user can make the salt solution hose 33 be communicated with the brine opening 181E of the injector 18E, and the salt solution hose 33 be detached from the injector 18E without tools. In other words, the salt solution hose 33 allows the faucet water softener of the present invention to be communicated with the salt solution hose 33 and the brine opening 181E of the injector 18E only during regeneration, and when the faucet water softener of the present invention is during end of regeneration or non-regeneration, the salt solution hose 33 can be removed from the injector 18E, so that the faucet water softener of the present invention takes up less space when softening raw water.

As shown in FIG.1 and FIG.11Ato FIG.11B, the faucet water softener according to the embodiment of the present invention further has a filtering element 35, wherein the filtering element 35 is arranged on the salt solution hose 33 to filter the salt solution. Preferably, the filtering element 35 is disposed at one end of the salt solution hose 33, which is communicated with the salt solution tank 34. Optionally, the filtering element 35 is disposed at one end of the salt solution hose 33, which is communicated with the brine opening 181E of the injector 18E. It can be understood that the filtering element 35 may be a filter mesh for filtering salt particles, or may be other filter components capable of filtering salt particles.

As shown in FIG.12A, the control valve 10H of the faucet water softener according to the embodiment of the present invention further has a sealing element 19E, wherein the sealing element 19E is adapted to seal the brine opening 181E of the injector 18E to seal the brine opening 181E of the injector 18E when the faucet water softener of the present invention is in a non-regeneration state to prevent the brine opening 181E of the injector 18E from being polluted. Preferably, the sealing element 19E is provided on the injector 18E to seal the brine opening 181E of the injector 18E. More preferably, the sealing element 19E is provided at the solution suctioning pipe 184E of the injector 18E. It can be understood that the sealing element 19E can be a sealing cover or a sealing plug.

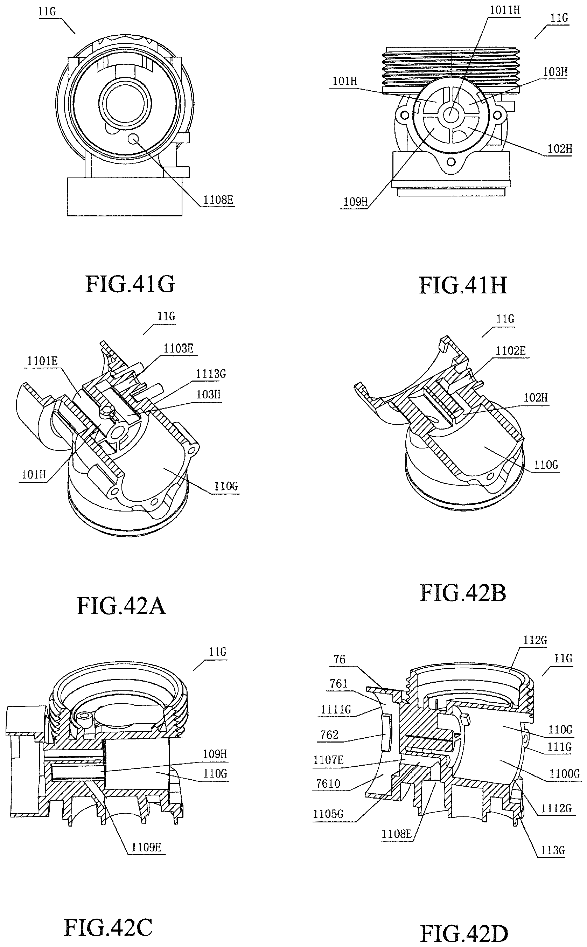

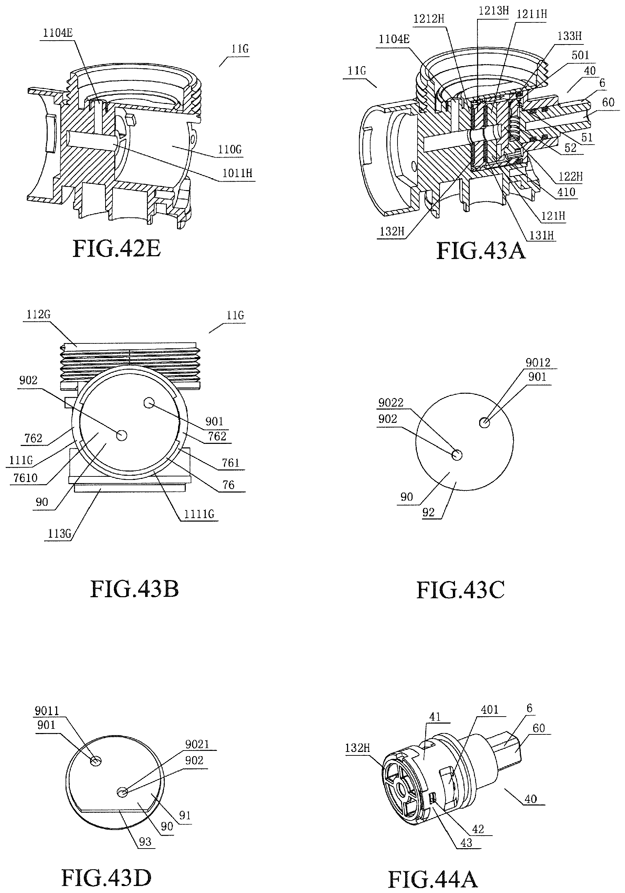

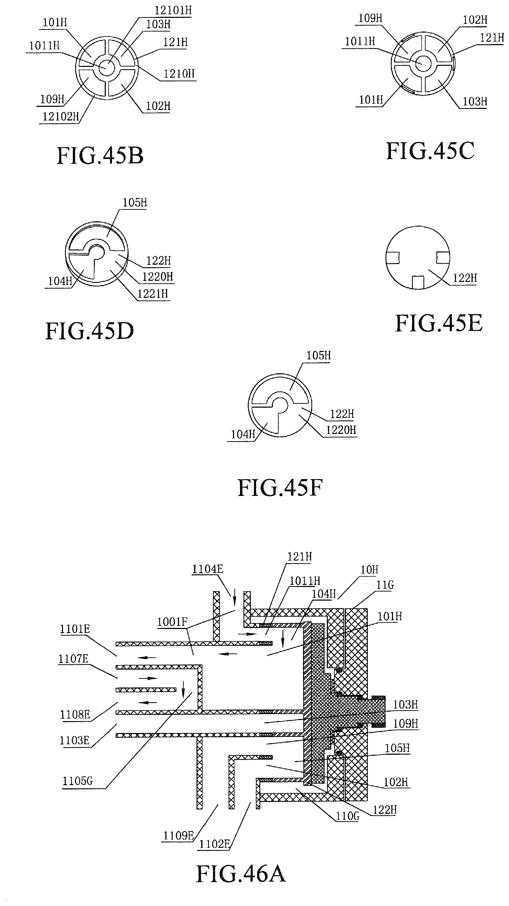

As shown in FIG.42D, FIG.46A to FIG.46C, the valve body 11G of the control valve 10H of the faucet water softener of the embodiment of the present invention further defines a softened water inlet 1107E and a softened water outlet 1108E, wherein the softened water inlet 1107E of the valve body 11G is adapted to be communicated with the second communicating opening 302 of the water treatment device 1, the softened water inlet 1107E is further communicated with the softened water outlet 1108E. It can be understood that the softened water inlet 1107E of the valve body 11G is communicated with the second communicating opening 302 of the water treatment device 1 through the second hose 32. As shown in FIG.42D, FIG.46A to FIG.46C, the valve body 11G of the control valve 10H of the faucet water softener of the embodiment of the present invention further defines a guiding passage 1105G, wherein the guiding passage 1105G of the valve body 11G is communicated with the softened water inlet 1107E and the softened water outlet 1108E, such that the softened water inlet 1107E and the softened water outlet 1108E are communicated with each other.

As shown in FIG.1, FIG.41A to FIG.42E and FIG.46A, the control valve 10H of the faucet water softener according to the embodiment of the present invention further has a softening working position, wherein when the control valve 10H is under the softening working position, the valve core 12H of the control valve 10H defines a first communicating passage 1001H, wherein the first communicating passage 1001H is communicated with the first opening 1101E and the raw water inlet 1104E of the valve body 11G respectively. Accordingly, when the control valve 10H is under the softening working position, under the action of water pressure, the raw water or the faucet water flows into the raw water inlet 1104E of the valve body 11G of the control valve 10H, and then flows to the first opening 1101E of the valve body 11G through the first communicating passage 1001H, so as to further flow to the water treatment device 1 through the first communicating opening 301 of the water treatment device 1, after the raw water is softened by the water treatment device 1, and the generated softened water can flow out from the water treatment device 1 through the second communicating opening 302 of the water treatment device 1. Since the softened water inlet 1107E and the softened water outlet 1108E are communicated with each other, the softened water flowing out of the second communicating opening 302 of the water treatment device 1 flows out and is supplied through the softened water inlet 1107E and the softened water outlet 1108E in sequence. It can be understood that when the control valve 10H of the faucet water softener according to the embodiment of the present invention is controlled to be in the softening working position, the faucet water softener of the present invention is controlled to be in its softening working state. Preferably, the softened water outlet 1108E has a porous structure, it can be understood that the water outlet of the porous structure is more conducive to improving the user's experience of using softened water and saving water.

As shown in FIG.1, FIG.41A to FIG.42E and FIG.46B, the control valve 10H of the faucet water softener according to the embodiment of the present invention has a regenerating working position, wherein when the control valve 10H is under the regenerating working position, the valve core 12H of the control valve 10H defines a second communicating passage 1002H and a third communicating passage 1003H, wherein the second communicating passage 1002H is communicated with the second opening 1102E of the valve body 11G and the raw water inlet 1104E respectively, the third communicating passage 1003H is communicated with the first opening 1101E of the valve body 11G and the third opening 1103E respectively. Correspondingly, when the control valve 10H is in the regenerating working position, raw water or faucet water flows into the raw water inlet 1104E of the valve body 11G of the control valve 10H under the action of water pressure, and it flows to the second opening 1102E of the valve body 11G through the second communicating passage 1002H, and then flows into the ejecting opening 182E of the injector 18E and is ejected, it is mixed with a solution from the brine opening 181E of the injector 18E to generate a regeneration solution, the regeneration solution flows into the third opening 1103E of the valve body 11G through the injecting opening 183E of the injector 18E, and then flows into the first opening 1101E of the valve body 11G through the third communicating passage 1003H, and the regeneration solution flows into the water treatment device 1 through the communicating opening 301 of the water treatment device 1 to regenerate the water treatment materials or mechanisms of the water treatment device 1, such as a softening material, and then the waste water from the regeneration of the water treatment device 1 flows out through the second communicating opening 302 of the water treatment device 1, and then is exhausted through the softened water inlet 1107E and the softened water outlet 1108E of the valve body 11G in sequence. It can be understood that when the control valve 10H of the faucet water softener according to the embodiment of the present invention is controlled to be in the regenerating working position, the faucet water softener of the present invention is controlled to be in its regenerating working state. It is worth mentioning that when the control valve 10H is in the regenerating working position, the waste water generated after regeneration flows out from the softened water outlet 1108E, and at this time, the softened water outlet 1108E is used as a drain outlet.

As shown in FIG.1, FIG.41A to FIG.42E and FIG.46C, the control valve 10H of the faucet water softener according to the embodiment of the present invention further has a raw water supplying working position, wherein when the control valve 10H is under the raw water supplying working position, the valve core 12H of the control valve 10H defines a fourth communicating passage 1004H, wherein the fourth communicating passage 1004H is communicated with the raw water outlet 1109E and the raw water inlet 1104E of the valve body 11G respectively. Accordingly, when the control valve 10H is under the raw water supplying working position, under the action of water pressure, the raw water or the faucet water flows into the raw water inlet 1104E of the valve body 11G of the control valve 10H, and then flows into the raw water opening 1109E of the valve body 11G through the fourth communicating passage 1004H, such that the raw water can be provided by the raw water opening 1109E. It can be understood that when the control valve 10H of the faucet water softener according to the embodiment of the present invention is controlled to be in the raw water supplying working position, the faucet water softener of the present invention is controlled to be in its raw water supplying working state.

Alternatively, the first opening 1101E of the valve body 11G of the control valve 10H of the faucet water softener according to the embodiment of the present invention is communicated with the second communicating opening 302 of the water treatment device 1, and the softened water inlet 1107E of the valve body 11G is communicated with the first communicating opening 301 of the water treatment device 1, the raw water inlet 1104E of the valve body 11G is communicated with the faucet water source, and the ejecting opening 182E of the injector 18E is communicated with the second opening 1102E of the valve body 11G, the injecting opening 183E of the injector 18E is communicated with the third opening 1103E of the valve body 11G. Correspondingly, when the control valve 10H is in the softening working position, raw water (or faucet water) flows into the raw water inlet 1104E of the valve body 11G of the control valve 10H under the action of water pressure, and flows to the first opening 1101E of the valve body 11G through the first communicating passage 1001H, and further flows into the water treatment device 1 from the second communicating opening 302 of the water treatment device 1, and the softened water after the softening treatment of the water treatment device 1 flows out from the first communicating opening 301 of the water treatment device 1. Since the softened water inlet 1107E and the softened water outlet 1108E are communicated with each other, the softened water flowing out of the first communicating opening 301 of the water treatment device 1 flows through the softened water inlet 1107E and the softened water outlet 1108E in sequence and are supplied; when the control valve 10H is in the regenerating working position, the faucet water or raw water flows into the raw water inlet 1104E of the valve body 11G under the action of water pressure, and flows to the second opening 1102E of the valve body 11G through the second communicating passage 1002H, and then flows into the ejecting opening 182E of the injector 18E, after it is injected through the injector 18E, and it is mixed with the salt solution (such as sodium chloride solution) from the brine opening 181E, so as to generate a regeneration solution, and the regeneration solution flows into the third opening 1103E of the valve body 11G through the injecting opening 183E of the injector 18E, and then flows into the first opening 1101E of the valve body 11G through the third communicating passage 1003H, and after the regeneration solution flows into the water treatment device 1 from the second communicating opening 302 of the water treatment device 1 to regenerate the water treatment materials or mechanisms of the water treatment device 1, such as, a softening resin, the waste water generated after regeneration flows out from the first communicating opening 301 of the water treatment device 1, and then flows out through the softened water inlet 1107E and the softened water outlet 1108E of the valve body 11G in sequence.

As shown in FIG.1, FIG.40A to FIG.48C, the control valve 10H of the faucet water softener according to the embodiment of the present invention is a plane valve, wherein the valve core 12H of the plane valve 10H further comprises a fixed disk 121H and a rotatable disk 122H, wherein the fixed disk 121H has a first fluid control surface 1210H, the rotatable disk 122H has a second fluid control surface 1220H, wherein the rotatable disk 122H and the fixed disk 121H are both provided inside the valve cavity 110G of the valve body 11G of the control valve 10H, wherein the second fluid control surface 1220H of the rotatable disk 122H is provided on the first fluid control surface 1210H of the fixed disk 121H, and the rotatable disk 122H is provided to be capable of rotating relative to the fixed disk 121H. Preferably, the outer diameter of the valve core 12H of the control valve 10H (the plane valve 10H) is not greater than 35 mm, so as to reduce the size of the inner diameter of the valve cavity 110G of the valve body 11G and the overall structural size of the control valve 10H, such that the plane valve 10H is more suitable for being installed on a faucet. More preferably, the outer diameter of the valve core 12H of the control valve 10H is not greater than 25 mm. Most preferably, the outer diameters of the rotatable disk 122H and the fixed disk 121H of the plane valve 10H are not greater than 35 mm. Preferably, the valve cavity 110G of the control valve 10H is arranged to be horizontal, so that the user can easily and manually operate the control valve 10H.

As shown in FIG.1, FIG.40A to FIG.48C, the plane valve 10H of the faucet water softener according to the embodiment of the present invention has a first channel 101H, a second channel 102H, a third channel 103H, a fourth channel 104H, a fifth channel 105H and a raw water outlet channel 109H and a raw water inlet channel 1011H, wherein the first channel 101H, the third channel 103H, the second channel 102H, the raw water outlet channel 109G and the raw water inlet channel 1011H are respectively provided at the fixed disk 121H and extended from the first fluid control surface 1210H of the fixed disk 121H; the fourth channel 104H and the fifth channel 105H are respectively provided at the rotatable disk 122H and extended from the second fluid control surface 1220H of the rotatable disk 122H, wherein the first channel 101H is communicated with the first opening 1101E, the third channel 103H is communicated with the third opening 1103E, the second channel 102H is communicated with the second opening 1102E, the raw water outlet channel 109H is communicated with the raw water outlet 1109E, the raw water inlet channel 1011H is communicated with the raw water inlet 1104E, the fourth channel 104G is communicated with the raw water inlet channel 1011H, wherein when the plane valve 10H is under the softening working position, the fourth channel 104H of the plane valve 10H is communicated with the raw water inlet channel 1011H and the first channel 101H respectively, so as to define the first communicating passage 1001H communicated with the raw water inlet 1104E and the first opening 1101E respectively. Preferably, both the fourth channel 104H and the fifth channel 105H of the rotatable disk 122H are communicating blind holes.

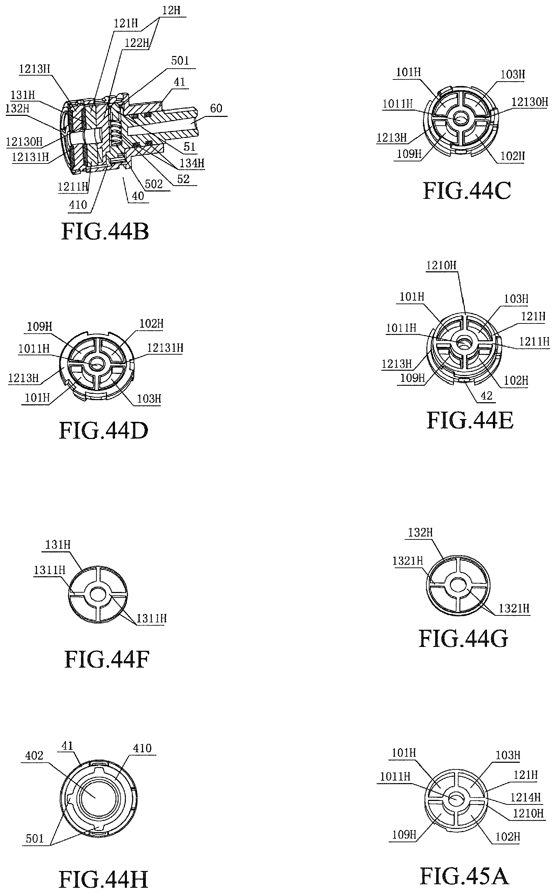

As shown in FIG.45A to FIG.45F and FIG.47A to FIG.48C, the first fluid control surface 1210H of the fixed disk 121H of the plane valve 10H of the faucet water softener according to the embodiment of the present invention defines an inner portion 12101H and an edge portion 12102H extended outward from the inner portion12101H, the raw water inlet channel 1011H is arranged at the inner portion12101H of the fixed disk 121H, the first channel 101H, the third channel 103H, the second channel 102H and the raw water outlet channel 109H of the plane valve 10H are arranged clockwise at the edge portion 12102H of the first fluid control surface 1210H of the fixed disk 121H in this order. Preferably, the first channel 101H, the third channel 103H, the second channel 102H and the raw water outlet channel 109H of the plane valve 10H are arranged anticlockwise at the edge portion 12102H of the first fluid control surface 1210H of the fixed disk 121H in this order. In other words, the first channel 101H, the third channel 103H, the second channel 102H and the raw water outlet channel 109H of the plane valve 10H are arranged to surround the raw water inlet channel 1011H. Alternatively, the first channel 101H, the third channel 103H, the second channel 102H, the raw water outlet channel 109H and the raw water inlet channel 1011H of the plane valve 10H are spacedly arranged at the first fluid control surface 1210H of the fixed disk 121H of the plane valve 10H in this order, the fourth channel 104H and the fifth channel 105H of the plane valve 10H are spacedly arranged at the second fluid control surface 1220H of the rotatable disk 122H.

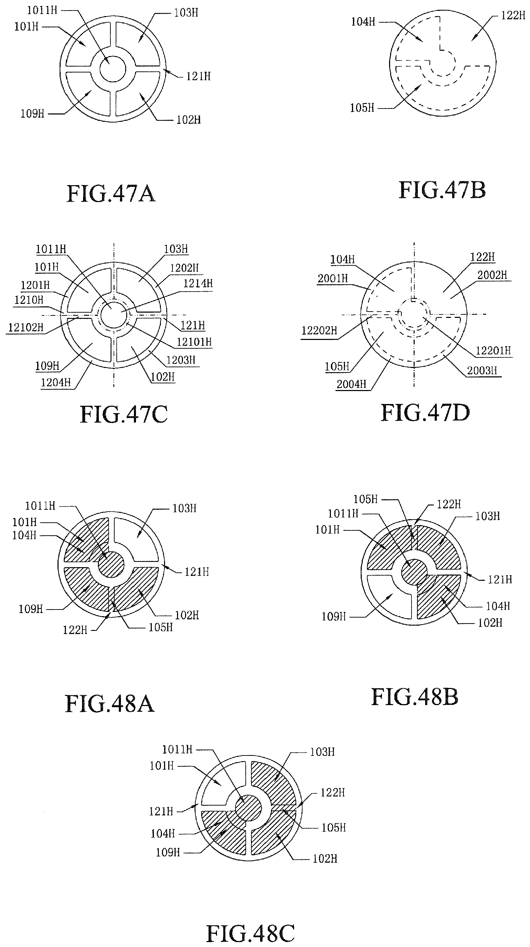

As shown in FIG.46A and FIG.48A, the rotatable disk 122H of the plane valve 10H of the faucet water softener according to the embodiment of the present invention can rotate relative to the fixed disk 121H, so that the plane valve 10H has a softening working position, wherein when the plane valve 10H is in the softening working position, the fourth channel 104H of the plane valve 10H is communicated with the raw water inlet channel 1011H and the first channel 101H respectively, thereby forming the first communicating passage 1001H communicated respectively with the raw water inlet 1104E and the first opening 1101E respectively. As shown in FIG.48A, when the plane valve 10H is in the softening working position, the third channel 103H is blocked by the rotatable disk 122H.

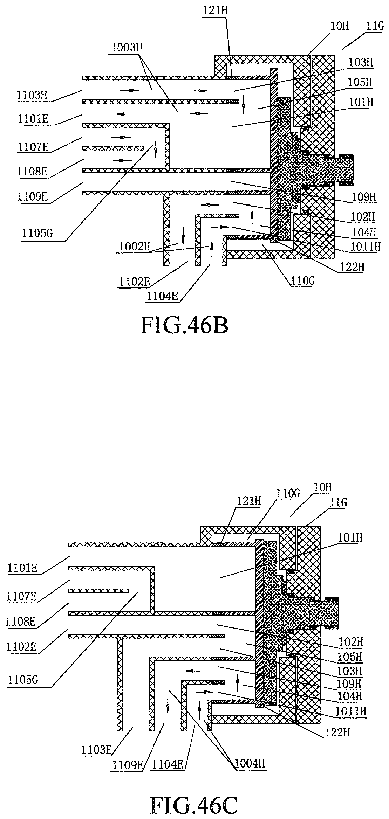

As shown in FIG.46B and FIG.48B, the plane valve 10H of the faucet water softener according to the embodiment of the present invention further has a regenerating working position, wherein when the plane valve 10H is in the regeneration working position, the fourth channel 104H of the plane valve 10H is communicated with the raw water inlet channel 1011H and the second channel 102H respectively, thereby forming the second communicating passage 1002H communicated respectively with the raw water inlet 1104E and the second opening 1102E, and the fifth channel 105H is communicated with the first channel 101H and the third channel 103H respectively, thereby forming the third communicating passage 1003H communicated respectively with the first opening 1101E and the third opening 1103E. As shown in FIG.48B, when the plane valve 10H is in the regenerating working position, the raw water outlet channel 109H are blocked by the rotatable disk 122H.

As shown in FIG.46C and FIG.48C, the plane valve 10H of the faucet water softener according to the embodiment of the present invention further has a raw water supplying working position, wherein when the plane valve 10H is in the raw water supplying working position, the fourth channel 104H is communicated with the raw water inlet channel 1011H and the raw water outlet channel 109H respectively, thereby forming the fourth communicating passage 1004H communicated respectively with the raw water inlet 1104E and the raw water outlet 1109E. As shown in FIG.48C, the first channel 101H is blocked by the rotatable disk 122H.

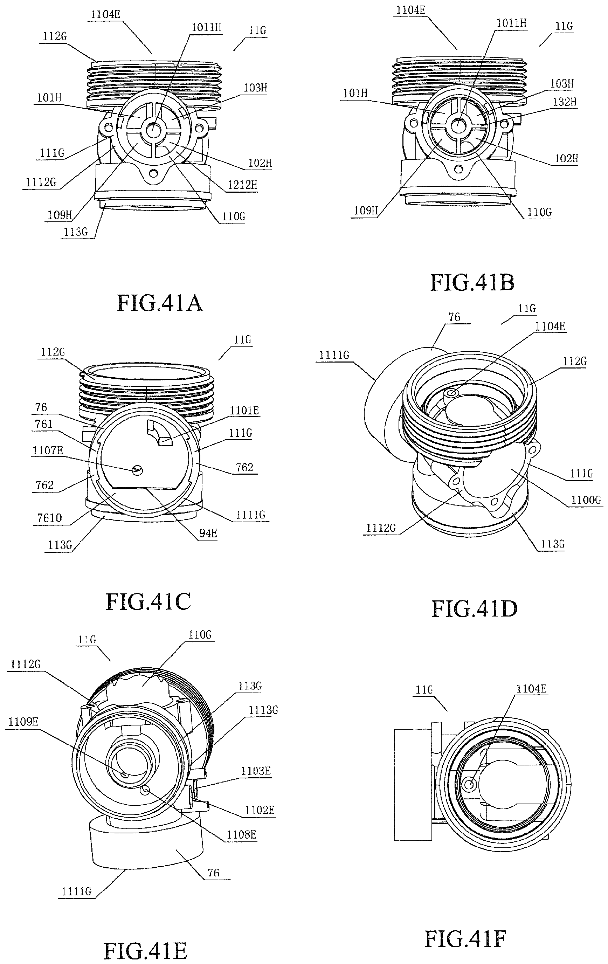

As shown in FIG.41A to FIG.42E, the valve body 11G of the faucet water softener according to the embodiment of the present invention includes a body portion 111G, an upper end 112G extended upward from the body portion 111G, and a lower end 113G extended downwardly from the body portion 111G, wherein the body portion 111G defines the valve cavity 110G. Preferably, the fixed disk 121H is integrated with the inner wall of the body portion 111G.

As shown in FIG.41A to FIG.42E, the first opening 1101E and the softened water inlet 1107E of the valve body 11G of the faucet water softener according to the embodiment of the present invention are provided at the body portion 111G, and the raw water inlet 1104E is arranged at the upper end 112G of the valve body 11G.

As shown in FIG.41A to FIG.42E, the softened water outlet 1108E and the raw water outlet 1109E of the valve body 11G of the faucet water softener according to the embodiment of the present invention are provided at the lower end 113G of the valve body 11G.

As shown in FIG.41A to FIG.42E, the body portion 111G of the valve body 11G of the faucet water softener according to the embodiment of the present invention forms a first side 1111G, a second side 1112G and a third side 1113G, wherein the third side 1113G extended between the first side 1111G and the second side 1112G, the valve cavity 110G has a valve cavity opening 1100G, wherein the first opening 1101E and the softened water inlet 1107E are provided at the first side 1111G of the body portion 111G, the valve cavity opening 1100G is provided at the second side 1112G of the body portion 111G, the second opening 1102E and the third opening 1103E are provided on the third side 1113G of the body portion 111G. The first opening 1101E and the softened water inlet 1107E are provided at the first side 1111G of the body portion 111G, the valve cavity opening 1100G is provided at the second side 1112G of the body portion 111G, the second opening 1102E and the third opening 1103E is provided at the third side 1113G of the body portion 111G, which not only facilitates the installation of the control valve 10H on the faucet, but also facilitates the connection between the control valve 10H and the water treatment device 1 and the user's manual operation of the control valve 10H.

As shown in FIG.41A to FIG.42E, further, the softened water outlet 1108E and the raw water outlet 1109E are spacedly defined at the lower end 113G of the valve body 11G. Preferably, the softened water outlet 1108E and the raw water outlet 1109E are spacedly formed at the lower end 113G of the valve body 11G. More preferably, the first side 1111G and the second side 1112G of the body portion 111G are disposed opposite to each other.

As shown in FIG.41C, FIG.41A and FIG.43A to FIG.44H, the fixed disk 121H of the valve core 12H of the plane valve 10H of the faucet water softener according to the embodiment of the present invention comprises an upper end portion 1211H, a lower end portion 1212H and a fixing portion 1213H provided between the upper end portion 1211H and the lower end portion 1212H, wherein the upper end portion 1211H defines the first fluid control surface 1210H of the fixed disk 121H, and the lower end portion 1212H is disposed at the valve cavity 110G of the valve body 11G. Preferably, the lower end portion 1212H of the fixed disk 121H of the valve core 12H of the plane valve 10H of the faucet water softener of the present invention is integrally provided at the inner wall of the valve body 11G of the plane valve 10H.

As shown in FIG.41C, FIG.41A and FIG.43A to FIG.44H, the plane valve 10H of the faucet water softener according to the embodiment of the present invention further comprises a sealing assembly 13H, wherein the sealing assembly 13H has a first seal 131H, wherein the first seal 131H is disposed between the upper end portion 1211H and the fixing portion 1213H of the fixed disk 121H. Further, the first seal 131H has a plurality of first sealing strips 1311H, the fixing portion 1213H of the fixed disk 121H has a plurality of first sealing grooves 12130H, wherein the first sealing grooves 12130H are disposed to respectively surround the first channel 101H, the third channel 103H, the second channel 102H, the raw water outlet channel 109H and the raw water inlet channel 1011H of the fixed disk 121H, the first sealing strips 1311H of the first seal 131H are disposed according to the first sealing grooves 12130H of the fixing portion 1213H, so that the first sealing strips 1311H of the first seal 131H can be engaged with the first sealing grooves 12130H of the fixing portion 1213H respectively and realizes the sealing between the upper end portion 1211H and the fixing portion 1213H of the fixed disk 121H. It is appreciated that the first sealing grooves 12130H are defined at one side of the fixing portion 1213H, which faces the upper end portion 1211H. Further, the sealing assembly 13H has a second seal 132H, wherein the second seal 132H is disposed between the fixing portion 1213H and the lower end portion 1212H of the fixed disk 121H. Further, the second seal 132H has a plurality of second sealing strips 1321H, the fixing portion 1213H of the fixed disk 121H has a plurality of second sealing grooves 12131H, wherein the first sealing grooves 12131H are disposed to respectively surround the first channel 101H, the third channel 103H, the second channel 102H, the raw water outlet channel 109H and the raw water inlet channel 1011H of the fixed disk 121H of the fixed disk 121H, the second sealing strips 1321H of the second seal 132H are disposed according to the second sealing grooves 12131H of the fixing portion 1213H, so that the second sealing strips 1321H of the second seal 132H can be engaged with the second sealing grooves 12131H of the fixing portion 1213H respectively and realizes the sealing between the upper end portion 1211H and the fixing portion 1213H of the fixed disk 121H. It is appreciated that the second sealing grooves 12131H are defined at one side of the fixing portion 1213H, which faces the lower end portion 1212H.

As shown in FIG.41C, FIG.41A and FIG.43A to FIG.44H, the accommodation chamber 410 of the fixing holder 41 of the fixing device 40 of the faucet water softener according to the embodiment of the present invention is disposed to be adapted to accommodate the upper end portion 1211H of the fixed disk 121H and the rotatable disk 122H inside the accommodation chamber 410. As shown in FIG.41C, FIG.41A and FIG.43A to FIG.44H, further, the upper end portion 1211H of the fixed disk 121H is adapted to be detachably clamped at the fixing portion 1213H of the fixed disk 121H, the fixing portion 1213H of the fixed disk 121H is adapted to be detachably clamped at the lower end portion 1212H of the fixed disk 121H, so that the upper end portion 1211H of the fixed disk 121H cannot rotate relative to the fixing portion 1213H, the fixing portion 1213H of the fixed disk 121H cannot rotate relative to the lower end portion 1212H.

As shown in FIG.45A to FIG.48C, the first fluid control surface 1210H of the fixed disk 121H of the plane valve 10H of the faucet water softener according to the embodiment of the present invention has an inner portion 12101H and an edge portion 12102H extended outward from the inner portion 12101H, which are shown by the dashed lines, wherein the inner portion 12101H and the edge portion 12102H are provided at a top end portion 1214H of the fixed disk 121H, and the edge portion 12102H (or the part other than the inner portion 12101H) of the first fluid control surface 1210H are equally divided into a first portion 1201H, a second portion 1202H, a third portion 1203H and a fourth portion 1204H, which are shown by the dashed lines, the second fluid control surface 1220H of the rotatable disk 122H of the plane valve 10H has an inner region 12201H and an edge region 12202H extended outward from the inner region 12201H, which are shown by the dashed lines, wherein the inner region 12201H and the edge region 12202H are provided at a bottom end portion 1221H of the rotatable disk 122H, and the edge region 12202H (or the part other than the inner region 12201H) of the second fluid control surface 1220H are equally divided into a first region 2001H, a second region 2002H, a third region 2003H and a fourth region 2004H, which are shown by the dashed lines, wherein the first channel 101H is extended downward from the first portion 1201H of the first fluid control surface 1210H of the fixed disk 121H, the third channel 103H is extended downward from the second portion 1202H of the first fluid control surface 1210H of the fixed disk 121H, the second channel 102H is extended downward from the third portion 1203H of the first fluid control surface 1210H of the fixed disk 121H, the raw water outlet channel 109H is extended downward from the fourth portion 1204H of the first fluid control surface 1210H of the fixed disk 121H, the fourth channel 104H is extended upward from the first region 2001H and the inner region 12201H of the second fluid control surface 1220H of the rotatable disk 122H, the fifth channel 105H is extended downward from the third region 2003H and the fourth region 2004H of the second fluid control surface 1220H of the rotatable disk 122H, the raw water inlet channel 1011H is extended downward from the inner portion 12101H of the first fluid control surface 1210H of the fixed disk 121H. As shown in FIG.47C and FIG.47D, preferably, the edge portion 12102H of the first fluid control surface 1210H are equally divided clockwise into the first portion 1201H, the second portion 1202H, the third portion 1203H and the fourth portion 1204H, the edge region 12202H of the second fluid control surface 1220H of the rotatable disk 122H of the plane valve 10H are equally divided clockwise into the first region 2001H, the second region 2002H, the third region 2003H and the fourth region 2004H. In other words, the first fluid control surface 1210H of the fixed disk 121H of the plane valve 10H defines four equal divisions, and the second fluid control surface 1220H of the rotatable disk 122H of the plane valve 10H defines four equal divisions, wherein when the rotatable disk 122H of the plane valve 10H is rotated until the first equal division (the first region 2001H) of the second fluid control surface 1220H of the rotatable disk 122H directly faces the first equal division (the first portion 1201H) of the first fluid control surface 1210H of the fixed disk 121H, the third equal division (the third region 2003H) and the fourth equal division (the fourth region 2004H) of the second fluid control surface 1220H of the rotatable disk 122H of the plane valve 10H directly faces the third equal division (the third portion 1203H) and the fourth equal division (the fourth portion 1204H) of the first fluid control surface 1210H of the fixed disk 121H, so that the fourth channel 104H of the plane valve 10H is communicated with the raw water inlet channel 1011H and the first channel 101H respectively, the fifth channel 105H is communicated with the second channel 102H and the raw water outlet channel 109H respectively, so as to allow the faucet water to flow into the water treatment device 1 through the raw water inlet 1104E, the raw water inlet channel 1011H, the fourth channel 104H, the first channel 101H, the first opening 1101H and the first communicating opening 301 of the water treatment device 1, and the softened water after softening treatment of the water treatment device 1 flows out from the second communicating opening 302 of the water treatment device 1, and then flows out and is supplied to the user through the softened water inlet 1107E and the softened water outlet 1108E. Accordingly, the faucet water softener is at the softening working position. Further, when the rotatable disk 122H of the plane valve 10H is rotated until the first equal division (the first region 2001H) of the second fluid control surface 1220H of the rotatable disk 122H directly faces the fourth equal division (the fourth portion 1204H) of the first fluid control surface 1210H of the fixed disk 121H, the third equal division (the third region 2003H) and the fourth equal division (the fourth region 2004H) of the second fluid control surface 1220H of the rotatable disk 122H of the plane valve 10H directly face the second equal division (the second portion 1202H) and the third equal division (the third portion 1203H) of the first fluid control surface 1210H of the fixed disk 121H, so that the fourth channel 104H of the plane valve 10H is communicated with the raw water inlet channel 1011H and the raw water outlet channel 109H respectively, the fifth channel 105H of the plane valve 10H is communicated with the second channel 102H and the third channel 103H respectively, so as to allow the raw water to flow through the raw water inlet 1104E, the raw water inlet channel 1011H, the fourth channel 104H, the raw water outlet channel 109H, and then flow out through the raw water outlet 1109E and be supplied. Accordingly, the faucet water softener is at the raw water supplying working position. Further, when the rotatable disk 122H of the plane valve 10H is rotated until the first equal division (the first region 2001H) of the second fluid control surface 1220H of the rotatable disk 122H directly faces the third equal division (the third portion 1203H) of the first fluid control surface 1210H of the fixed disk 121H, the third equal division (the third region 2003H) and the fourth equal division (the fourth region 2004H) of the second fluid control surface 1220H of the rotatable disk 122H of the plane valve 10H directly faces the first equal division (the first portion 1201H) and the second equal division (the second portion 1202H) of the first fluid control surface 1210H of the fixed disk 121H, so that the fourth channel 104H is communicated with the raw water inlet channel 1011H and the second channel 102H respectively, the fifth channel 105H of the plane valve 10H is communicated with the first channel 101H and the third channel 103H respectively, so as to allow the faucet water to flow from the raw water inlet 1104E, the raw water inlet channel 1011H, the fourth channel 104H and the second channel 102H to the second opening 1102E, and then flows into the ejecting opening 182E of the injector 18E, and after the faucet water is injected by the injector 18E, the faucet water is mixed with the liquid from the brine opening 181E to generate a regeneration solution, and then the regeneration solution flows into the third opening 1103E through the injecting opening 183E of the injector 18E, and then flows through the third channel 103H, the fifth channel 105H, the first channel 101H and the first opening 1101E to the water treatment device 1, the regeneration solution flows into the water treatment device 1 through the first communicating opening 301 of the water treatment device 1 to regenerate the water treatment material or mechanism of the water treatment device 1, for example, softening the resin, the waste water generated after regeneration flows out through the second communicating opening 302 of the water treatment device 1, and then flows through the softened water inlet 1107E and the softened water outlet 1108E. Accordingly, the faucet water softener is at the regenerating working state.

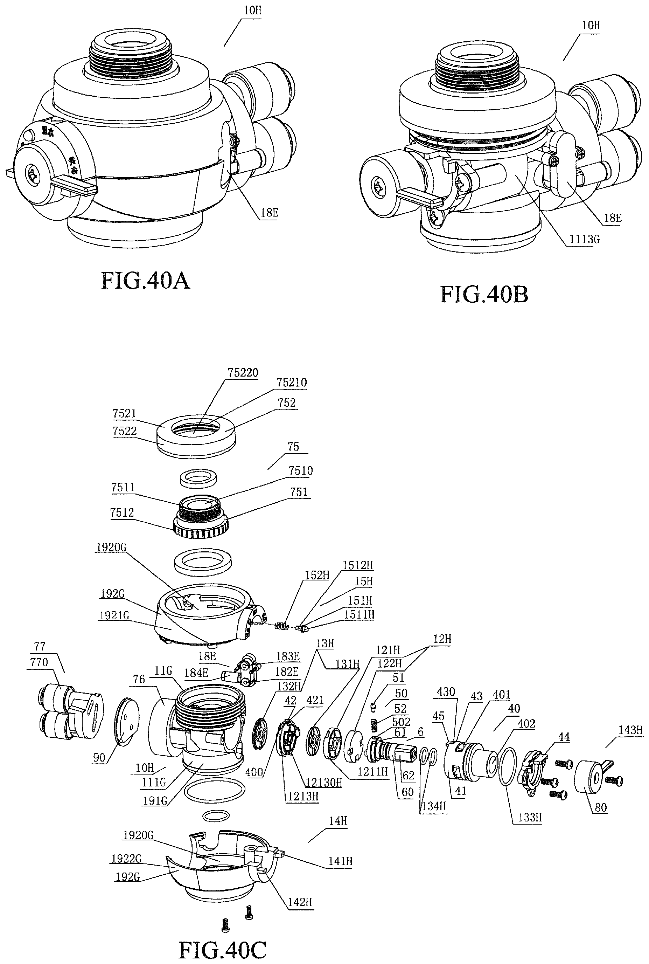

It is worth mentioning that when the users need to switch the faucet water softener according to the embodiment of the present invention from the softening working state to the raw water supplying working state, only need to anticlockwise rotate the rotatable disk 122H of the plane valve 10H for one equal division angle, so that the first region 2001H of the second fluid control surface 1220H of the rotatable disk 122H directly faces the fourth portion 1204H of the first fluid control surface 1210H of the fixed disk 121H; when the users need to switch the faucet water softener according to the embodiment of the present invention from the raw water supplying working state to the regenerating working state, only need to anticlockwise rotate the rotatable disk 122H of the plane valve 10H for one equal division angle again, so that the first region 2001H of the second fluid control surface 1220H of the rotatable disk 122H directly faces the third portion 1203H of the first fluid control surface 1210H of the fixed disk 121H, as shown in FIG.40C, FIG.47A to FIG.48C. In other words, the structure of the plane valve 10H of the faucet water softener of the present invention enables the three working states of the softening working state, the raw water supplying working state and the regenerating working state to be continuously distributed, so that the complete switching between two adjacent working states of the softening working state, the raw water supplying working state and the regenerating working state of the faucet water softener of the present invention can be realized only by rotating the rotatable disk 122H of the plane valve 10H for one equal division angle. The switching mode between the three working states of the faucet water softener determined by the structure of the plane valve 10H of the faucet water softener of the present invention will make the switching between the three working states of the faucet water softener of the present invention more in line with the usage habits of the users and not easily cause an error in working state switching due to the different rotation angles when the users switch the working states. It is appreciated that since the edge portion 12102H of the first fluid control surface 1210H of the plane valve 10H of the faucet water softener according to the embodiment of the present invention is divided into four equal divisions, and the edge region 12202H of the second fluid control surface 1220H of the rotatable disk 122H of the plane valve 10H is divided into four equal divisions, accordingly, each time the faucet water softener of the present invention realizes one working state switching, the rotatable disk 122H of the plane valve 10H rotates 90 degree. Alternatively, the edge portion 12102H of the first fluid control surface 1210H are equally divided anticlockwise into the first portion 1201H, the second portion 1202H, the third portion 1203H and the fourth portion 1204H, the edge region 12202H of the second fluid control surface 1220H of the rotatable disk 122H of the plane valve 10H are equally divided anticlockwise into the first region 2001H, the second region 2002H, the third region 2003H and the fourth region 2004H. In other words, the structure of the plane valve 10H of the faucet water softener of the present invention enables the three working states of the regenerating working state, the raw water supplying working state and the softening working state to be continuously distributed, so that the complete switching between two adjacent working states of the regenerating working state, the raw water supplying working state and the softening working state of the faucet water softener of the present invention can be realized only by rotating the rotatable disk 122H of the plane valve 10H for one equal division angle.

As shown in Fig.40C and FIG.47A to FIG.48C, the plane valve 10H of the faucet water softener according to the embodiment of the present invention further comprises a stopper 14H, wherein the stopper 14H is provided to prevent the invalid rotating of the rotatable disk 122H of the plane valve 10H relative to the fixed disk 121H. In other words, when the rotatable disk 122H of the plane valve 10H is rotated until the first region 2001H of the second fluid control surface 1220H of the rotatable disk 122H directly faces the first portion 1201H of the first fluid control surface 1210H of the fixed disk 121H, the faucet water softener of the present invention is switched to the softening working state, rotate clockwise the rotatable disk 122H of the plane valve 10H for an equal angle to communicate the fourth channel 104H of the plane valve 10H with the raw water inlet channel 1011H and the third channel 103H respectively, so as to make the raw water flow from the raw water inlet channel 1011H, the fourth channel 104H to the third channel 103H and further flow out through the third opening 1103E, the ejecting opening 182E and the brine opening 181E of the injector 18E. When the rotatable disk 122H of the plane valve 10H is rotated until the first region 2001H of the second fluid control surface 1220H of the rotatable disk 122H directly faces the third portion 1201H of the first fluid control surface 1210H of the fixed disk 121H, the faucet water softener of the present invention is switched to the regenerating working state, rotate anticlockwise the rotatable disk 122H of the plane valve 10H for an equal angle to communicate the fourth channel 104H of the plane valve 10H with the raw water inlet channel 1011H and the third channel 103H respectively, so as to make the faucet water flow from the raw water inlet channel 1011H, the fourth channel 104H to the third channel 103H and further flow out through the third opening 1103E, the ejecting opening 182E and the brine opening 181E of the injector 18E. The above two rotation modes of the rotatable disk 122H of the plane valve 10H relative to the fixed disk 121H cannot make the faucet water softener of the present invention realize practical functions, which are invalid rotations.

As shown in Fig.40C and FIG.47A to FIG.48C, the stopper 14H of the faucet water softener according to the embodiment of the present invention comprises a first stopping member 141H and a second stopping member 142H, wherein the first stopping member 141H and the second stopping member 142H are respectively provided on the valve body 11G, the first stopping member 141H is arranged to prevent the knob 80 from further clockwise rotation when the rotatable disk 122H of the plane valve 10H is rotated so that the first region 2001H of the second fluid control surface 1220H of the rotatable disk 122H directly faces the first portion 1201H of the first fluid control surface 1210H of the fixed disk 121H; the second stopping member 142H is provided to prevent the knob 80 from further anticlockwise rotation when the rotatable disk 122H of the plane valve 10H is rotated so that the rotatable disk 122H of the plane valve 10H is rotated until the first region 2001H of the second fluid control surface 1220H of the rotatable disk 122H directly faces the third portion 1203H of the first fluid control surface 1210H of the fixed disk 121H, so as to prevent the rotatable disk 122H of the plane valve 10H from rotating meaninglessly relative to the fixed disk 121H. The stopper 14H of the faucet water softener according to the embodiment of the present invention further comprises a blocker 143H, wherein the blocker 143H is provided at the knob 80 and protruded outward from the knob 80, so as to enable the blocker 143H to be blocked by the first stopping member 141H when the first region 2001H of the second fluid control surface 1220H of the rotatable disk 122H directly faces the first portion 1201H of the first fluid control surface 1210H of the fixed disk 121H, and be blocked by the second stopping member 142H when the rotatable disk 122H of the plane valve 10H is rotated so that the rotatable disk 122H of the plane valve 10H is rotated until the first region 2001H of the second fluid control surface 1220H of the rotatable disk 122H directly faces the third portion 1203H of the first fluid control surface 1210H of the fixed disk 121H.

As shown in FIG.40C, FIG.47A to FIG.48C, the plane valve 10H of the faucet water softener according to the embodiment of the present invention further comprises a reminding mechanism 15H, wherein the reminding mechanism 15H is provided to give a block to the knob 80 when the user switches the faucet water softener of the present invention to the regenerating working state, so that the user has to significantly increase the rotating force of rotating the knob 80, the knob 80 can be rotated to continue to rotate and switch the faucet water softener of the present invention to the regenerating working state. In this way, the user can be reminded that the faucet water softener of the present invention is switched to the regenerating working state.

As shown in FIG.40C, FIG.47A to FIG.48C, the reminding mechanism 15H of the plane valve 10H of the faucet water softener according to the embodiment of the present invention comprises a driven member 151H and an elastic element 152H, wherein the driven member 151H comprises a driven end 1511H and a fixed end 1512H extended from the driven end 1511H, wherein the elastic element 152H is provided at the fixed end 1512H, the driven end 1511H is provided to face the knob 80, wherein when the user rotates the rotatable disk 122H of the plane valve 10H to make the first region 2001H of the second fluid control surface 1220H of the rotatable disk 122H directly face the third portion 1203H of the first fluid control surface 1210H of the fixed disk 121H, the driven end 1511H of the driven member151H of the reminding mechanism 15H will block the blocker 143H, when the user increases the force to rotate the knob 80, the blocker 143H drives the driven end 1511H of the driven member 151H, so as to deform the elastic element 152H and continue to rotate the knob 80, and make the rotatable disk 122H continue to rotate and the first region 2001H of the second fluid control surface 1220H of the rotatable disk 122H directly face the third portion 1203H of the first fluid control surface 1210H of the fixed disk 121H. Preferably, the elastic element 152H is a spring.

As shown in FIG.40C, the valve body 11G further comprises a valve main body 191G and a valve housing 192G, wherein the valve housing 192G is provided on the outer surface of the valve main body 191G. It is appreciated that the first stopping member 141H, the second stopping member 142H and the reminding mechanism 15H are respectively provided at the valve housing 192H of the valve body 11G. Further, the valve housing 192G of the valve body 11G comprises an upper housing 1921G and a lower housing 1922G, wherein the upper housing 1921G and the lower housing 1922G of the valve housing 192G form a valve body cavity 1920G therebetween, wherein the valve body cavity 1920G is provided to receive the valve main body 191G of the valve body 11G inside the valve body cavity 1920G.

It is worth mentioning that the terms of first, second, third, fourth, fifth, sixth, seventh, and/or eighth herein are only used to name different components (or elements) of the present invention and distinguish between different components, elements and structures of the present invention, they themselves have no meaning of order or number.

Those skilled in the art should understand that the embodiments of the present invention shown in the above description and the accompanying drawings are only examples and do not limit the present invention.

The objects of the present invention have been completely and effectively realized. The function and structural principle of the present invention have been shown and explained in the above embodiments. Without departing from the principle, the embodiments of the present invention can be deformed or modified.

## Claims

1. A faucet water softener, comprising:
a water treatment device defining a first communicating opening and a second communicating opening, wherein the outer casing defines a first receiving chamber; and
a control valve adapted to be communicated with a faucet and comprising a valve body, a valve core and an injector, wherein the valve body defines a valve cavity, a first opening, a second opening, a third opening, a softened water inlet, a softened water outlet, a raw water inlet, a raw water outlet and a draining opening, wherein the valve core is provided inside the valve cavity, wherein the first opening of the valve body is adapted to be communicated with the first communicating opening of the water treatment device, the softened water inlet of the valve body is adapted to be communicated with the second communicating opening of the water treatment device, the raw water inlet of the valve body is adapted to be communicated with a raw water source, wherein the injector has an ejecting opening adapted for being communicated with the second opening of the valve body, an injecting opening adapted for being communicated with the third opening of the valve body, and a brine opening communicated with the ejecting opening and the injecting opening, respectively.

2. The faucet water softener, as recited in claim 1, wherein when the control valve is under a softening working position, the valve core of the control valve defines a first communicating passage communicated respectively with the first opening and the raw water inlet of the valve body and a second communicating passage communicated respectively with the softened water inlet and the softened water outlet of the valve body.

3. The faucet water softener, as recited in claim 2, wherein when the control valve is under a regenerating working position, the valve core of the control valve defines a third communicating passage, a fourth communicating passage and a fifth communicating passage, wherein the third communicating passage is communicated with the second opening and the raw water inlet of the valve body respectively, the fourth communicating passage is communicated with the first opening and the third opening respectively, and the fifth communicating passage is communicated with the softened water inlet and the draining opening of the valve body, respectively.

4. The faucet water softener, as recited in claim 3, wherein when the control valve is under a raw water supplying working position, the valve core of the control valve defines a sixth communicating passage communicated respectively with the raw water outlet and the raw water inlet of the valve body, respectively.

5. The faucet water softener, as recited in claim 2, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are provided inside the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel, a sixth channel, a seventh channel, an eighth channel and a raw water outlet channel, wherein the first channel, the third channel, the seventh channel, the eighth channel, the second channel and the raw water outlet channel are respectively provided at the fixed disk and extended from the first fluid control surface of the fixed disk; the fourth channel, the fifth channel and the sixth channel are respectively provided at the rotatable disk and extended from the second fluid control surface of the rotatable disk, wherein the first channel is communicated with the first opening, the third channel is communicated with the third opening, the seventh channel is communicated with the softened water inlet, the eighth channel is communicated with the softened water outlet, the second channel is communicated with the second opening, the raw water outlet channel is communicated with the raw water outlet, the fourth channel is communicated with the raw water inlet, the sixth channel is communicated with the draining opening, wherein when the plane valve is under the softening working position, the fourth channel of the plane valve is communicated with the first channel to define the first communicating passage communicated with the raw water inlet and the first opening respectively, the fifth channel is communicated with the seventh channel and the eighth channel respectively to define the second communicating passage communicated with the softened water inlet and the softened water outlet respectively.

6. The faucet water softener, as recited in claim 5, wherein the plane valve further has a draining channel, wherein the draining channel is disposed at the fixed valve disk and extended from the first fluid control surface of the fixed valve disk, wherein the sixth channel is communicated with the draining channel, the draining channel is further communicated with the draining opening, wherein when the plane valve is under a regenerating working position, the fourth channel of the plane valve is communicated with the second channel, so as to define a third communicating passage communicated with the raw water inlet and the second opening respectively, the fifth channel is communicated with the first channel and the third channel respectively, so as to define a fourth communicating passage communicated with the first opening and the third opening respectively, and the sixth channel is communicated with the seventh channel and the draining channel respectively, so as to define a fifth communicating passage communicated with the softened water inlet and the draining opening respectively.

7. The faucet water softener, as recited in claim 6, wherein when the plane valve is under a raw water supplying working position, the fourth channel is communicated with the raw water outlet channel, so as to define a sixth communicating passage communicated with the raw water inlet and the raw water outlet respectively.

8. The faucet water softener, as recited in claim 2, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are provided inside the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel, a sixth channel, a seventh channel, an eighth channel, a raw water outlet channel and a raw water inlet channel, wherein the first channel, the third channel, the seventh channel, the eighth channel, the second channel, the raw water outlet channel and the raw water inlet channel are respectively provided at the fixed disk and extended from the first fluid control surface of the fixed disk; the fourth channel, the fifth channel and the sixth channel are respectively provided at the rotatable disk and extended from the second fluid control surface of the rotatable disk, wherein the first channel is communicated with the first opening, the third channel is communicated with the third opening, the seventh channel is communicated with the softened water inlet, the eighth channel is communicated with the softened water outlet, the second channel is communicated with the second opening, the raw water outlet channel is communicated with the raw water outlet, the raw water inlet channel is communicated with the raw water inlet, the fourth channel is communicated with the raw water inlet channel, the sixth channel is communicated with the draining opening, wherein when the plane valve is under the softening working position, the fourth channel of the plane valve is communicated with the raw water inlet channel and the first channel respectively to define the first communicating passage communicated with the raw water inlet and the first opening respectively, the fifth channel is communicated with the seventh channel and the eighth channel respectively to define the second communicating passage communicated with the softened water inlet and the softened water outlet respectively.

9. The faucet water softener, as recited in claim 8, wherein when the plane valve is under a regenerating working position, the fourth channel of the plane valve is communicated with the raw water inlet channel and the second channel respectively, so as to define a third communicating passage communicated with the raw water inlet and the second opening respectively, the fifth channel is communicated with the first channel and the third channel respectively, so as to define a fourth communicating passage communicated with the first opening and the third opening respectively, and the sixth channel is communicated with the seventh channel, so as to define a fifth communicating passage communicated with the softened water inlet and the draining opening respectively.

10. The faucet water softener, as recited in claim 9, wherein when the plane valve is under a raw water supplying working position, the fourth channel is communicated with the raw water inlet channel and the raw water outlet channel respectively, so as to define a sixth communicating passage communicated with the raw water inlet and the raw water outlet respectively.

11. A faucet water softener, comprising:
a water treatment device defining a first communicating opening; and
a control valve adapted to be communicated with a faucet and comprising a valve body, a valve core and an injector, wherein the valve body defines a valve cavity, a first opening, a second opening, a third opening, a raw water outlet and a raw water inlet, wherein the valve core is provided inside the valve cavity, wherein the first opening of the valve body is adapted to be communicated with the first communicating opening of the water treatment device, the raw water inlet of the valve body is adapted to be communicated with a raw water source, wherein the injector has an ejecting opening adapted for being communicated with the second opening of the valve body, an injecting opening adapted for being communicated with the third opening of the valve body, and a brine opening communicated with the ejecting opening and the injecting opening, respectively.

12. The faucet water softener, as recited in claim 11, wherein when the control valve is under a softening working position, the valve core of the control valve defines a first communicating passage communicated respectively with the first opening and the raw water inlet of the valve body.

13. The faucet water softener, as recited in claim 12, wherein when the control valve is under a regenerating working position, the valve core of the control valve defines a second communicating passage communicated respectively with the second opening and the raw water inlet of the valve body and a third communicating passage communicated respectively with the first opening and the third opening of the valve body.

14. The faucet water softener, as recited in claim 13, wherein when the control valve is under a raw water supplying working position, the valve core of the control valve defines a fourth communicating passage communicated respectively with the raw water outlet and the raw water inlet of the valve body.

15. The faucet water softener, as recited in claim 12, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are provided inside the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel and a raw water outlet channel, wherein the first channel, the third channel, the second channel and the raw water outlet channel are respectively provided at the fixed disk and extended from the first fluid control surface of the fixed disk; the fourth channel and the fifth channel are respectively provided at the rotatable disk and extended from the second fluid control surface of the rotatable disk, wherein the first channel is communicated with the first opening, the third channel is communicated with the third opening, the second channel is communicated with the second opening, the raw water outlet channel is communicated with the raw water outlet, the fourth channel is communicated with the raw water inlet, wherein when the plane valve is under the softening working position, the fourth channel of the plane valve is communicated with the first channel to define the first communicating passage communicated with the raw water inlet and the first opening respectively.

16. The faucet water softener, as recited in claim 15, wherein when the plane valve is under a regenerating working position, the fourth channel of the plane valve is communicated with the second channel, so as to define a second communicating passage communicated with the raw water inlet and the second opening respectively, the fifth channel is communicated with the first channel and the third channel respectively, so as to define a third communicating passage communicated with the first opening and the third opening respectively.

17. The faucet water softener, as recited in claim 16, wherein when the plane valve is under a raw water supplying working position, the fourth channel is communicated with the raw water outlet channel, so as to define a fourth communicating passage communicated with the raw water inlet and the raw water outlet respectively.

18. The faucet water softener, as recited in claim 12, wherein the control valve is a plane valve, wherein the valve core further comprises a fixed disk and a rotatable disk, wherein the fixed disk has a first fluid control surface, and the rotatable disk has a second fluid control surface, wherein the rotatable disk and the fixed disk are provided inside the valve cavity, wherein the second fluid control surface of the rotatable disk is provided on the first fluid control surface of the fixed disk, and the rotatable disk is capable of rotating relative to the fixed disk, wherein the plane valve has a first channel, a second channel, a third channel, a fourth channel, a fifth channel, a raw water outlet channel and a raw water inlet channel, wherein the first channel, the third channel, the second channel, the raw water outlet channel and the raw water inlet channel are respectively provided at the fixed disk and extended from the first fluid control surface of the fixed disk; the fourth channel and the fifth channel are respectively provided at the rotatable disk and extended from the second fluid control surface of the rotatable disk, wherein the first channel is communicated with the first opening, the third channel is communicated with the third opening, the second channel is communicated with the second opening, the raw water outlet channel is communicated with the raw water outlet, the raw water inlet channel is communicated with the raw water inlet, the fourth channel is communicated with the raw water inlet channel, wherein when the plane valve is under the softening working position, the fourth channel of the plane valve is communicated with the raw water inlet channel and the first channel respectively to define the first communicating passage communicated with the raw water inlet and the first opening, respectively.

19. The faucet water softener, as recited in claim 18, wherein when the plane valve is under a regenerating working position, the fourth channel of the plane valve is communicated with the raw water inlet channel and the second channel respectively, so as to define a second communicating passage communicated with the raw water inlet and the second opening respectively, the fifth channel is communicated with the first channel and the third channel respectively, so as to define a third communicating passage communicated with the first opening and the third opening, respectively.

20. The faucet water softener, as recited in claim 19, wherein when the plane valve is under a raw water supplying working position, the fourth channel is communicated with the raw water inlet channel and the raw water outlet channel respectively, so as to define a fourth communicating passage communicated with the raw water inlet and the raw water outlet, respectively.
